# EUROPEAN PATENT APPLICATION

(11) **EP 2 868 707 A1**
(43) Date of publication of application: **06.05.2015**
(21) Application number: 13190649.7
(22) Date of filing: 29.10.2013
(51) Int. Cl.: C09B 35/56, C09D 11/00, D21H 21/28

(54) **Metal free acid dyes, process for their production and use of said dyes**

(71) Applicant: DyStar Colours Distribution GmbH, 65479 Raunheim (DE)
(72) Inventor: Barbieru, Roxana, Singapore 117468 (SG); Vajiravelu, Sivamurugan, Singapore 120515 (SG); Loh, Wei, Tian, Singapore 768434 (SG)

(57) **Abstract**

Dyes according to formula (I) 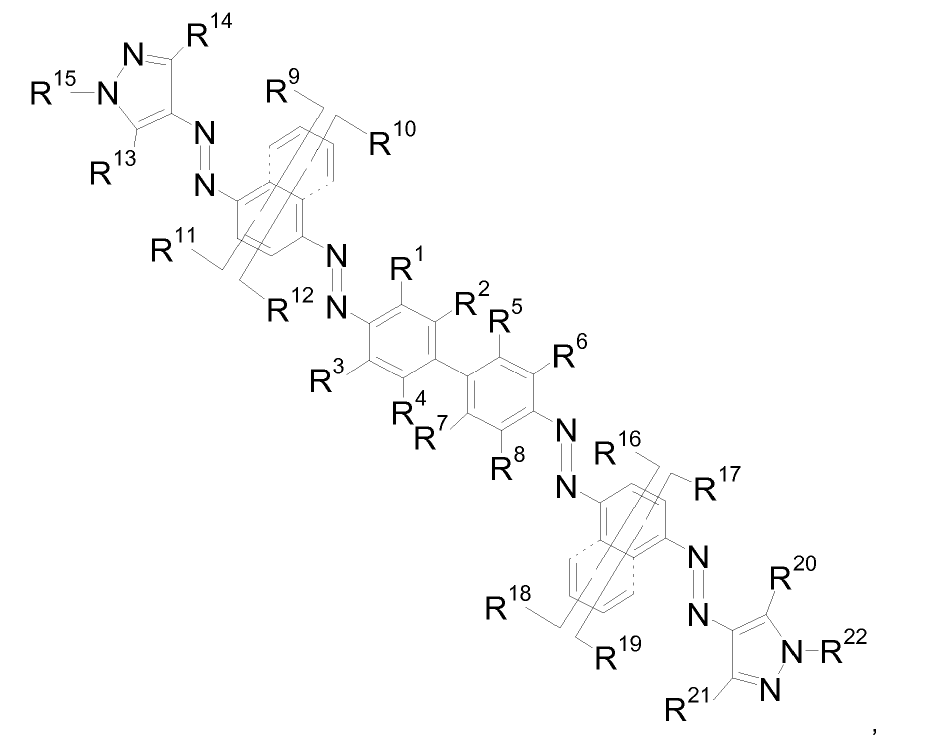 process for their production and use of said dyes.

## Description

The present invention relates to the technical field of dyestuffs for dyeing and printing of hydroxyl- and/or carboxamido-containing material.

Acid dyes with amino pyrazoles and pyrazolone couplers are known from prior art and can be used as colorants in different applications, see for example US 5,543,259, JP 60215082 A and WO 2005/018931 A1.

However, in the context of the dyeing and printing of hydroxyl-, amino- and/or carboxamido-containing material the known dyes have a number of technical disadvantages, which require improvement.

Surprisingly, it has now been found that the dyes of the formula (1) as described below show highly advantageous properties over the known dyes. These include high tinctorial strength with high brilliancy as well as high fastness properties such as wash, contact and light fastness on the materials mentioned above, on blends containing them as well as on microfibres.

The present invention refers to dyes of formula (1) 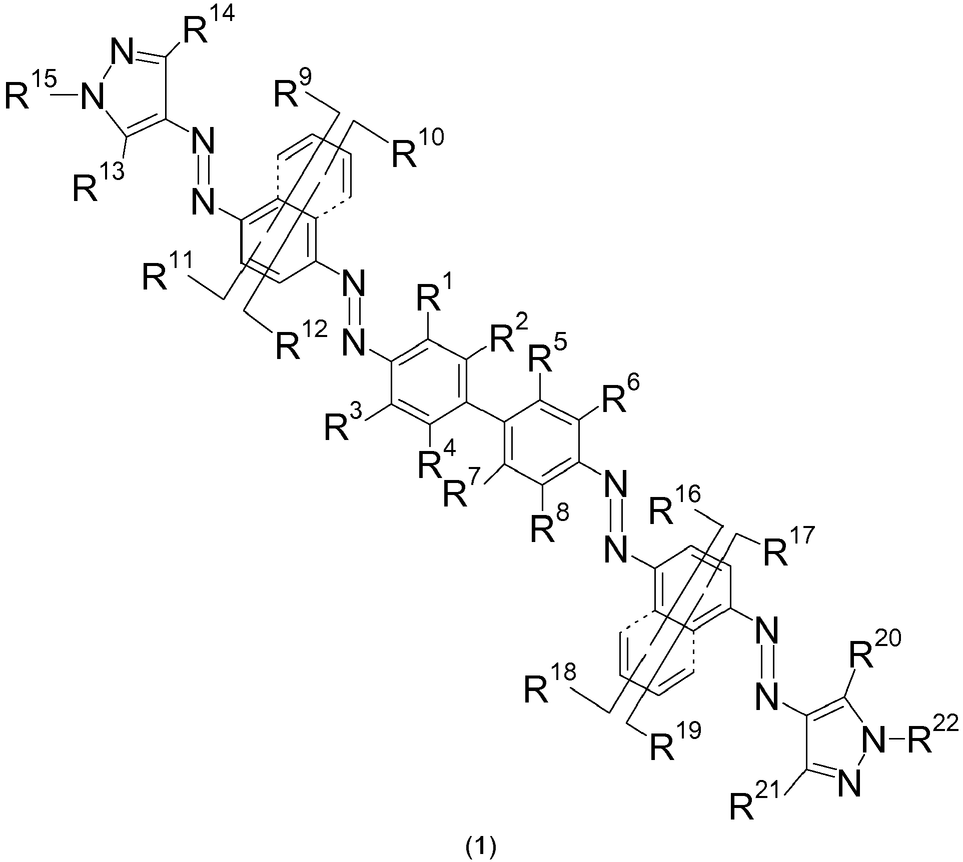 wherein
R¹, R², R³, R⁴, R⁵, R⁶, R⁷ and R⁸ independent of each other is hydrogen, alkyl, alkoxy, halogen, trifluoromethyl or SO₃M whereby at least two of them are SO₃M,
R⁹, R¹⁰, R¹¹, R¹², R¹⁶, R¹⁷, R¹⁸ and R¹⁹ independent of each other is hydrogen, alkyl, alkyl substituted, alkyl chain interrupted by one or two heteroatoms, alkoxy, alkoxy substituted, halogen ,trifluoromethyl, cycloalkyl, heterocycloalkyl, cyano, acyloxy, alkylcarbonyl, acylamino, alkylsulfonylamino, amino, monoalkyl-amino, monocycloalkyl-amino, dialkyl-amino, di(cyclo)alkyl-amino, alkylthio, alkylsulfonyl, alkoxycarbonyl, carbamoyl, sulfamoyl, ureido, SO₃M or alkylureido,
R¹³ and R²⁰ independent of each other is hydroxyl,
R¹⁴ and R²¹ independently of each other is hydrogen, alkyl, cycloalkyl, trifluoromethyl, alkoxy, cyano, carbamoyl, alkoxycarbonyl, COOM, amino, hydroxyl, monocycloalkyl-amino, monoalkyl-amino, di(cyclo)alkyl-amino, dialkyl-amino, monoaryl-amino, diaryl-amino, monocycloalkylmonoarylamino, monoalkyl monoaryl amino, alkylthio, arylthio, alkylcarbonyl, alkylsulfonyl
or
alkyl substituted by one or more substituents selected from the group consisting of hydroxy, cycloalkyl, heteroaryl, heterocycloalkyl, aryl, aryloxy, alkoxy, alkylthio, arylthio, halogen, cyano, COOM, alkoxycarbonyl, acyloxy, carbamoyl, nitro, amino, acylamino, arylcarbonylamino, alkylsulfonylamino, arylsulfonylamino, ureido, alkylureido or phenylureido,
R¹⁵ and R²² independent of each other is hydrogen, alkyl, hydroxyalkyl, alkoxy, alkenyl, cycloalkyl, aryl, heteroaryl, heterocycloalkyl, carbamoyl, alkylureido, phenylureido, hydroxyakylsulfonylalkyl, aminoalkyl, amino-hydroxy-alkyl, alkoxyalkyl-aminoalkyl, thioalkoxyalkyl-aminoalkyl, aminoalkyloxyalkyl, aminoalkylthioxyalkyl, cycloalkylalkyl, aryloxyalkyl, arylthioxyalkyl, heteroarylalkyl, heterocycloalkylalkyl
or
alkyl interrupted by one or more heteroatoms selected from the group consisting of oxygen and sulfur
or
alkyl substituted by one or more substituents selected from the group consisting of hydroxy, aryl, cycloalkyl, alkoxy, thioalkoxy, amino, N-monoalkyl-amino, N,N-dialkyl-amino, N-monoaryl-amino, N,N-diaryl-amino, N-alkyl-N-aryl-amino, N-monocycloalkyl-amino, N,N-dicycloalkyl-amino, N-monoalkyl-monocycloalkyl-amino, N,N-monoaryl-monocycloalkyl-amino, N-acylamino, N-alkylsulfonyl-amino, ureido, alkylureido, phenyilureido, halogen, cyano, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy, aryloyloxy, carbamoyl, N-monocycloalkyl-carbamoyl, N-monoalkyl-carbamoyl, N,N-dicycloalkyl-carbamoyl, N,N-dialkyl-carbamoyl, N-monoaryl-carbamoyl, N,N-diaryl-carbamoyl, N-monocycloalkyl-N-monoarylcarbamoyl, N-monoalkyl-N-monoaryl-carbamoyl, sulfamoyl, N-monocycloalkyl-sulfamoyl, N-monoalkyl-sulfamoyl, N,N-dicycloalkyl-sulfamoyl, N,N-dialkyl-sulfamoyl, N-monoaryl-sulfamoyl, N,N-diaryl-sulfamoyl, N-monocycloalkyl-N-monoarylsulfamoyl, N-monoalkyl-N-monoarylsulfamoyl and SO₃M
or
alkyl interrupted by one or more heteroatoms selected from the group consisting of oxygen and sulphur and substituted by one or more substituents selected from the group consisting of hydroxy, aryl, cycloalkyl, alkoxy, thioalkoxy, amino, N-monoalkyl-amino, N,N-dialkyl-amino, N-monoaryl-amino, N,N-diaryl-amino, N-alkyl-N-aryl-amino, N-monocycloalkyl-amino, N,N-dicycloalkyl-amino, N-monoalkyl-monocycloalkyl-amino, N,N-monoaryl-monocycloalkyl-amino, N-acylamino, N-alkylsulfonyl-amino, ureido, alkylureido, phenylureido, halogen, cyano, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy, aryloyloxy, carbamoyl, N-monocycloalkyl-carbamoyl, N-monoalkyl-carbamoyl, N,N-dicycloalkyl-carbamoyl, N,N-dialkyl-carbamoyl, N-monoaryl-carbamoyl, N,N-diaryl-carbamoyl, N-monocyclo-alkyl-N-monoarylcarbamoyl, N-monoalkyl-N-monoaryl-carbamoyl, sulfamoyl, N-monocycloalkyl-sulfamoyl, N-monoalkyl-sulfamoyl, N,N-dicycloalkyl-sulfamoyl, N,N-dialkyl-sulfamoyl, N-monoaryl-sulfamoyl, N,N-diaryl-sulfamoyl, N-monocycloalkyl-N-monoarylsulfamoyl, N-monoalkyl-N-monoarylsulfamoyl and SO₃M
or
aryl substituted by one or more substituents selected from the group consisting of hydroxy, aryl, cycloalkyl, alkoxy, thioalkoxy, amino, N-monoalkyl-amino, N,N-dialkyl-amino, N-monoaryl-amino, N,N-diaryl-amino, N-alkyl-N-aryl-amino, N-monocycloalkyl-amino, N,N-dicycloalkyl-amino, N-monoalkyl-monocycloalkyl-amino, N,N-monoaryl-monocycloalkyl-amino, N-acylamino, N-alkylsulfonyl-amino, ureido, alkylureido, phenylureido, halogen, cyano, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy, aryloyloxy, carbamoyl, N-monocycloalkyl-carbamoyl, N-monoalkyl-carbamoyl, N,N-dicycloalkyl-carbamoyl, N,N-dialkyl-carbamoyl, N-monoaryl-carbamoyl, N,N-diaryl-carbamoyl, N-monocycloalkyl-N-monoarylcarbamoyl, N-monoalkyl-N-monoaryl-carbamoyl, sulfamoyl, N-monocycloalkyl-sulfamoyl, N-monoalkyl-sulfamoyl, N,N-dicycloalkyl-sulfamoyl, N,N-dialkyl-sulfamoyl, N-monoaryl-sulfamoyl, N,N-diaryl-sulfamoyl, N-monocycloalkyl-N-monoarylsulfamoyl, N-monoalkyl-N-monoarylsulfamoyl and SO₃M,
M is hydrogen, an alkali metal, ammonium, one equivalent of an alkali earth metal or a monovalent organic cation,
and
the dyes of formula (1) have two to six sulfonic acid groups.

This invention refers to all tautomeric and geometric isomers of the dyes of formula (1) and mixtures thereof.

Alkyl groups in this invention may be straight-chain or branched and are (C₁-C₁₂)-alkyl groups, preferably (C₁-C₈)-alkyl groups, for example n-butyl, isobutyl, n-pentyl, isopentyl, n-hexyl, 2-ethylhexyl, sec-butyl, tert-butyl and methylbutyl.

The same applies to alkoxy groups which accordingly are preferably (C₁-C₈)-alkoxy, for example methoxy and ethoxy, to thioalkoxy groups, which are preferably (C₁-C₈)-thioalkoxy, for example -SCH₃ or -SC₂H₅.

Cycloalkyl groups are preferably (C₃-C₈)-cycloalkyl and especially preferably cyclopentyl and cyclohexyl. The term cyloalkyl comprises for the purpose of the present invention substituted cycloalklyl groups and unsatured cycloalkyl groups as well. A preferred group of this type is cyclopentenyl. Preferred substituents are alkyl, hydroxyalkyl, halogen, hydroxyl, alkoxy, acyl, cyano, nitro, amino, monoalkylamino, dialkylamino, mono(hydroxyalkyl)amino, bis (hydroxyalkyl)amino, monoalkyl-mono(hydroxyalkyl)amino, carbamoyl, sulfamoyl, acylamino, ureido, aminosulfonylamino, alkoxycarbonyl and acyloxy.

Alkenyl groups may be straight-chain or branched and are preferably (C₂-C₆)-groups for example vinyl and allyl. The term alkenyl comprises for the purpose of the present invention alkynyl groups as well, for example ethynyl and propargyl.

Aryl groups are preferably phenyl or naphthyl. The terms phenyl and naphthyl comprise unsubstituted as well as substituted phenyl and naphthyl. Preferred substituents are alkyl, cycloalkyl, heterocycloalkyl, hydroxyalkyl, halogen, hydroxyl, alkoxy, alkylthio, acyl, nitro, cyano, amino, monoalkylamino, dialkylamino, mono(hydroxyalkyl)amino, bis-(hydroxyalkyl)amino, monoalkyl-mono(hydroxylalkyl)amino, carbamoyl, sulfamoyl, acylamino, ureido, aminosulfonylamino, alkoxycarbonyl and acyloxy.

Heteroaryl groups appearing in this invention are preferably pyridine, pyrimidine, pyridazine, pyrazine, pyrrole, imidazole, pyrazole, 1,2,4-thiadiazole, 1,2,4-triazole, tetrazole, thiophene, thiazole, isothiazole, benzothiazole, benzoisothiazole, 1,3,4-thiadiazole, furane, oxazole, benzoxazole or isoxazole. The terms heteroayl comprises the above groups in unsubstituted as well as in substituted form. Preferred substituents are alkyl, hydroxyalkyl, halogen, hydroxyl, alkoxy, alkylthio, acyl, nitro, cyano, amino, monoalkylamino, dialkylamino, mono(hydroxyalkyl)amino, bis (hydroxyalkyl)amino, monoalkyl-mono(hydroxyalkyl)amino, carbamoyl, sulfamoyl, acylamino, ureido, aminosulfonylamino, alkoxycarbonyl and acyloxy.

Heterocycloalkyl groups are preferably pyrrolidine, piperidine, morpholine, tetrahydrofuran and piperazine. The terms heterocycloalkyl comprises the above groups in unsubstituted as well as in substituted form. Preferred substituents are alkyl, hydroxyalkyl, halogen, hydroxyl, alkoxy, alkylthio, acyl, nitro, cyano, amino, monoalkylamino, dialkylamino, mono(hydroxyalkyl)amino, bis (hydroxyalkyl)amino, monoalkyl-mono(hydroxyalkyl)amino, carbamoyl, sulfamoyl, acylamino, amino-carbonylamino, aminosulfonylamino, alkoxycarbonyl and acyloxy.

Halogen is preferably chlorine, bromine or fluorine.

M is preferably hydrogen, lithium, sodium, potassium or mono-, di-, tri- or tetra-(C₁-C₄)-alkylammonium.

Particular preferred embodiments of the present invention are dyes of formula (1 a): 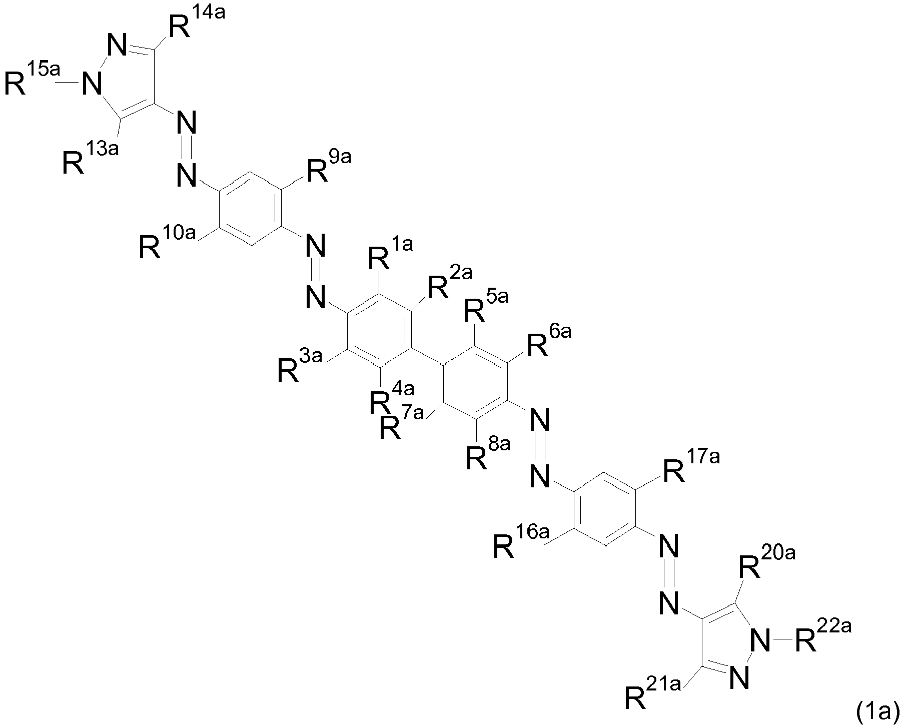 wherein
R^{1a}, R^{2a}, R^{3a}, R^{4a}, R^{5a}, R^{6a}, R^{7a} and R^{8a} independent of each other is hydrogen, alkyl, alkoxy, halogen, trifluoromethyl or SO₃M - whereby at least two of them are SO₃M,
R^{9a}, R^{10a}, R^{16a} and R^{17a} independent of each other is hydrogen, alkyl, substituted alkyl, alkyl chain interrupted by one or two heteroatoms, alkoxy, alkoxy substituted, halogen ,trifluoromethyl, cycloalkyl, heterocycloalkyl, cyano, acyloxy, alkylcarbonyl, acylamino, alkylsulfonylamino, amino, monoalkyl-amino, monocycloalkyl-amino, dialkyl-amino, di(cyclo)alkyl-amino, alkylthio, alkylsulfonyl, alkoxycarbonyl, carbamoyl, sulfamoyl, ureido, SO₃M or alkylureido,
R^{13a} and R^{20a} is hydroxyl,
R^{14a} and R^{21a} independent of each other is hydrogen, alkyl, cycloalkyl, trifluoromethyl, alkoxy, cyano, carbamoyl, alkoxycarbonyl, COOM, amino, hydroxyl, monocycloalkyl-amino, monoalkyl-amino, di(cyclo)alkyl-amino, dialkyl-amino, monoaryl-amino, diaryl-amino, monocycloalkylmonoarylamino, monoalkyl monoaryl amino, alkylthio, arylthio, alkylcarbonyl, alkylsulfonyl
or
is alkyl substituted by one or more substituents selected from the group consisting of hydroxy, cycloalkyl, heteroaryl, heterocycloalkyl, aryl, aryloxy, alkoxy, alkylthio, arylthio, halogen, cyano, COOM, alkoxycarbonyl, acyloxy, carbamoyl, nitro, amino, acylamino, arylcarbonylamino, alkylsulfonylamino, arylsulfonylamino, ureido, alkylureido and phenylureido,
R^{15a} and R^{22a} independent of one another is hydrogen, alkyl, hydroxyalkyl, alkoxy, alkenyl, cycloalkyl, aryl, heteroaryl, heterocycloalkyl, carbamoyl, alkylureido, phenylureido, hydroxyakylsulfonylalkyl, aminoalkyl, amino-hydroxy-alkyl, alkoxyalkyl-aminoalkyl, thioalkoxyalkyl-aminoalkyl, aminoalkyloxyalkyl, aminoalkylthioxyalkyl, cycloalkylalkyl, aryloxyalkyl, arylthioxyalkyl, heteroarylalkyl, heterocycloalkylalkyl,
or
alkyl interrupted by one or more heteroatoms selected from the group consisting of oxygen and sulfur
or
alkyl substituted by one or more substituents selected from the group consisting of hydroxy, aryl, cycloalkyl, alkoxy, thioalkoxy, amino, N-monoalkyl-amino, N,N-dialkyl-amino, N-monoaryl-amino, N,N-diaryl-amino, N-alkyl-N-aryl-amino, N-monocycloalkyl-amino, N,N-dicycloalkyl-amino, N-monoalkyl-monocycloalkyl-amino, N,N-monoaryl-monocycloalkyl-amino, N-acylamino, N-alkylsulfonyl-amino, ureido, alkylureido, phenyilureido, halogen, cyano, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy, aryloyloxy, carbamoyl, N-monocycloalkyl-carbamoyl, N-monoalkyl-carbamoyl, N,N-dicycloalkyl-carbamoyl, N,N-dialkyl-carbamoyl, N-monoaryl-carbamoyl, N,N-diaryl-carbamoyl, N-monocycloalkyl-N-monoarylcarbamoyl, N-monoalkyl-N-monoaryl-carbamoyl, sulfamoyl, N-monocycloalkyl-sulfamoyl, N-monoalkyl-sulfamoyl, N,N-dicycloalkyl-sulfamoyl, N,N-dialkyl-sulfamoyl, N-monoaryl-sulfamoyl, N,N-diaryl-sulfamoyl, N-monocycloalkyl-N-monoarylsulfamoyl, N-monoalkyl-N-monoarylsulfamoyl and SO₃M
or
alkyl interrupted by one or more heteroatoms selected from the group consisting of oxygen and sulfur and substituted by one or more substituents selected from the group consisting of hydroxy, aryl, cycloalkyl, alkoxy, thioalkoxy, amino, N-monoalkyl-amino, N,N-dialkyl-amino, N-monoaryl-amino, N,N-diaryl-amino, N-alkyl-N-aryl-amino, N-monocycloalkyl-amino, N,N-dicycloalkyl-amino, N-monoalkyl-monocycloalkyl-amino, N,N-monoaryl-monocycloalkyl-amino, N-acylamino, N-alkylsulfonyl-amino, ureido, alkylureido, phenylureido, halogen, cyano, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy, aryloyloxy, carbamoyl, N-monocycloalkyl-carbamoyl, N-monoalkyl-carbamoyl, N,N-dicycloalkyl-carbamoyl, N,N-dialkyl-carbamoyl, N-monoaryl-carbamoyl, N,N-diaryl-carbamoyl, N-monocycloalkyl-N-monoarylcarbamoyl, N-monoalkyl-N-monoaryl-carbamoyl, sulfamoyl, N-monocycloalkyl-sulfamoyl, N-monoalkyl-sulfamoyl, N,N-dicycloalkyl-sulfamoyl, N,N-dialkyl-sulfamoyl, N-monoaryl-sulfamoyl, N,N-diaryl-sulfamoyl, N-monocycloalkyl-N-monoarylsulfamoyl, N-monoalkyl-N-monoarylsulfamoyl and SO₃M
or
aryl substituted by one or more substituents selected from the group consisting of hydroxy, aryl, cycloalkyl, alkoxy, thioalkoxy, amino, N-monoalkyl-amino, N,N-dialkyl-amino, N-monoaryl-amino, N,N-diaryl-amino, N-alkyl-N-aryl-amino, N-monocycloalkyl-amino, N,N-dicycloalkyl-amino, N-monoalkyl-monocycloalkyl-amino, N,N-monoaryl-monocycloalkyl-amino, N-acylamino, N-alkylsulfonyl-amino, ureido, alkylureido, phenylureido, halogen, cyano, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy, aryloyloxy, carbamoyl, N-monocycloalkyl-carbamoyl, N-monoalkyl-carbamoyl, N,N-dicycloalkyl-carbamoyl, N,N-dialkyl-carbamoyl, N-monoaryl-carbamoyl, N,N-diaryl-carbamoyl, N-monocycloalkyl-N-monoarylcarbamoyl, N-monoalkyl-N-monoaryl-carbamoyl, sulfamoyl, N-monocycloalkyl-sulfamoyl, N-monoalkyl-sulfamoyl, N,N-dicycloalkyl-sulfamoyl, N,N-dialkyl-sulfamoyl, N-monoaryl-sulfamoyl, N,N-diaryl-sulfamoyl, N-monocycloalkyl-N-monoarylsulfamoyl, N-monoalkyl-N-monoarylsulfamoyl and SO₃M
and
M is hydrogen, an alkali metal, ammonium, one equivalent of an alkali earth metal or a monovalent organic cation.

In especially preferred dyes of formula (1 a):
R^{1a}, R^{3a}, R^{4a}, R^{5a}, R^{6a} and R^{8a} independent of each other is SO₃M, hydrogen, alkyl, alkoxy or halogen - whereby at least two of them are SO₃M,
R^{2a} and R^{7a} is hydrogen,
R^{9a}, R^{10a}, R^{16a} and R^{17a} independent of each other is hydrogen, methyl, halogen, - SO₃M or acetylamino,
R^{13a} and R^{20a} is hydroxyl,
R^{14a} and R^{21a} independent of each other is alkyl, cycloalkyl, trifluoromethyl, cyano, carbamoyl, alkoxycarbonyl, COOM, alkylcarbonyl
   or
is alkyl substituted by one or more substituents selected from the group consisting of hydroxy, alkoxy, halogen, cyano, COOM, alkoxycarbonyl, acyloxy and carbamoyl,
R^{15a} and R^{22a} independent of each other is methyl, ethyl, n-propyl, n-butyl, n-pentyl, n-hexyl, cyclobutyl, cyclopentyl, cyclohexyl, 2-methylcyclohexyl, 3-methylcyclohexyl, isopropyl, sec-butyl, 2-methylbutyl, 1-ethylproyl, 1,2-dimethylpropyl, tert-butyl, 3-methylbutyl, pentan-2-yl, 2-ethylhexyl, 2,2-dimethylpropyl, phenyl, benzyl, 2-hydroxy-ethyl, 2-methoxyethyl, 3-methoxypropyl, 2-fluoroethyl, 2-chloroethyl, 3-chloropropyl, 2-ethylhexyl, 6-hydroxy-1-[2-(2-hydroxyethylsulfanyl)-ethyl], 2-(ethylsulfonyl)ethanol, 2-hydroxyethoxypropyl, 2-hydroxyethoxyethyl, 3-(2-phenoxy-ethoxy)-propyl, 3-isopropoxy-propyl, 3-ethoxy-propyl, 3-ethoxybutyl, phenyl, 3-methylphenyl, 2-methylphenyl, 3-methylphenyl, 4-methylphenyl, 2-methoxyphenyl, 3-methoxyphenyl, 4-methoxyphenyl, 2-chlorophenyl, 3-chlorophenyl, 4-chlorophenyl, 2-fluorophenyl, 3-fluorophenyl, 4-fluorophenyl or 3-phenylsulfonamide
   and
M is hydrogen, an alkali metal, ammonium, one equivalent of an alkali earth metal or a monovalent organic cation.

Examples of preferred dyes of the formula (1 a) are the compounds of the formulae (1a¹ to 1a⁸⁶³) and mixtures and/or tautomers thereof

| Structure | R^{1a} | R^{3a} | R^{4a} | R^{5a} | R^{6a} | R^{8a} | R^{9a}/R^{16a} | R^{10a}/R^{17a} | R^{14a}/R^{21a} | R^{15a}/R^{22a} |
|---|---|---|---|---|---|---|---|---|---|---|
| 1a¹ | H | SO₃H | H | H | SO₃H | H | Methyl | Methyl | Methyl | Methyl |
| 1a² | H | H | SO₃H | SO₃H | H | H | | | | |
| 1a³ | Methyl | H | SO₃H | SO₃H | H | Methyl | | | | |
| 1a⁴ | OMe | H | SO₃H | SO₃H | H | OMe | | | | |
| 1a⁵ | F | H | SO₃H | SO₃H | H | F | | | | |
| 1a⁶ | H | SO₃H | H | H | SO₃H | H | Methyl | Methyl | Methyl | Ethyl |
| 1a⁷ | H | H | SO₃H | SO₃H | H | H | | | | |
| 1a⁸ | Methyl | H | SO₃H | SO₃H | H | Methyl | | | | |
| 1a⁹ | OMe | H | SO₃H | SO₃H | H | OMe | | | | |
| 1a¹⁰ | F | H | SO₃H | SO₃H | H | F | | | | |
| 1a¹¹ | H | SO₃H | H | H | SO₃H | H | Methyl | Methyl | Methyl | Propyl |
| 1a¹² | H | H | SO₃H | SO₃H | H | H | | | | |
| 1a¹³ | Methyl | H | SO₃H | SO₃H | H | Methyl | | | | |
| 1a¹⁴ | OMe | H | SO₃H | SO₃H | H | OMe | | | | |
| 1a¹⁵ | F | H | SO₃H | SO₃H | H | F | | | | |
| 1a¹⁶ | H | SO₃H | H | H | SO₃H | H | Methyl | Methyl | Methyl | Butyl |
| 1a¹⁷ | H | H | SO₃H | SO₃H | H | H | | | | |
| 1a¹⁸ | Methyl | H | SO₃H | SO₃H | H | Methyl | | | | |
| 1a¹⁹ | OMe | H | SO₃H | SO₃H | H | OMe | | | | |
| 1a²⁰ | F | H | SO₃H | SO₃H | H | F | | | | |
| 1a²¹ | H | SO₃H | H | H | SO₃H | H | Methyl | Methyl | Methyl | Pentyl |
| 1a²² | H | H | SO₃H | SO₃H | H | H | | | | |
| 1a²³ | Methyl | H | SO₃H | SO₃H | H | Methyl | | | | |
| 1a²⁴ | OMe | H | SO₃H | SO₃H | H | OMe | | | | |
| 1a²⁵ | F | H | SO₃H | SO₃H | H | F | | | | |
| 1a²⁶ | H | SO₃H | H | H | SO₃H | H | Methyl | Methyl | Methyl | Cyclobutyl |
| 1a²⁷ | H | H | SO₃H | SO₃H | H | H | | | | |
| 1a²⁸ | Methyl | H | SO₃H | SO₃H | H | Methyl | | | | |
| 1a²⁹ | OMe | H | SO₃H | SO₃H | H | OMe | | | | |
| 1a³⁰ | F | H | SO₃H | SO₃H | H | F | | | | |
| 1a³¹ | H | SO₃H | H | H | SO₃H | H | Methyl | Methyl | Methyl | Cyclopentyl |
| 1a³² | H | H | SO₃H | SO₃H | H | H | | | | |
| 1a³³ | Methyl | H | SO₃H | SO₃H | H | Methyl | | | | |
| 1a³⁴ | OMe | H | SO₃H | SO₃H | H | OMe | | | | |
| 1a³⁵ | F | H | SO₃H | SO₃H | H | F | | | | |
| 1a³⁶ | H | SO₃H | H | H | SO₃H | H | Methyl | Methyl | Methyl | Isopropyl |
| 1a³⁷ | H | H | SO₃H | SO₃H | H | H | | | | |
| 1a³⁸ | Methyl | H | SO₃H | SO₃H | H | Methyl | | | | |
| 1a³⁹ | OMe | H | SO₃H | SO₃H | H | OMe | | | | |
| 1a⁴⁰ | F | H | SO₃H | SO₃H | H | F | | | | |
| 1a⁴¹ | H | SO₃H | H | H | SO₃H | H | Methyl | Methyl | Methyl | Sec-butyl |
| 1a⁴² | H | H | SO₃H | SO₃H | H | H | | | | |
| 1a⁴³ | Methyl | H | SO₃H | SO₃H | H | Methyl | | | | |
| 1a⁴⁴ | OMe | H | SO₃H | SO₃H | H | OMe | | | | |
| 1a⁴⁵ | F | H | SO₃H | SO₃H | H | F | | | | |
| 1a⁴⁶ | H | SO₃H | H | H | SO₃H | H | Methyl | Methyl | Methyl | 2-Methylbutyl |
| 1a⁴⁷ | H | H | SO₃H | SO₃H | H | H | | | | |
| 1a⁴⁸ | Methyl | H | SO₃H | SO₃H | H | Methyl | | | | |
| 1a⁴⁹ | OMe | H | SO₃H | SO₃H | H | OMe | | | | |
| 1a⁵⁰ | F | H | SO₃H | SO₃H | H | F | | | | |
| 1a⁵¹ | H | SO₃H | H | H | SO₃H | H | Methyl | Methyl | Methyl | 1-Ethylpropyl |
| 1a⁵² | H | H | SO₃H | SO₃H | H | H | | | | |
| 1a⁵³ | Methyl | H | SO₃H | SO₃H | H | Methyl | | | | |
| 1a⁵⁴ | OMe | H | SO₃H | SO₃H | H | OMe | | | | |
| 1a⁵⁵ | F | H | SO₃H | SO₃H | H | F | | | | |
| 1a⁵⁶ | H | SO₃H | H | H | SO₃H | H | Methyl | Methyl | Methyl | 1,2-Dimethylpropyl |
| 1a⁵⁷ | H | H | SO₃H | SO₃H | H | H | | | | |
| 1a⁵⁸ | Methyl | H | SO₃H | SO₃H | H | Methyl | | | | |
| 1a⁵⁹ | OMe | H | SO₃H | SO₃H | H | OMe | | | | |
| 1a⁶⁰ | F | H | SO₃H | SO₃H | H | F | | | | |
| 1a⁶¹ | H | SO₃H | H | H | SO₃H | H | Methyl | Methyl | Methyl | Tert-butyl |
| 1a⁶² | H | H | SO₃H | SO₃H | H | H | | | | |
| 1a⁶³ | Methyl | H | SO₃H | SO₃H | H | Methyl | | | | |
| 1a⁶⁴ | OMe | H | SO₃H | SO₃H | H | OMe | | | | |
| 1a⁶⁵ | F | H | SO₃H | SO₃H | H | F | | | | |
| 1a⁶⁶ | CF₃ | H | SO₃H | SO₃H | H | CF₃ | | | | |
| 1a⁶⁷ | H | SO₃H | H | H | SO₃H | H | Methyl | Methyl | Methyl | 3-Methylbutyl |
| 1a⁶⁸ | H | H | SO₃H | SO₃H | H | H | | | | |
| 1a⁶⁹ | Methyl | H | SO₃H | SO₃H | H | Methyl | | | | |
| 1a⁷⁰ | OMe | H | SO₃H | SO₃H | H | OMe | | | | |
| 1a⁷¹ | F | H | SO₃H | SO₃H | H | F | | | | |
| 1a⁷² | H | SO₃H | H | H | SO₃H | H | Methyl | Methyl | Methyl | Pentan-2-yl |
| 1a⁷³ | H | H | SO₃H | SO₃H | H | H | | | | |
| 1a⁷⁴ | Methyl | H | SO₃H | SO₃H | H | Methyl | | | | |
| 1a⁷⁵ | OMe | H | SO₃H | SO₃H | H | OMe | | | | |
| 1a⁷⁶ | F | H | SO₃H | SO₃H | H | F | | | | |
| 1a⁷⁷ | H | SO₃H | H | H | SO₃H | H | Methyl | Methyl | Methyl | 2-Ethylhexyl |
| 1a⁷⁸ | H | H | SO₃H | SO₃H | H | H | | | | |
| 1a⁷⁹ | Methyl | H | SO₃H | SO₃H | H | Methyl | | | | |
| 1a⁸⁰ | OMe | H | SO₃H | SO₃H | H | OMe | | | | |
| 1a⁸¹ | F | H | SO₃H | SO₃H | H | F | | | | |
| 1a⁸² | H | SO₃H | H | H | SO₃H | H | Methyl | Methyl | Methyl | 2,2-Dimethylpropyl |
| 1a⁸³ | H | H | SO₃H | SO₃H | H | H | | | | |
| 1a⁸⁴ | Methyl | H | SO₃H | SO₃H | H | Methyl | | | | |
| 1a⁸⁵ | OMe | H | SO₃H | SO₃H | H | OMe | | | | |
| 1a⁸⁶ | F | H | SO₃H | SO₃H | H | F | | | | |
| 1a⁸⁷ | H | SO₃H | H | H | SO₃H | H | Methyl | Methyl | Methyl | Benzyl |
| 1a⁸⁸ | H | H | SO₃H | SO₃H | H | H | | | | |
| 1a⁸⁹ | Methyl | H | SO₃H | SO₃H | H | Methyl | | | | |
| 1a⁹⁰ | OMe | H | SO₃H | SO₃H | H | OMe | | | | |
| 1a⁹¹ | F | H | SO₃H | SO₃H | H | F | | | | |
| 1a⁹² | H | SO₃H | H | H | SO₃H | H | Methyl | F | Methyl | Methyl |
| 1a⁹³ | H | H | SO₃H | SO₃H | H | H | | | | |
| 1a⁹⁴ | Methyl | H | SO₃H | SO₃H | H | Methyl | | | | |
| 1a⁹⁵ | OMe | H | SO₃H | SO₃H | H | OMe | | | | |
| 1a⁹⁶ | F | H | SO₃H | SO₃H | H | F | | | | |
| 1a⁹⁷ | H | SO₃H | H | H | SO₃H | H | Methyl | F | Methyl | Ethyl |
| 1a⁹⁸ | H | H | SO₃H | SO₃H | H | H | | | | |
| 1a⁹⁹ | Methyl | H | SO₃H | SO₃H | H | Methyl | | | | |
| 1a¹⁰⁰ | OMe | H | SO₃H | SO₃H | H | OMe | | | | |
| 1a¹⁰¹ | F | H | SO₃H | SO₃H | H | F | | | | |
| 1a¹⁰² | H | SO₃H | H | H | SO₃H | H | Methyl | F | Methyl | Propyl |
| 1a¹⁰³ | H | H | SO₃H | SO₃H | H | H | | | | |
| 1a¹⁰⁴ | Methyl | H | SO₃H | SO₃H | H | Methyl | | | | |
| 1a¹⁰⁵ | OMe | H | SO₃H | SO₃H | H | OMe | | | | |
| 1a¹⁰⁶ | F | H | SO₃H | SO₃H | H | F | | | | |
| 1a¹⁰⁷ | H | SO₃H | H | H | SO₃H | H | Methyl | F | Methyl | Butyl |
| 1a¹⁰⁸ | H | H | SO₃H | SO₃H | H | H | | | | |
| 1a¹⁰⁹ | Methyl | H | SO₃H | SO₃H | H | Methyl | | | | |
| 1a¹¹⁰ | OMe | H | SO₃H | SO₃H | H | OMe | | | | |
| 1a¹¹¹ | F | H | SO₃H | SO₃H | H | F | | | | |
| 1a¹¹² | H | SO₃H | H | H | SO₃H | H | Methyl | F | Methyl | Pentyl |
| 1a¹¹³ | H | H | SO₃H | SO₃H | H | H | | | | |
| 1a¹¹⁴ | Methyl | H | SO₃H | SO₃H | H | Methyl | | | | |
| 1a¹¹⁵ | OMe | H | SO₃H | SO₃H | H | OMe | | | | |
| 1a¹¹⁶ | F | H | SO₃H | SO₃H | H | F | | | | |
| 1a¹¹⁷ | H | SO₃H | H | H | SO₃H | H | Methyl | F | Methyl | Cyclobutyl |
| 1a¹¹⁸ | H | H | SO₃H | SO₃H | H | H | | | | |
| 1a¹¹⁹ | Methyl | H | SO₃H | SO₃H | H | Methyl | | | | |
| 1a¹²⁰ | OMe | H | SO₃H | SO₃H | H | OMe | | | | |
| 1a¹²¹ | F | H | SO₃H | SO₃H | H | F | | | | |
| 1a¹²² | H | SO₃H | H | H | SO₃H | H | Methyl | F | Methyl | Cyclopentyl |
| 1a¹²³ | H | H | SO₃H | SO₃H | H | H | | | | |
| 1a¹²⁴ | Methyl | H | SO₃H | SO₃H | H | Methyl | | | | |
| 1a¹²⁵ | OMe | H | SO₃H | SO₃H | H | OMe | | | | |
| 1a¹²⁶ | F | H | SO₃H | SO₃H | H | F | | | | |
| 1a¹²⁷ | H | SO₃H | H | H | SO₃H | H | Methyl | F | Methyl | Isopropyl |
| 1a¹²⁸ | H | H | SO₃H | SO₃H | H | H | | | | |
| 1a¹²⁹ | Methyl | H | SO₃H | SO₃H | H | Methyl | | | | |
| 1a¹³⁰ | OMe | H | SO₃H | SO₃H | H | OMe | | | | |
| 1a¹³¹ | F | H | SO₃H | SO₃H | H | F | | | | |
| 1a¹³² | H | SO₃H | H | H | SO₃H | H | Methyl | F | Methyl | Sec-butyl |
| 1a¹³³ | H | H | SO₃H | SO₃H | H | H | | | | |
| 1a¹³⁴ | Methyl | H | SO₃H | SO₃H | H | Methyl | | | | |
| 1a¹³⁵ | OMe | H | SO₃H | SO₃H | H | OMe | | | | |
| 1a¹³⁶ | F | H | SO₃H | SO₃H | H | F | | | | |
| 1a¹³⁷ | H | SO₃H | H | H | SO₃H | H | Methyl | F | Methyl | 2-Methylbutyl |
| 1a¹³⁸ | H | H | SO₃H | SO₃H | H | H | | | | |
| 1a¹³⁹ | Methyl | H | SO₃H | SO₃H | H | Methyl | | | | |
| 1a¹⁴⁰ | OMe | H | SO₃H | SO₃H | H | OMe | | | | |
| 1a¹⁴¹ | F | H | SO₃H | SO₃H | H | F | | | | |
| 1a¹⁴² | H | SO₃H | H | H | SO₃H | H | Methyl | F | Methyl | 1-Ethylpropyl |
| 1a¹⁴³ | H | H | SO₃H | SO₃H | H | H | | | | |
| 1a¹⁴⁴ | Methyl | H | SO₃H | SO₃H | H | Methyl | | | | |
| 1a¹⁴⁵ | OMe | H | SO₃H | SO₃H | H | OMe | | | | |
| 1a¹⁴⁶ | F | H | SO₃H | SO₃H | H | F | | | | |
| 1a¹⁴⁷ | H | SO₃H | H | H | SO₃H | H | Methyl | F | Methyl | 1,2-Dimethylpropyl |
| 1a¹⁴⁸ | H | H | SO₃H | SO₃H | H | H | | | | |
| 1a¹⁴⁹ | Methyl | H | SO₃H | SO₃H | H | Methyl | | | | |
| 1a¹⁵⁰ | OMe | H | SO₃H | SO₃H | H | OMe | | | | |
| 1a¹⁵¹ | F | H | SO₃H | SO₃H | H | F | | | | |
| 1a¹⁵² | H | SO₃H | H | H | SO₃H | H | Methyl | F | Methyl | Tert-butyl |
| 1a¹⁵³ | H | H | SO₃H | SO₃H | H | H | | | | |
| 1a¹⁵⁴ | Methyl | H | SO₃H | SO₃H | H | Methyl | | | | |
| 1a¹⁵⁵ | OMe | H | SO₃H | SO₃H | H | OMe | | | | |
| 1a¹⁵⁶ | F | H | SO₃H | SO₃H | H | F | | | | |
| 1a¹⁵⁷ | H | SO₃H | H | H | SO₃H | H | Methyl | F | Methyl | 3-Methylbutyl |
| 1a¹⁵⁸ | H | H | SO₃H | SO₃H | H | H | | | | |
| 1a¹⁵⁹ | Methyl | H | SO₃H | SO₃H | H | Methyl | | | | |
| 1a¹⁶⁰ | OMe | H | SO₃H | SO₃H | H | OMe | | | | |
| 1a¹⁶¹ | F | H | SO₃H | SO₃H | H | F | | | | |
| 1a¹⁶² | H | SO₃H | H | H | SO₃H | H | Methyl | F | Methyl | Pentan-2-yl |
| 1a¹⁶³ | H | H | SO₃H | SO₃H | H | H | | | | |
| 1a¹⁶⁴ | Methyl | H | SO₃H | SO₃H | H | Methyl | | | | |
| 1a¹⁶⁵ | OMe | H | SO₃H | SO₃H | H | OMe | | | | |
| 1a¹⁶⁶ | F | H | SO₃H | SO₃H | H | F | | | | |
| 1a¹⁶⁷ | H | SO₃H | H | H | SO₃H | H | Methyl | F | Methyl | 2-Ethylhexyl |
| 1a¹⁶⁸ | H | H | SO₃H | SO₃H | H | H | | | | |
| 1a¹⁶⁹ | Methyl | H | SO₃H | SO₃H | H | Methyl | | | | |
| 1a¹⁷⁰ | OMe | H | SO₃H | SO₃H | H | OMe | | | | |
| 1a¹⁷¹ | F | H | SO₃H | SO₃H | H | F | | | | |
| 1a¹⁷² | H | SO₃H | H | H | SO₃H | H | Methyl | F | Methyl | 2,2-Dimethylpropyl |
| 1a¹⁷³ | H | H | SO₃H | SO₃H | H | H | | | | |
| 1a¹⁷⁴ | Methyl | H | SO₃H | SO₃H | H | Methyl | | | | |
| 1a¹⁷⁵ | OMe | H | SO₃H | SO₃H | H | OMe | | | | |
| 1a¹⁷⁶ | F | H | SO₃H | SO₃H | H | F | | | | |
| 1a¹⁷⁷ | H | SO₃H | H | H | SO₃H | H | Methyl | F | Methyl | Benzyl |
| 1a¹⁷⁸ | H | H | SO₃H | SO₃H | H | H | | | | |
| 1a¹⁷⁹ | Methyl | H | SO₃H | SO₃H | H | Methyl | | | | |
| 1a¹⁸⁰ | OMe | H | SO₃H | SO₃H | H | OMe | | | | |
| 1a¹⁸¹ | F | H | SO₃H | SO₃H | H | F | | | | |
| 1a¹⁸² | H | SO₃H | H | H | SO₃H | H | NHCOCH₃ | OMe | Methyl | Methyl |
| 1a¹⁸³ | H | H | SO₃H | SO₃H | H | H | | | | |
| 1a¹⁸⁴ | Methyl | H | SO₃H | SO₃H | H | Methyl | | | | |
| 1a¹⁸⁵ | OMe | H | SO₃H | SO₃H | H | OMe | | | | |
| 1a¹⁸⁶ | F | H | SO₃H | SO₃H | H | F | | | | |
| 1a¹⁸⁷ | H | SO₃H | H | H | SO₃H | H | NHCOCH₃ | OMe | Methyl | Ethyl |
| 1a¹⁸⁸ | H | H | SO₃H | SO₃H | H | H | | | | |
| 1a¹⁸⁹ | Methyl | H | SO₃H | SO₃H | H | Methyl | | | | |
| 1a¹⁹⁰ | OMe | H | SO₃H | SO₃H | H | OMe | | | | |
| 1a¹⁹¹ | F | H | SO₃H | SO₃H | H | F | | | | |
| 1a¹⁹² | H | SO₃H | H | H | SO₃H | H | NHCOCH₃ | OMe | Methyl | Propyl |
| 1a¹⁹³ | H | H | SO₃H | SO₃H | H | H | | | | |
| 1a¹⁹⁴ | Methyl | H | SO₃H | SO₃H | H | Methyl | | | | |
| 1a¹⁹⁵ | OMe | H | SO₃H | SO₃H | H | OMe | | | | |
| 1a¹⁹⁶ | F | H | SO₃H | SO₃H | H | F | | | | |
| 1a¹⁹⁷ | H | SO₃H | H | H | SO₃H | H | NHCOCH₃ | OMe | Methyl | Butyl |
| 1a¹⁹⁸ | H | H | SO₃H | SO₃H | H | H | | | | |
| 1a¹⁹⁹ | Methyl | H | SO₃H | SO₃H | H | Methyl | | | | |
| 1a²⁰⁰ | OMe | H | SO₃H | SO₃H | H | OMe | | | | |
| 1a²⁰¹ | F | H | SO₃H | SO₃H | H | F | | | | |
| 1a²⁰² | H | SO₃H | H | H | SO₃H | H | NHCOCH₃ | OMe | Methyl | Pentyl |
| 1a²⁰³ | H | H | SO₃H | SO₃H | H | H | | | | |
| 1a²⁰⁴ | Methyl | H | SO₃H | SO₃H | H | Methyl | | | | |
| 1a²⁰⁵ | OMe | H | SO₃H | SO₃H | H | OMe | | | | |
| 1a²⁰⁶ | F | H | SO₃H | SO₃H | H | F | | | | |
| 1a²⁰⁷ | H | SO₃H | H | H | SO₃H | H | NHCOCH₃ | OMe | Methyl | Cyclobutyl |
| 1a²⁰⁸ | H | H | SO₃H | SO₃H | H | H | | | | |
| 1a²⁰⁹ | Methyl | H | SO₃H | SO₃H | H | Methyl | | | | |
| 1a²¹⁰ | OMe | H | SO₃H | SO₃H | H | OMe | | | | |
| 1a²¹¹ | F | H | SO₃H | SO₃H | H | F | | | | |
| 1a²¹² | H | SO₃H | H | H | SO₃H | H | NHCOCH₃ | OMe | Methyl | Cyclopentyl |
| 1a²¹³ | H | H | SO₃H | SO₃H | H | H | | | | |
| 1a²¹⁴ | Methyl | H | SO₃H | SO₃H | H | Methyl | | | | |
| 1a²¹⁵ | OMe | H | SO₃H | SO₃H | H | OMe | | | | |
| 1a²¹⁶ | F | H | SO₃H | SO₃H | H | F | | | | |
| 1a²¹⁷ | H | SO₃H | H | H | SO₃H | H | NHCOCH₃ | OMe | Methyl | Isopropyl |
| 1a²¹⁸ | H | H | SO₃H | SO₃H | H | H | | | | |
| 1a²¹⁹ | Methyl | H | SO₃H | SO₃H | H | Methyl | | | | |
| 1a²²⁰ | OMe | H | SO₃H | SO₃H | H | OMe | | | | |
| 1a²²¹ | F | H | SO₃H | SO₃H | H | F | | | | |
| 1a²²² | H | SO₃H | H | H | SO₃H | H | NHCOCH₃ | OMe | Methyl | Sec-butyl |
| 1a²²³ | H | H | SO₃H | SO₃H | H | H | | | | |
| 1a²²⁴ | Methyl | H | SO₃H | SO₃H | H | Methyl | | | | |
| 1a²²⁵ | OMe | H | SO₃H | SO₃H | H | OMe | | | | |
| 1a²²⁶ | F | H | SO₃H | SO₃H | H | F | | | | |
| 1a²²⁷ | H | SO₃H | H | H | SO₃H | H | NHCOCH₃ | OMe | Methyl | 2-Methylbutyl |
| 1a²²⁸ | H | H | SO₃H | SO₃H | H | H | | | | |
| 1a²²⁹ | Methyl | H | SO₃H | SO₃H | H | Methyl | | | | |
| 1a²³⁰ | OMe | H | SO₃H | SO₃H | H | OMe | | | | |
| 1a²³¹ | F | H | SO₃H | SO₃H | H | F | | | | |
| 1a²³² | H | SO₃H | H | H | SO₃H | H | NHCOCH₃ | OMe | Methyl | 1-Ethylpropyl |
| 1a²³³ | H | H | SO₃H | SO₃H | H | H | | | | |
| 1a²³⁴ | Methyl | H | SO₃H | SO₃H | H | Methyl | | | | |
| 1a²³⁵ | OMe | H | SO₃H | SO₃H | H | OMe | | | | |
| 1a²³⁶ | F | H | SO₃H | SO₃H | H | F | | | | |
| 1a²³⁷ | H | SO₃H | H | H | SO₃H | H | NHCOCH₃ | OMe | Methyl | 1,2-Dimethylpropyl |
| 1a²³⁸ | H | H | SO₃H | SO₃H | H | H | | | | |
| 1a²³⁹ | Methyl | H | SO₃H | SO₃H | H | Methyl | | | | |
| 1a²⁴⁰ | OMe | H | SO₃H | SO₃H | H | OMe | | | | |
| 1a²⁴¹ | F | H | SO₃H | SO₃H | H | F | | | | |
| 1a²⁴² | H | SO₃H | H | H | SO₃H | H | NHCOCH₃ | OMe | Methyl | Tert-butyl |
| 1a²⁴³ | H | H | SO₃H | SO₃H | H | H | | | | |
| 1a²⁴⁴ | Methyl | H | SO₃H | SO₃H | H | Methyl | | | | |
| 1a²⁴⁵ | OMe | H | SO₃H | SO₃H | H | OMe | | | | |
| 1a²⁴⁶ | F | H | SO₃H | SO₃H | H | F | | | | |
| 1a²⁴⁷ | H | SO₃H | H | H | SO₃H | H | NHCOCH₃ | OMe | Methyl | 3-Methylbutyl |
| 1a²⁴⁸ | H | H | SO₃H | SO₃H | H | H | | | | |
| 1a²⁴⁹ | Methyl | H | SO₃H | SO₃H | H | Methyl | | | | |
| 1a²⁵⁰ | OMe | H | SO₃H | SO₃H | H | OMe | | | | |
| 1a²⁵¹ | F | H | SO₃H | SO₃H | H | F | | | | |
| 1a²⁵² | H | SO₃H | H | H | SO₃H | H | NHCOCH₃ | OMe | Methyl | Pentan-2-yl |
| 1a²⁵³ | H | H | SO₃H | SO₃H | H | H | | | | |
| 1a²⁵⁴ | Methyl | H | SO₃H | SO₃H | H | Methyl | | | | |
| 1a²⁵⁵ | OMe | H | SO₃H | SO₃H | H | OMe | | | | |
| 1a²⁵⁶ | F | H | SO₃H | SO₃H | H | F | | | | |
| 1a²⁵⁷ | H | SO₃H | H | H | SO₃H | H | NHCOCH₃ | OMe | Methyl | 2-Ethylhexyl |
| 1a²⁵⁸ | H | H | SO₃H | SO₃H | H | H | | | | |
| 1a²⁵⁹ | Methyl | H | SO₃H | SO₃H | H | Methyl | | | | |
| 1a²⁶⁰ | OMe | H | SO₃H | SO₃H | H | OMe | | | | |
| 1a²⁶¹ | F | H | SO₃H | SO₃H | H | F | | | | |
| 1a²⁶² | H | SO₃H | H | H | SO₃H | H | NHCOCH₃ | OMe | Methyl | 2,2-Dimethylpropyl |
| 1a²⁶³ | H | H | SO₃H | SO₃H | H | H | | | | |
| 1a²⁶⁴ | Methyl | H | SO₃H | SO₃H | H | Methyl | | | | |
| 1a²⁶⁵ | OMe | H | SO₃H | SO₃H | H | OMe | | | | |
| 1a²⁶⁶ | F | H | SO₃H | SO₃H | H | F | | | | |
| 1a²⁶⁷ | H | SO₃H | H | H | SO₃H | H | NHCOCH₃ | OMe | Methyl | Benzyl |
| 1a²⁶⁸ | H | H | SO₃H | SO₃H | H | H | | | | |
| 1a²⁶⁹ | Methyl | H | SO₃H | SO₃H | H | Methyl | | | | |
| 1a²⁷⁰ | OMe | H | SO₃H | SO₃H | H | OMe | | | | |
| 1a²⁷¹ | F | H | SO₃H | SO₃H | H | F | | | | |
| 1a²⁷² | H | SO₃H | H | H | SO₃H | H | Methyl | Methyl | Methyl | 2-Methoxyethyl |
| 1a²⁷³ | H | H | SO₃H | SO₃H | H | H | | | | |
| 1a²⁷⁴ | Methyl | H | SO₃H | SO₃H | H | Methyl | | | | |
| 1a²⁷⁵ | OMe | H | SO₃H | SO₃H | H | OMe | | | | |
| 1a²⁷⁶ | F | H | SO₃H | SO₃H | H | F | | | | |
| 1a²⁷⁷ | H | SO₃H | H | H | SO₃H | H | Methyl | Methyl | Methyl | 3-Methoxypropyl |
| 1a²⁷⁸ | H | H | SO₃H | SO₃H | H | H | | | | |
| 1a²⁷⁹ | Methyl | H | SO₃H | SO₃H | H | Methyl | | | | |
| 1a²⁸⁰ | OMe | H | SO₃H | SO₃H | H | OMe | | | | |
| 1a²⁸¹ | F | H | SO₃H | SO₃H | H | F | | | | |
| 1a²⁸² | H | SO₃H | H | H | SO₃H | H | Methyl | Methyl | Methyl | 2-Hydroxyethyl |
| 1a²⁸³ | H | H | SO₃H | SO₃H | H | H | | | | |
| 1a²⁸⁴ | Methyl | H | SO₃H | SO₃H | H | Methyl | | | | |
| 1a²⁸⁵ | OMe | H | SO₃H | SO₃H | H | OMe | | | | |
| 1a²⁸⁶ | F | H | SO₃H | SO₃H | H | F | | | | |
| 1a²⁸⁷ | H | SO₃H | H | H | SO₃H | H | Methyl | Methyl | Methyl | 2-Fluoroethyl |
| 1a²⁸⁸ | H | H | SO₃H | SO₃H | H | H | | | | |
| 1a²⁸⁹ | Methyl | H | SO₃H | SO₃H | H | Methyl | | | | |
| 1a²⁹⁰ | OMe | H | SO₃H | SO₃H | H | OMe | | | | |
| 1 a²⁹¹ | F | H | SO₃H | SO₃H | H | F | | | | |
| 1a²⁹² | H | SO₃H | H | H | SO₃H | H | Methyl | Methyl | Methyl | 2-Chloroethyl |
| 1a²⁹³ | H | H | SO₃H | SO₃H | H | H | | | | |
| 1a²⁹⁴ | Methyl | H | SO₃H | SO₃H | H | Methyl | | | | |
| 1a²⁹⁵ | OMe | H | SO₃H | SO₃H | H | OMe | | | | |
| 1a²⁹⁶ | F | H | SO₃H | SO₃H | H | F | | | | |
| 1a²⁹⁷ | H | SO₃H | H | H | SO₃H | H | Methyl | Methyl | Methyl | 3-Chloropropyl |
| 1a²⁹⁸ | H | H | SO₃H | SO₃H | H | H | | | | |
| 1a²⁹⁹ | Methyl | H | SO₃H | SO₃H | H | Methyl | | | | |
| 1a³⁰⁰ | OMe | H | SO₃H | SO₃H | H | OMe | | | | |
| 1a³⁰¹ | F | H | SO₃H | SO₃H | H | F | | | | |
| 1a³⁰² | H | SO₃H | H | H | SO₃H | H | Methyl | Methyl | Methyl | 2-Ethylhexyl |
| 1a³⁰³ | H | H | SO₃H | SO₃H | H | H | | | | |
| 1a³⁰⁴ | Methyl | H | SO₃H | SO₃H | H | Methyl | | | | |
| 1a³⁰⁵ | OMe | H | SO₃H | SO₃H | H | OMe | | | | |
| 1a³⁰⁶ | F | H | SO₃H | SO₃H | H | F | | | | |
| 1a³⁰⁷ | H | SO₃H | H | H | SO₃H | H | Methyl | Methyl | Methyl | 2-(2-Hydroxyethyl sulfanyl)-ethyl |
| 1a³⁰⁸ | H | H | SO₃H | SO₃H | H | H | | | | |
| 1a³⁰⁹ | Methyl | H | SO₃H | SO₃H | H | Methyl | | | | |
| 1a³¹⁰ | OMe | H | SO₃H | SO₃H | H | OMe | | | | |
| 1a³¹¹ | F | H | SO₃H | SO₃H | H | F | | | | |
| 1a³¹² | H | SO₃H | H | H | SO₃H | H | Methyl | Methyl | Methyl | 2-(2-Hydroxy ethoxy)ethyl |
| 1a³¹³ | H | H | SO₃H | SO₃H | H | H | | | | |
| 1a³¹⁴ | Methyl | H | SO₃H | SO₃H | H | Methyl | | | | |
| 1a³¹⁵ | OMe | H | SO₃H | SO₃H | H | OMe | | | | |
| 1a³¹⁶ | F | H | SO₃H | SO₃H | H | F | | | | |
| 1a³¹⁷ | H | SO₃H | H | H | SO₃H | H | Methyl | Methyl | Methyl | 3-(4-Hydroxy butoxy)propyl |
| 1a³¹⁸ | H | H | SO₃H | SO₃H | H | H | | | | |
| 1a³¹⁹ | Methyl | H | SO₃H | SO₃H | H | Methyl | | | | |
| 1a³²⁰ | OMe | H | SO₃H | SO₃H | H | OMe | | | | |
| 1a³²¹ | F | H | SO₃H | SO₃H | H | F | | | | |
| 1a³²² | H | SO₃H | H | H | SO₃H | H | Methyl | Methyl | Methyl | 4-(2-Hydroxyethane sulfonyl)-phenyl |
| 1a³²³ | H | H | SO₃H | SO₃H | H | H | | | | |
| 1a³²⁴ | Methyl | H | SO₃H | SO₃H | H | Methyl | | | | |
| 1a³²⁵ | OMe | H | SO₃H | SO₃H | H | OMe | | | | |
| 1a³²⁶ | F | H | SO₃H | SO₃H | H | F | | | | |
| 1a³²⁷ | H | SO₃H | H | H | SO₃H | H | Methyl | Methyl | Methyl | 3-Isopropoxypropyl |
| 1a³²⁸ | H | H | SO₃H | SO₃H | H | H | | | | |
| 1a³²⁹ | Methyl | H | SO₃H | SO₃H | H | Methyl | | | | |
| 1a³³⁰ | OMe | H | SO₃H | SO₃H | H | OMe | | | | |
| 1a³³¹ | F | H | SO₃H | SO₃H | H | F | | | | |
| 1a³³² | H | SO₃H | H | H | SO₃H | H | Methyl | Methyl | Methyl | 3-Ethoxypropyl |
| 1a³³³ | H | H | SO₃H | SO₃H | H | H | | | | |
| 1a³³⁴ | Methyl | H | SO₃H | SO₃H | H | Methyl | | | | |
| 1a³³⁵ | OMe | H | SO₃H | SO₃H | H | OMe | | | | |
| 1a³³⁶ | F | H | SO₃H | SO₃H | H | F | | | | |
| 1a³³⁷ | H | SO₃H | H | H | SO₃H | H | Methyl | Methyl | Methyl | 3-Ethoxybutyl |
| 1a³³⁸ | H | H | SO₃H | SO₃H | H | H | | | | |
| 1a³³⁹ | Methyl | H | SO₃H | SO₃H | H | Methyl | | | | |
| 1a³⁴⁰ | OMe | H | SO₃H | SO₃H | H | OMe | | | | |
| 1a³⁴¹ | F | H | SO₃H | SO₃H | H | F | | | | |
| 1a³⁴² | H | SO₃H | H | H | SO₃H | H | Methyl | F | Methyl | 2-Methoxy ethyl |
| 1a³⁴³ | H | H | SO₃H | SO₃H | H | H | | | | |
| 1a³⁴⁴ | Methyl | H | SO₃H | SO₃H | H | Methyl | | | | |
| 1a³⁴⁵ | OMe | H | SO₃H | SO₃H | H | OMe | | | | |
| 1a³⁴⁶ | F | H | SO₃H | SO₃H | H | F | | | | |
| 1a³⁴⁷ | H | SO₃H | H | H | SO₃H | H | Methyl | F | Methyl | 3-Methoxy propyl |
| 1a³⁴⁸ | H | H | SO₃H | SO₃H | H | H | | | | |
| 1a³⁴⁹ | Methyl | H | SO₃H | SO₃H | H | Methyl | | | | |
| 1a³⁵⁰ | OMe | H | SO₃H | SO₃H | H | OMe | | | | |
| 1a³⁵¹ | F | H | SO₃H | SO₃H | H | F | | | | |
| 1a³⁵² | H | SO₃H | H | H | SO₃H | H | Methyl | F | Methyl | 2-Hydroxy ethyl |
| 1a³⁵³ | H | H | SO₃H | SO₃H | H | H | | | | |
| 1a³⁵⁴ | Methyl | H | SO₃H | SO₃H | H | Methyl | | | | |
| 1a³⁵⁵ | OMe | H | SO₃H | SO₃H | H | OMe | | | | |
| 1a³⁵⁶ | F | H | SO₃H | SO₃H | H | F | | | | |
| 1a³⁵⁷ | H | SO₃H | H | H | SO₃H | H | Methyl | F | Methyl | 2-Fluoro ethyl |
| 1a³⁵⁸ | H | H | SO₃H | SO₃H | H | H | | | | |
| 1a³⁵⁹ | Methyl | H | SO₃H | SO₃H | H | Methyl | | | | |
| 1a³⁶⁰ | OMe | H | SO₃H | SO₃H | H | OMe | | | | |
| 1a³⁶¹ | F | H | SO₃H | SO₃H | H | F | | | | |
| 1a³⁶² | H | SO₃H | H | H | SO₃H | H | Methyl | F | Methyl | 2-Chloroethyl |
| 1a³⁶³ | H | H | SO₃H | SO₃H | H | H | | | | |
| 1a³⁶⁴ | Methyl | H | SO₃H | SO₃H | H | Methyl | | | | |
| 1a³⁶⁵ | OMe | H | SO₃H | SO₃H | H | OMe | | | | |
| 1a³⁶⁶ | F | H | SO₃H | SO₃H | H | F | | | | |
| 1a³⁶⁷ | H | SO₃H | H | H | SO₃H | H | Methyl | F | Methyl | 3-Chloropropyl |
| 1a³⁶⁸ | H | H | SO₃H | SO₃H | H | H | | | | |
| 1a³⁶⁹ | Methyl | H | SO₃H | SO₃H | H | Methyl | | | | |
| 1a³⁷⁰ | OMe | H | SO₃H | SO₃H | H | OMe | | | | |
| 1a³⁷¹ | F | H | SO₃H | SO₃H | H | F | | | | |
| 1a³⁷² | H | SO₃H | H | H | SO₃H | H | Methyl | F | Methyl | 2-Ethylhexyl |
| 1a³⁷³ | H | H | SO₃H | SO₃H | H | H | | | | |
| 1a³⁷⁴ | Methyl | H | SO₃H | SO₃H | H | Methyl | | | | |
| 1a³⁷⁵ | OMe | H | SO₃H | SO₃H | H | OMe | | | | |
| 1a³⁷⁶ | F | H | SO₃H | SO₃H | H | F | | | | |
| 1a³⁷⁷ | H | SO₃H | H | H | SO₃H | H | Methyl | F | Methyl | 2-(2-Hydroxyethyl sulfanyl)-ethyl |
| 1a³⁷⁸ | H | H | SO₃H | SO₃H | H | H | | | | |
| 1a³⁷⁹ | Methyl | H | SO₃H | SO₃H | H | Methyl | | | | |
| 1a³⁸⁰ | OMe | H | SO₃H | SO₃H | H | OMe | | | | |
| 1a³⁸¹ | F | H | SO₃H | SO₃H | H | F | | | | |
| 1a³⁸² | H | SO₃H | H | H | SO₃H | H | Methyl | F | Methyl | 2-(2-Hydroxy ethoxy) ethyl |
| 1a³⁸³ | H | H | SO₃H | SO₃H | H | H | | | | |
| 1a³⁸⁴ | Methyl | H | SO₃H | SO₃H | H | Methyl | | | | |
| 1a³⁸⁵ | OMe | H | SO₃H | SO₃H | H | OMe | | | | |
| 1a³⁸⁶ | F | H | SO₃H | SO₃H | H | F | | | | |
| 1a³⁸⁷ | H | S03H | H | H | S03H | H | Methyl | F | Methyl | 3-(4-Hydroxy butoxy)propyl |
| 1a³⁸⁸ | H | H | S03H | S03H | H | H | | | | |
| 1a³⁸⁹ | Methyl | H | S03H | S03H | H | Methyl | | | | |
| 1a³⁹⁰ | OMe | H | S03H | S03H | H | OMe | | | | |
| 1a³⁹¹ | F | H | S03H | S03H | H | F | | | | |
| 1a³⁹² | H | SO₃H | H | H | SO₃H | H | Methyl | F | Methyl | 4-(2-Hydroxyethylsu Ifonyl)-phenyl |
| 1a³⁹³ | H | H | SO₃H | SO₃H | H | H | | | | |
| 1a³⁹⁴ | Methyl | H | SO₃H | SO₃H | H | Methyl | | | | |
| 1a³⁹⁵ | OMe | H | SO₃H | SO₃H | H | OMe | | | | |
| 1a³⁹⁶ | F | H | SO₃H | SO₃H | H | F | | | | |
| 1a³⁹⁷ | H | SO₃H | H | H | SO₃H | H | Methyl | F | Methyl | 3-Isopropoxypropyl |
| 1a³⁹⁸ | H | H | SO₃H | SO₃H | H | H | | | | |
| 1a³⁹⁹ | Methyl | H | SO₃H | SO₃H | H | Methyl | | | | |
| 1a⁴⁰⁰ | OMe | H | SO₃H | SO₃H | H | OMe | | | | |
| 1a⁴⁰¹ | F | H | SO₃H | SO₃H | H | F | | | | |
| 1a⁴⁰² | H | SO₃H | H | H | SO₃H | H | Methyl | F | Methyl | 3-Ethoxypropyl |
| 1a⁴⁰³ | H | H | SO₃H | SO₃H | H | H | | | | |
| 1a⁴⁰⁴ | Methyl | H | SO₃H | SO₃H | H | Methyl | | | | |
| 1a⁴⁰⁵ | OMe | H | SO₃H | SO₃H | H | OMe | | | | |
| 1a⁴⁰⁶ | F | H | SO₃H | SO₃H | H | F | | | | |
| 1a⁴⁰⁷ | H | SO₃H | H | H | SO₃H | H | Methyl | F | Methyl | 3-Ethoxybutyl |
| 1a⁴⁰⁸ | H | H | SO₃H | SO₃H | H | H | | | | |
| 1a⁴⁰⁹ | Methyl | H | SO₃H | SO₃H | H | Methyl | | | | |
| 1a⁴¹⁰ | OMe | H | SO₃H | SO₃H | H | OMe | | | | |
| 1a⁴¹¹ | F | H | SO₃H | SO₃H | H | F | | | | |
| 1a⁴¹² | H | SO₃H | H | H | SO₃H | H | NHCOCH₃ | OMe | Methyl | 2-Methoxy ethyl |
| 1a⁴¹³ | H | H | SO₃H | SO₃H | H | H | | | | |
| 1a⁴¹⁴ | Methyl | H | SO₃H | SO₃H | H | Methyl | | | | |
| 1a⁴¹⁵ | OMe | H | SO₃H | SO₃H | H | OMe | | | | |
| 1a⁴¹⁶ | F | H | SO₃H | SO₃H | H | F | | | | |
| 1a⁴¹⁷ | H | SO₃H | H | H | SO₃H | H | NHCOCH₃ | OMe | Methyl | 3-Methoxy propyl |
| 1a⁴¹⁸ | H | H | SO₃H | SO₃H | H | H | | | | |
| 1a⁴¹⁹ | Methyl | H | SO₃H | SO₃H | H | Methyl | | | | |
| 1a⁴²⁰ | OMe | H | SO₃H | SO₃H | H | OMe | | | | |
| 1a⁴²¹ | F | H | SO₃H | SO₃H | H | F | | | | |
| 1a⁴²² | H | SO₃H | H | H | SO₃H | H | NHCOCH₃ | OMe | Methyl | 2-Hydroxy ethyl |
| 1a⁴²³ | H | H | SO₃H | SO₃H | H | H | | | | |
| 1a⁴²⁴ | Methyl | H | SO₃H | SO₃H | H | Methyl | | | | |
| 1a⁴²⁵ | OMe | H | SO₃H | SO₃H | H | OMe | | | | |
| 1a⁴²⁶ | F | H | SO₃H | SO₃H | H | F | | | | |
| 1a⁴²⁷ | H | SO₃H | H | H | SO₃H | H | NHCOCH₃ | OMe | Methyl | 2-Fluoro ethyl |
| 1a⁴²⁸ | H | H | SO₃H | SO₃H | H | H | | | | |
| 1a⁴²⁹ | Methyl | H | SO₃H | SO₃H | H | Methyl | | | | |
| 1a⁴³⁰ | OMe | H | SO₃H | SO₃H | H | OMe | | | | |
| 1a⁴³¹ | F | H | SO₃H | SO₃H | H | F | | | | |
| 1a⁴³² | H | SO₃H | H | H | SO₃H | H | NHCOCH₃ | OMe | Methyl | 2-Chloro ethyl |
| 1a⁴³³ | H | H | SO₃H | SO₃H | H | H | | | | |
| 1a⁴³⁴ | Methyl | H | SO₃H | SO₃H | H | Methyl | | | | |
| 1a⁴³⁵ | OMe | H | SO₃H | SO₃H | H | OMe | | | | |
| 1a⁴³⁶ | F | H | SO₃H | SO₃H | H | F | | | | |
| 1a⁴³⁷ | H | SO₃H | H | H | SO₃H | H | NHCOCH₃ | OMe | Methyl | 3-Chloro propyl |
| 1a⁴³⁸ | H | H | SO₃H | SO₃H | H | H | | | | |
| 1a⁴³⁹ | Methyl | H | SO₃H | SO₃H | H | Methyl | | | | |
| 1a⁴⁴⁰ | OMe | H | SO₃H | SO₃H | H | OMe | | | | |
| 1a⁴⁴¹ | F | H | SO₃H | SO₃H | H | F | | | | |
| 1a⁴⁴² | H | SO₃H | H | H | SO₃H | H | NHCOCH₃ | OMe | Methyl | 2-Ethylhexyl |
| 1a⁴⁴³ | H | H | SO₃H | SO₃H | H | H | | | | |
| 1a⁴⁴⁴ | Methyl | H | SO₃H | SO₃H | H | Methyl | | | | |
| 1a⁴⁴⁵ | OMe | H | SO₃H | SO₃H | H | OMe | | | | |
| 1a⁴⁴⁶ | F | H | SO₃H | SO₃H | H | F | | | | |
| 1a⁴⁴⁷ | H | SO₃H | H | H | SO₃H | H | NHCOCH₃ | OMe | Methyl | 2-(2-Hydroxyethyl sulfanyl)-ethyl |
| 1a⁴⁴⁸ | H | H | SO₃H | SO₃H | H | H | | | | |
| 1a⁴⁴⁹ | Methyl | H | SO₃H | SO₃H | H | Methyl | | | | |
| 1a⁴⁵⁰ | OMe | H | SO₃H | SO₃H | H | OMe | | | | |
| 1a⁴⁵¹ | F | H | SO₃H | SO₃H | H | F | | | | |
| 1a⁴⁵² | H | SO₃H | H | H | SO₃H | H | NHCOCH₃ | OMe | Methyl | 2-(2-Hydroxy ethoxy) ethyl |
| 1a⁴⁵³ | H | H | SO₃H | SO₃H | H | H | | | | |
| 1a⁴⁵⁴ | Methyl | H | SO₃H | SO₃H | H | Methyl | | | | |
| 1a⁴⁵⁵ | OMe | H | SO₃H | SO₃H | H | OMe | | | | |
| 1a⁴⁵⁶ | F | H | SO₃H | SO₃H | H | F | | | | |
| 1a⁴⁵⁷ | H | S03H | H | H | S03H | H | NHCOCH₃ | OMe | Methyl | 3-(4-Hydroxy butoxy)propyl |
| 1a⁴⁵⁸ | H | H | S03H | S03H | H | H | | | | |
| 1a⁴⁵⁹ | Methyl | H | S03H | S03H | H | Methyl | | | | |
| 1a⁴⁶⁰ | OMe | H | S03H | S03H | H | OMe | | | | |
| 1a⁴⁶¹ | F | H | S03H | S03H | H | F | | | | |
| 1a⁴⁶² | H | SO₃H | H | H | SO₃H | H | NHCOCH₃ | OMe | Methyl | 4-(2-Hydroxyethylsu Ifonyl)-phenyl |
| 1a⁴⁶³ | H | H | SO₃H | SO₃H | H | H | | | | |
| 1a⁴⁶⁴ | Methyl | H | SO₃H | SO₃H | H | Methyl | | | | |
| 1a⁴⁶⁵ | OMe | H | SO₃H | SO₃H | H | OMe | | | | |
| 1a⁴⁶⁶ | F | H | SO₃H | SO₃H | H | F | | | | |
| 1a⁴⁶⁷ | H | SO₃H | H | H | SO₃H | H | NHCOCH₃ | OMe | Methyl | 3-Isopropoxypropyl |
| 1a⁴⁶⁸ | H | H | SO₃H | SO₃H | H | H | | | | |
| 1a⁴⁶⁹ | Methyl | H | SO₃H | SO₃H | H | Methyl | | | | |
| 1a⁴⁷⁰ | OMe | H | SO₃H | SO₃H | H | OMe | | | | |
| 1a⁴⁷¹ | F | H | SO₃H | SO₃H | H | F | | | | |
| 1a⁴⁷² | H | SO₃H | H | H | SO₃H | H | NHCOCH₃ | OMe | Methyl | 3-Ethoxypropyl |
| 1a⁴⁷³ | H | H | SO₃H | SO₃H | H | H | | | | |
| 1a⁴⁷⁴ | Methyl | H | SO₃H | SO₃H | H | Methyl | | | | |
| 1a⁴⁷⁵ | OMe | H | SO₃H | SO₃H | H | OMe | | | | |
| 1a⁴⁷⁶ | F | H | SO₃H | SO₃H | H | F | | | | |
| 1a⁴⁷⁷ | H | SO₃H | H | H | SO₃H | H | NHCOCH₃ | OMe | Methyl | 3-Ethoxybutyl |
| 1a⁴⁷⁸ | H | H | SO₃H | SO₃H | H | H | | | | |
| 1a⁴⁷⁹ | Methyl | H | SO₃H | SO₃H | H | Methyl | | | | |
| 1a⁴⁸⁰ | OMe | H | SO₃H | SO₃H | H | OMe | | | | |
| 1a⁴⁸¹ | F | H | SO₃H | SO₃H | H | F | | | | |
| 1a⁴⁸² | H | SO₃H | H | H | SO₃H | H | Methyl | Methyl | Methyl | Phenyl |
| 1a⁴⁸³ | H | H | SO₃H | SO₃H | H | H | | | | |
| 1a⁴⁸⁴ | Methyl | H | SO₃H | SO₃H | H | Methyl | | | | |
| 1a⁴⁸⁵ | OMe | H | SO₃H | SO₃H | H | OMe | | | | |
| 1a⁴⁸⁶ | F | H | SO₃H | SO₃H | H | F | | | | |
| 1a⁴⁸⁷ | H | SO₃H | H | H | SO₃H | H | Methyl | Methyl | Methyl | 3-Methyl phenyl |
| 1a⁴⁸⁸ | H | H | SO₃H | SO₃H | H | H | | | | |
| 1a⁴⁸⁹ | Methyl | H | SO₃H | SO₃H | H | Methyl | | | | |
| 1a⁴⁹⁰ | OMe | H | SO₃H | SO₃H | H | OMe | | | | |
| 1a⁴⁹¹ | F | H | SO₃H | SO₃H | H | F | | | | |
| 1a⁴⁹² | H | SO₃H | H | H | SO₃H | H | Methyl | Methyl | Methyl | 2-Methyl phenyl |
| 1a⁴⁹³ | H | H | SO₃H | SO₃H | H | H | | | | |
| 1a⁴⁹⁴ | Methyl | H | SO₃H | SO₃H | H | Methyl | | | | |
| 1a⁴⁹⁵ | OMe | H | SO₃H | SO₃H | H | OMe | | | | |
| 1a⁴⁹⁶ | F | H | SO₃H | SO₃H | H | F | | | | |
| 1a⁴⁹⁷ | H | SO₃H | H | H | SO₃H | H | Methyl | Methyl | Methyl | 4-Methyl phenyl |
| 1a⁴⁹⁸ | H | H | SO₃H | SO₃H | H | H | | | | |
| 1a⁴⁹⁹ | Methyl | H | SO₃H | SO₃H | H | Methyl | | | | |
| 1a⁵⁰⁰ | OMe | H | SO₃H | SO₃H | H | OMe | | | | |
| 1a⁵⁰¹ | F | H | SO₃H | SO₃H | H | F | | | | |
| 1a⁵⁰² | H | SO₃H | H | H | SO₃H | H | Methyl | Methyl | Methyl | 2-Methoxy phenyl |
| 1a⁵⁰³ | H | H | SO₃H | SO₃H | H | H | | | | |
| 1a⁵⁰⁴ | Methyl | H | SO₃H | SO₃H | H | Methyl | | | | |
| 1a⁵⁰⁵ | OMe | H | SO₃H | SO₃H | H | OMe | | | | |
| 1a⁵⁰⁶ | F | H | SO₃H | SO₃H | H | F | | | | |
| 1a⁵⁰⁷ | H | SO₃H | H | H | SO₃H | H | Methyl | Methyl | Methyl | 3-Methoxy phenyl |
| 1a⁵⁰⁸ | H | H | SO₃H | SO₃H | H | H | | | | |
| 1a⁵⁰⁹ | Methyl | H | SO₃H | SO₃H | H | Methyl | | | | |
| 1a⁵¹⁰ | OMe | H | SO₃H | SO₃H | H | OMe | | | | |
| 1a⁵¹¹ | F | H | SO₃H | SO₃H | H | F | | | | |
| 1a⁵¹² | H | SO₃H | H | H | SO₃H | H | Methyl | Methyl | Methyl | 4-Methoxy phenyl |
| 1a⁵¹³ | H | H | SO₃H | SO₃H | H | H | | | | |
| 1a⁵¹⁴ | Methyl | H | SO₃H | SO₃H | H | Methyl | | | | |
| 1a⁵¹⁵ | OMe | H | SO₃H | SO₃H | H | OMe | | | | |
| 1a⁵¹⁶ | F | H | SO₃H | SO₃H | H | F | | | | |
| 1a⁵¹⁷ | H | SO₃H | H | H | SO₃H | H | Methyl | Methyl | Methyl | 2-Chlorophenyl |
| 1a⁵¹⁸ | H | H | SO₃H | SO₃H | H | H | | | | |
| 1a⁵¹⁹ | Methyl | H | SO₃H | SO₃H | H | Methyl | | | | |
| 1a⁵²⁰ | OMe | H | SO₃H | SO₃H | H | OMe | | | | |
| 1a⁵²¹ | F | H | SO₃H | SO₃H | H | F | | | | |
| 1a⁵²² | H | SO₃H | H | H | SO₃H | H | Methyl | Methyl | Methyl | 3-Chlorophenyl |
| 1a⁵²³ | H | H | SO₃H | SO₃H | H | H | | | | |
| 1a⁵²⁴ | Methyl | H | SO₃H | SO₃H | H | Methyl | | | | |
| 1a⁵²⁵ | OMe | H | SO₃H | SO₃H | H | OMe | | | | |
| 1a⁵²⁶ | F | H | SO₃H | SO₃H | H | F | | | | |
| 1a⁵²⁷ | H | SO₃H | H | H | SO₃H | H | Methyl | Methyl | Methyl | 4-Chlorophenyl |
| 1a⁵²⁸ | H | H | SO₃H | SO₃H | H | H | | | | |
| 1a⁵²⁹ | Methyl | H | SO₃H | SO₃H | H | Methyl | | | | |
| 1a⁵³⁰ | OMe | H | SO₃H | SO₃H | H | OMe | | | | |
| 1a⁵³¹ | F | H | SO₃H | SO₃H | H | F | | | | |
| 1a⁵³² | H | SO₃H | H | H | SO₃H | H | Methyl | Methyl | Methyl | 2-Fluorophenyl |
| 1a⁵³³ | H | H | SO₃H | SO₃H | H | H | | | | |
| 1a⁵³⁴ | Methyl | H | SO₃H | SO₃H | H | Methyl | | | | |
| 1a⁵³⁵ | OMe | H | SO₃H | SO₃H | H | OMe | | | | |
| 1a⁵³⁶ | F | H | SO₃H | SO₃H | H | F | | | | |
| 1a⁵³⁷ | H | SO₃H | H | H | SO₃H | H | Methyl | Methyl | Methyl | 3-Fluorophenyl |
| 1a⁵³⁸ | H | H | SO₃H | SO₃H | H | H | | | | |
| 1a⁵³⁹ | Methyl | H | SO₃H | SO₃H | H | Methyl | | | | |
| 1a⁵⁴⁰ | OMe | H | SO₃H | SO₃H | H | OMe | | | | |
| 1a⁵⁴¹ | F | H | SO₃H | SO₃H | H | F | | | | |
| 1a⁵⁴² | H | SO₃H | H | H | SO₃H | H | Methyl | Methyl | Methyl | 4-Fluorophenyl |
| 1a⁵⁴³ | H | H | SO₃H | SO₃H | H | H | | | | |
| 1a⁵⁴⁴ | Methyl | H | SO₃H | SO₃H | H | Methyl | | | | |
| 1a⁵⁴⁵ | OMe | H | SO₃H | SO₃H | H | OMe | | | | |
| 1a⁵⁴⁶ | F | H | SO₃H | SO₃H | H | F | | | | |
| 1a⁵⁴⁷ | H | SO₃H | H | H | SO₃H | H | Methyl | Methyl | Methyl | 3-Phenyl sulfonamide |
| 1a⁵⁴⁸ | H | H | SO₃H | SO₃H | H | H | | | | |
| 1a⁵⁴⁹ | Methyl | H | SO₃H | SO₃H | H | Methyl | | | | |
| 1a⁵⁵⁰ | OMe | H | SO₃H | SO₃H | H | OMe | | | | |
| 1a⁵⁵¹ | F | H | SO₃H | SO₃H | H | F | | | | |
| 1a⁵⁵² | H | SO₃H | H | H | SO₃H | H | Methyl | Methyl | Methyl | 2-Amino phenyl |
| 1a⁵⁵³ | H | H | SO₃H | SO₃H | H | H | | | | |
| 1a⁵⁵⁴ | Methyl | H | SO₃H | SO₃H | H | Methyl | | | | |
| 1a⁵⁵⁵ | OMe | H | SO₃H | SO₃H | H | OMe | | | | |
| 1a⁵⁵⁶ | F | H | SO₃H | SO₃H | H | F | | | | |
| 1a⁵⁵⁷ | H | SO₃H | H | H | SO₃H | H | Methyl | Methyl | Methyl | 3-Amino phenyl |
| 1a⁵⁵⁸ | H | H | SO₃H | SO₃H | H | H | | | | |
| 1a⁵⁵⁹ | Methyl | H | SO₃H | SO₃H | H | Methyl | | | | |
| 1a⁵⁶⁰ | OMe | H | SO₃H | SO₃H | H | OMe | | | | |
| 1a⁵⁶¹ | F | H | SO₃H | SO₃H | H | F | | | | |
| 1a⁵⁶² | H | SO₃H | H | H | SO₃H | H | Methyl | Methyl | Methyl | 4-Aminophenyl |
| 1a⁵⁶³ | H | H | SO₃H | SO₃H | H | H | | | | |
| 1a⁵⁶⁴ | Methyl | H | SO₃H | SO₃H | H | Methyl | | | | |
| 1a⁵⁶⁵ | OMe | H | SO₃H | SO₃H | H | OMe | | | | |
| 1a⁵⁶⁶ | F | H | SO₃H | SO₃H | H | F | | | | |
| 1a⁵⁶⁷ | CF₃ | H | SO₃H | SO₃H | H | CF₃ | | | | |
| 1a⁵⁶⁸ | H | SO₃H | H | H | SO₃H | H | Methyl | Methyl | Methyl | Phenyl |
| 1a⁵⁶⁹ | H | H | SO₃H | SO₃H | H | H | | | | |
| 1a⁵⁷⁰ | Methyl | H | SO₃H | SO₃H | H | Methyl | | | | |
| 1a⁵⁷¹ | OMe | H | SO₃H | SO₃H | H | OMe | | | | |
| 1a⁵⁷² | F | H | SO₃H | SO₃H | H | F | | | | |
| 1a⁵⁷³ | H | SO₃H | H | H | SO₃H | H | Methyl | Methyl | Methyl | 3-Methyl phenyl |
| 1a⁵⁷⁴ | H | H | SO₃H | SO₃H | H | H | | | | |
| 1a⁵⁷⁵ | Methyl | H | SO₃H | SO₃H | H | Methyl | | | | |
| 1a⁵⁷⁶ | OMe | H | SO₃H | SO₃H | H | OMe | | | | |
| 1a⁵⁷⁷ | F | H | SO₃H | SO₃H | H | F | | | | |
| 1a⁵⁷⁸ | H | SO₃H | H | H | SO₃H | H | Methyl | Methyl | Methyl | 2-Methyl phenyl |
| 1a⁵⁷⁹ | H | H | SO₃H | SO₃H | H | H | | | | |
| 1a⁵⁸⁰ | Methyl | H | SO₃H | SO₃H | H | Methyl | | | | |
| 1a⁵⁸¹ | OMe | H | SO₃H | SO₃H | H | OMe | | | | |
| 1a⁵⁸² | F | H | SO₃H | SO₃H | H | F | | | | |
| 1a⁵⁸³ | H | SO₃H | H | H | SO₃H | H | Methyl | Methyl | Methyl | 4-Methyl phenyl |
| 1a⁵⁸⁴ | H | H | SO₃H | SO₃H | H | H | | | | |
| 1a⁵⁸⁵ | Methyl | H | SO₃H | SO₃H | H | Methyl | | | | |
| 1a⁵⁸⁶ | OMe | H | SO₃H | SO₃H | H | OMe | | | | |
| 1a⁵⁸⁷ | F | H | SO₃H | SO₃H | H | F | | | | |
| 1a⁵⁸⁸ | H | SO₃H | H | H | SO₃H | H | Methyl | Methyl | Methyl | 2-Methoxy phenyl |
| 1a⁵⁸⁹ | H | H | SO₃H | SO₃H | H | H | | | | |
| 1a⁵⁹⁰ | Methyl | H | SO₃H | SO₃H | H | Methyl | | | | |
| 1a⁵⁹¹ | OMe | H | SO₃H | SO₃H | H | OMe | | | | |
| 1a⁵⁹² | F | H | SO₃H | SO₃H | H | F | | | | |
| 1a⁵⁹³ | H | SO₃H | H | H | SO₃H | H | Methyl | Methyl | Methyl | 3-Methoxy phenyl |
| 1a⁵⁹⁴ | H | H | SO₃H | SO₃H | H | H | | | | |
| 1a⁵⁹⁵ | Methyl | H | SO₃H | SO₃H | H | Methyl | | | | |
| 1a⁵⁹⁶ | OMe | H | SO₃H | SO₃H | H | OMe | | | | |
| 1a⁵⁹⁷ | F | H | SO₃H | SO₃H | H | F | | | | |
| 1a⁵⁹⁸ | H | SO₃H | H | H | SO₃H | H | Methyl | Methyl | Methyl | 4-Methoxy phenyl |
| 1a⁵⁹⁹ | H | H | SO₃H | SO₃H | H | H | | | | |
| 1a⁶⁰⁰ | Methyl | H | SO₃H | SO₃H | H | Methyl | | | | |
| 1a⁶⁰¹ | OMe | H | SO₃H | SO₃H | H | OMe | | | | |
| 1a⁶⁰² | F | H | SO₃H | SO₃H | H | F | | | | |
| 1a⁶⁰³ | H | SO₃H | H | H | SO₃H | H | Methyl | Methyl | Methyl | 2-Chlorophenyl |
| 1a⁶⁰⁴ | H | H | SO₃H | SO₃H | H | H | | | | |
| 1a⁶⁰⁵ | Methyl | H | SO₃H | SO₃H | H | Methyl | | | | |
| 1a⁶⁰⁶ | OMe | H | SO₃H | SO₃H | H | OMe | | | | |
| 1a⁶⁰⁷ | F | H | SO₃H | SO₃H | H | F | | | | |
| 1a⁶⁰⁸ | H | SO₃H | H | H | SO₃H | H | Methyl | Methyl | Methyl | 3-Chlorophenyl |
| 1a⁶⁰⁹ | H | H | SO₃H | SO₃H | H | H | | | | |
| 1a⁶¹⁰ | Methyl | H | SO₃H | SO₃H | H | Methyl | | | | |
| 1a⁶¹¹ | OMe | H | SO₃H | SO₃H | H | OMe | | | | |
| 1a⁶¹² | F | H | SO₃H | SO₃H | H | F | | | | |
| 1a⁶¹³ | H | SO₃H | H | H | SO₃H | H | Methyl | Methyl | Methyl | 4-Chlorophenyl |
| 1a⁶¹⁴ | H | H | SO₃H | SO₃H | H | H | | | | |
| 1a⁶¹⁵ | Methyl | H | SO₃H | SO₃H | H | Methyl | | | | |
| 1a⁶¹⁶ | OMe | H | SO₃H | SO₃H | H | OMe | | | | |
| 1a⁶¹⁷ | F | H | SO₃H | SO₃H | H | F | | | | |
| 1a⁶¹⁸ | H | SO₃H | H | H | SO₃H | H | Methyl | Methyl | Methyl | 2-Fluorophenyl |
| 1a⁶¹⁹ | H | H | SO₃H | SO₃H | H | H | | | | |
| 1a⁶²⁰ | Methyl | H | SO₃H | SO₃H | H | Methyl | | | | |
| 1a⁶²¹ | OMe | H | SO₃H | SO₃H | H | OMe | | | | |
| 1a⁶²² | F | H | SO₃H | SO₃H | H | F | | | | |
| 1a⁶²³ | H | SO₃H | H | H | SO₃H | H | Methyl | Methyl | Methyl | 3-Fluorophenyl |
| 1a⁶²⁴ | H | H | SO₃H | SO₃H | H | H | | | | |
| 1a⁶²⁵ | Methyl | H | SO₃H | SO₃H | H | Methyl | | | | |
| 1a⁶²⁶ | OMe | H | SO₃H | SO₃H | H | OMe | | | | |
| 1a⁶²⁷ | F | H | SO₃H | SO₃H | H | F | | | | |
| 1a⁶²⁸ | H | SO₃H | H | H | SO₃H | H | Methyl | Methyl | Methyl | 4-Fluorophenyl |
| 1a⁶²⁹ | H | H | SO₃H | SO₃H | H | H | | | | |
| 1a⁶³⁰ | Methyl | H | SO₃H | SO₃H | H | Methyl | | | | |
| 1a⁶³¹ | OMe | H | SO₃H | SO₃H | H | OMe | | | | |
| 1a⁶³² | F | H | SO₃H | SO₃H | H | F | | | | |
| 1a⁶³³ | H | SO₃H | H | H | SO₃H | H | Methyl | Methyl | Methyl | 3-Phenyl sulfonamide |
| 1a⁶³⁴ | H | H | SO₃H | SO₃H | H | H | | | | |
| 1a⁶³⁵ | Methyl | H | SO₃H | SO₃H | H | Methyl | | | | |
| 1a⁶³⁶ | OMe | H | SO₃H | SO₃H | H | OMe | | | | |
| 1a⁶³⁷ | F | H | SO₃H | SO₃H | H | F | | | | |
| 1a⁶³⁸ | H | SO₃H | H | H | SO₃H | H | Methyl | Methyl | Methyl | 2-Aminophenyl |
| 1a⁶³⁹ | H | H | SO₃H | SO₃H | H | H | | | | |
| 1a⁶⁴⁰ | Methyl | H | SO₃H | SO₃H | H | Methyl | | | | |
| 1a⁶⁴¹ | OMe | H | SO₃H | SO₃H | H | OMe | | | | |
| 1a⁶⁴² | F | H | SO₃H | SO₃H | H | F | | | | |
| 1a⁶⁴³ | H | SO₃H | H | H | SO₃H | H | Methyl | Methyl | Methyl | 3-Aminophenyl |
| 1a⁶⁴⁴ | H | H | SO₃H | SO₃H | H | H | | | | |
| 1a⁶⁴⁵ | Methyl | H | SO₃H | SO₃H | H | Methyl | | | | |
| 1a⁶⁴⁶ | OMe | H | SO₃H | SO₃H | H | OMe | | | | |
| 1a⁶⁴⁷ | F | H | SO₃H | SO₃H | H | F | | | | |
| 1a⁶⁴⁸ | H | SO₃H | H | H | SO₃H | H | Methyl | Methyl | Methyl | 4-Aminophenyl |
| 1a⁶⁴⁹ | H | H | SO₃H | SO₃H | H | H | | | | |
| 1a⁶⁵⁰ | Methyl | H | SO₃H | SO₃H | H | Methyl | | | | |
| 1a⁶⁵¹ | OMe | H | SO₃H | SO₃H | H | OMe | | | | |
| 1a⁶⁵² | F | H | SO₃H | SO₃H | H | F | | | | |
| 1a⁶⁵³ | H | SO₃H | H | H | SO₃H | H | Methyl | F | Methyl | Phenyl |
| 1a⁶⁵⁴ | H | H | SO₃H | SO₃H | H | H | | | | |
| 1a⁶⁵⁵ | Methyl | H | SO₃H | SO₃H | H | Methyl | | | | |
| 1a⁶⁵⁶ | OMe | H | SO₃H | SO₃H | H | OMe | | | | |
| 1a⁶⁵⁷ | F | H | SO₃H | SO₃H | H | F | | | | |
| 1a⁶⁵⁸ | H | SO₃H | H | H | SO₃H | H | Methyl | F | Methyl | 3-Methyl phenyl |
| 1a⁶⁵⁹ | H | H | SO₃H | SO₃H | H | H | | | | |
| 1a⁶⁶⁰ | Methyl | H | SO₃H | SO₃H | H | Methyl | | | | |
| 1a⁶⁶¹ | OMe | H | SO₃H | SO₃H | H | OMe | | | | |
| 1a⁶⁶² | F | H | SO₃H | SO₃H | H | F | | | | |
| 1a⁶⁶³ | H | SO₃H | H | H | SO₃H | H | Methyl | F | Methyl | 2-Methyl phenyl |
| 1a⁶⁶⁴ | H | H | SO₃H | SO₃H | H | H | | | | |
| 1a⁶⁶⁵ | Methyl | H | SO₃H | SO₃H | H | Methyl | | | | |
| 1a⁶⁶⁶ | OMe | H | SO₃H | SO₃H | H | OMe | | | | |
| 1a⁶⁶⁷ | F | H | SO₃H | SO₃H | H | F | | | | |
| 1a⁶⁶⁸ | H | SO₃H | H | H | SO₃H | H | Methyl | F | Methyl | 4-Methyl phenyl |
| 1a⁶⁶⁹ | H | H | SO₃H | SO₃H | H | H | | | | |
| 1a⁶⁷⁰ | Methyl | H | SO₃H | SO₃H | H | Methyl | | | | |
| 1a⁶⁷¹ | OMe | H | SO₃H | SO₃H | H | OMe | | | | |
| 1a⁶⁷² | F | H | SO₃H | SO₃H | H | F | | | | |
| 1a⁶⁷³ | H | SO₃H | H | H | SO₃H | H | Methyl | F | Methyl | 3-Methyl phenyl |
| 1a⁶⁷⁴ | H | H | SO₃H | SO₃H | H | H | | | | |
| 1a⁶⁷⁵ | Methyl | H | SO₃H | SO₃H | H | Methyl | | | | |
| 1a⁶⁷⁶ | OMe | H | SO₃H | SO₃H | H | OMe | | | | |
| 1a⁶⁷⁷ | F | H | SO₃H | SO₃H | H | F | | | | |
| 1a⁶⁷⁸ | H | SO₃H | H | H | SO₃H | H | Methyl | F | Methyl | 2-Methoxy phenyl |
| 1a⁶⁷⁹ | H | H | SO₃H | SO₃H | H | H | | | | |
| 1a⁶⁸⁰ | Methyl | H | SO₃H | SO₃H | H | Methyl | | | | |
| 1a⁶⁸¹ | OMe | H | SO₃H | SO₃H | H | OMe | | | | |
| 1a⁶⁸² | F | H | SO₃H | SO₃H | H | F | | | | |
| 1a⁶⁸³ | H | SO₃H | H | H | SO₃H | H | Methyl | F | Methyl | 3-Methoxy phenyl |
| 1a⁶⁸⁴ | H | H | SO₃H | SO₃H | H | H | | | | |
| 1a⁶⁸⁵ | Methyl | H | SO₃H | SO₃H | H | Methyl | | | | |
| 1a⁶⁸⁶ | OMe | H | SO₃H | SO₃H | H | OMe | | | | |
| 1a⁶⁸⁷ | F | H | SO₃H | SO₃H | H | F | | | | |
| 1a⁶⁸⁸ | CF₃ | H | SO₃H | SO₃H | H | CF₃ | | | | |
| 1a⁶⁸⁹ | H | SO₃H | H | H | SO₃H | H | Methyl | F | Methyl | 4-Methoxy phenyl |
| 1a⁶⁹⁰ | H | H | SO₃H | SO₃H | H | H | | | | |
| 1a⁶⁹¹ | Methyl | H | SO₃H | SO₃H | H | Methyl | | | | |
| 1a⁶⁹² | OMe | H | SO₃H | SO₃H | H | OMe | | | | |
| 1a⁶⁹³ | F | H | SO₃H | SO₃H | H | F | | | | |
| 1a⁶⁹⁴ | H | SO₃H | H | H | SO₃H | H | Methyl | F | Methyl | 2-Chlorophenyl |
| 1a⁶⁹⁵ | H | H | SO₃H | SO₃H | H | H | | | | |
| 1a⁶⁹⁶ | Methyl | H | SO₃H | SO₃H | H | Methyl | | | | |
| 1a⁶⁹⁷ | OMe | H | SO₃H | SO₃H | H | OMe | | | | |
| 1a⁶⁹⁸ | F | H | SO₃H | SO₃H | H | F | | | | |
| 1a⁶⁹⁹ | H | SO₃H | H | H | SO₃H | H | Methyl | F | Methyl | 3-Chlorophenyl |
| 1a⁷⁰⁰ | H | H | SO₃H | SO₃H | H | H | | | | |
| 1a⁷⁰¹ | Methyl | H | SO₃H | SO₃H | H | Methyl | | | | |
| 1a⁷⁰² | OMe | H | SO₃H | SO₃H | H | OMe | | | | |
| 1a⁷⁰³ | F | H | SO₃H | SO₃H | H | F | | | | |
| 1a⁷⁰⁴ | H | SO₃H | H | H | SO₃H | H | Methyl | F | Methyl | 4-Chlorophenyl |
| 1a⁷⁰⁵ | H | H | SO₃H | SO₃H | H | H | | | | |
| 1a⁷⁰⁶ | Methyl | H | SO₃H | SO₃H | H | Methyl | | | | |
| 1a⁷⁰⁷ | OMe | H | SO₃H | SO₃H | H | OMe | | | | |
| 1a⁷⁰⁸ | F | H | SO₃H | SO₃H | H | F | | | | |
| 1a⁷⁰⁹ | H | SO₃H | H | H | SO₃H | H | Methyl | F | Methyl | 2-Fluorophenyl |
| 1a⁷¹⁰ | H | H | SO₃H | SO₃H | H | H | | | | |
| 1a⁷¹¹ | Methyl | H | SO₃H | SO₃H | H | Methyl | | | | |
| 1a⁷¹² | OMe | H | SO₃H | SO₃H | H | OMe | | | | |
| 1a⁷¹³ | F | H | SO₃H | SO₃H | H | F | | | | |
| 1a⁷¹⁴ | H | SO₃H | H | H | SO₃H | H | Methyl | F | Methyl | 3-Fluorophenyl |
| 1a⁷¹⁵ | H | H | SO₃H | SO₃H | H | H | | | | |
| 1a⁷¹⁶ | Methyl | H | SO₃H | SO₃H | H | Methyl | | | | |
| 1a⁷¹⁷ | OMe | H | SO₃H | SO₃H | H | OMe | | | | |
| 1a⁷¹⁸ | F | H | SO₃H | SO₃H | H | F | | | | |
| 1a⁷¹⁹ | H | SO₃H | H | H | SO₃H | H | Methyl | F | Methyl | 4-Fluorophenyl |
| 1a⁷²⁰ | H | H | SO₃H | SO₃H | H | H | | | | |
| 1a⁷²¹ | Methyl | H | SO₃H | SO₃H | H | Methyl | | | | |
| 1a⁷²² | OMe | H | SO₃H | SO₃H | H | OMe | | | | |
| 1a⁷²³ | F | H | SO₃H | SO₃H | H | F | | | | |
| 1a⁷²⁴ | H | SO₃H | H | H | SO₃H | H | Methyl | F | Methyl | 3-Phenyl sulfonamide |
| 1a⁷²⁵ | H | H | SO₃H | SO₃H | H | H | | | | |
| 1a⁷²⁶ | Methyl | H | SO₃H | SO₃H | H | Methyl | | | | |
| 1a⁷²⁷ | OMe | H | SO₃H | SO₃H | H | OMe | | | | |
| 1a⁷²⁸ | F | H | SO₃H | SO₃H | H | F | | | | |
| 1a⁷²⁹ | H | SO₃H | H | H | SO₃H | H | Methyl | F | Methyl | 2-Aminophenyl |
| 1a⁷³⁰ | H | H | SO₃H | SO₃H | H | H | | | | |
| 1a⁷³¹ | Methyl | H | SO₃H | SO₃H | H | Methyl | | | | |
| 1a⁷³² | OMe | H | SO₃H | SO₃H | H | OMe | | | | |
| 1a⁷³³ | F | H | SO₃H | SO₃H | H | F | | | | |
| 1a⁷³⁴ | H | SO₃H | H | H | SO₃H | H | Methyl | F | Methyl | 3-Aminophenyl |
| 1a⁷³⁵ | H | H | SO₃H | SO₃H | H | H | | | | |
| 1a⁷³⁶ | Methyl | H | SO₃H | SO₃H | H | Methyl | | | | |
| 1a⁷³⁷ | OMe | H | SO₃H | SO₃H | H | OMe | | | | |
| 1a⁷³⁸ | F | H | SO₃H | SO₃H | H | F | | | | |
| 1a⁷³⁹ | H | SO₃H | H | H | SO₃H | H | Methyl | F | Methyl | 4-Aminophenyl |
| 1a⁷⁴⁰ | H | H | SO₃H | SO₃H | H | H | | | | |
| 1a⁷⁴¹ | Methyl | H | SO₃H | SO₃H | H | Methyl | | | | |
| 1a⁷⁴² | OMe | H | SO₃H | SO₃H | H | OMe | | | | |
| 1a⁷⁴³ | F | H | SO₃H | SO₃H | H | F | | | | |
| 1a⁷⁴⁴ | H | SO₃H | H | H | SO₃H | H | NHCOCH₃ | OMe | Methyl | Phenyl |
| 1a⁷⁴⁵ | H | H | SO₃H | SO₃H | H | H | | | | |
| 1a⁷⁴⁶ | Methyl | H | SO₃H | SO₃H | H | Methyl | | | | |
| 1a⁷⁴⁷ | OMe | H | SO₃H | SO₃H | H | OMe | | | | |
| 1a⁷⁴⁸ | F | H | SO₃H | SO₃H | H | F | | | | |
| 1a⁷⁴⁹ | H | SO₃H | H | H | SO₃H | H | NHCOCH₃ | OMe | Methyl | 3-Methyl phenyl |
| 1a⁷⁵⁰ | H | H | SO₃H | SO₃H | H | H | | | | |
| 1a⁷⁵¹ | Methyl | H | SO₃H | SO₃H | H | Methyl | | | | |
| 1a⁷⁵² | OMe | H | SO₃H | SO₃H | H | OMe | | | | |
| 1a⁷⁵³ | F | H | SO₃H | SO₃H | H | F | | | | |
| 1a⁷⁵⁴ | H | SO₃H | H | H | SO₃H | H | NHCOCH₃ | OMe | Methyl | 2-Methyl phenyl |
| 1a⁷⁵⁵ | H | H | SO₃H | SO₃H | H | H | | | | |
| 1a⁷⁵⁶ | Methyl | H | SO₃H | SO₃H | H | Methyl | | | | |
| 1a⁷⁵⁷ | OMe | H | SO₃H | SO₃H | H | OMe | | | | |
| 1a⁷⁵⁸ | F | H | SO₃H | SO₃H | H | F | | | | |
| 1a⁷⁵⁹ | H | SO₃H | H | H | SO₃H | H | NHCOCH₃ | OMe | Methyl | 4-Methyl phenyl |
| 1a⁷⁶⁰ | H | H | SO₃H | SO₃H | H | H | | | | |
| 1a⁷⁶¹ | Methyl | H | SO₃H | SO₃H | H | Methyl | | | | |
| 1a⁷⁶² | OMe | H | SO₃H | SO₃H | H | OMe | | | | |
| 1a⁷⁶³ | F | H | SO₃H | SO₃H | H | F | | | | |
| 1a⁷⁶⁴ | H | SO₃H | H | H | SO₃H | H | NHCOCH₃ | OMe | Methyl | 3-Methyl phenyl |
| 1a⁷⁶⁵ | H | H | SO₃H | SO₃H | H | H | | | | |
| 1a⁷⁶⁶ | Methyl | H | SO₃H | SO₃H | H | Methyl | | | | |
| 1a⁷⁶⁷ | OMe | H | SO₃H | SO₃H | H | OMe | | | | |
| 1a⁷⁶⁸ | F | H | SO₃H | SO₃H | H | F | | | | |
| 1a⁷⁶⁹ | H | SO₃H | H | H | SO₃H | H | NHCOCH₃ | OMe | Methyl | 2-Methoxy phenyl |
| 1a⁷⁷⁰ | H | H | SO₃H | SO₃H | H | H | | | | |
| 1a⁷⁷¹ | Methyl | H | SO₃H | SO₃H | H | Methyl | | | | |
| 1a⁷⁷² | OMe | H | SO₃H | SO₃H | H | OMe | | | | |
| 1a⁷⁷³ | F | H | SO₃H | SO₃H | H | F | | | | |
| 1a⁷⁷⁴ | H | SO₃H | H | H | SO₃H | H | NHCOCH₃ | OMe | Methyl | 3-Methoxy phenyl |
| 1a⁷⁷⁵ | H | H | SO₃H | SO₃H | H | H | | | | |
| 1a⁷⁷⁶ | Methyl | H | SO₃H | SO₃H | H | Methyl | | | | |
| 1a⁷⁷⁷ | OMe | H | SO₃H | SO₃H | H | OMe | | | | |
| 1a⁷⁷⁸ | F | H | SO₃H | SO₃H | H | F | | | | |
| 1a⁷⁷⁹ | H | SO₃H | H | H | SO₃H | H | NHCOCH₃ | OMe | Methyl | 4-Methoxy phenyl |
| 1a⁷⁸⁰ | H | H | SO₃H | SO₃H | H | H | | | | |
| 1a⁷⁸¹ | Methyl | H | SO₃H | SO₃H | H | Methyl | | | | |
| 1a⁷⁸² | OMe | H | SO₃H | SO₃H | H | OMe | | | | |
| 1a⁷⁸³ | F | H | SO₃H | SO₃H | H | F | | | | |
| 1a⁷⁸⁴ | H | SO₃H | H | H | SO₃H | H | NHCOCH₃ | OMe | Methyl | 2-Chlorophenyl |
| 1a⁷⁸⁵ | H | H | SO₃H | SO₃H | H | H | | | | |
| 1a⁷⁸⁶ | Methyl | H | SO₃H | SO₃H | H | Methyl | | | | |
| 1a⁷⁸⁷ | OMe | H | SO₃H | SO₃H | H | OMe | | | | |
| 1a⁷⁸⁸ | F | H | SO₃H | SO₃H | H | F | | | | |
| 1a⁷⁸⁹ | H | SO₃H | H | H | SO₃H | H | NHCOCH₃ | OMe | Methyl | 3-Chlorophenyl |
| 1a⁷⁹⁰ | H | H | SO₃H | SO₃H | H | H | | | | |
| 1a⁷⁹¹ | Methyl | H | SO₃H | SO₃H | H | Methyl | | | | |
| 1a⁷⁹² | OMe | H | SO₃H | SO₃H | H | OMe | | | | |
| 1a⁷⁹³ | F | H | SO₃H | SO₃H | H | F | | | | |
| 1a⁷⁹⁴ | H | SO₃H | H | H | SO₃H | H | NHCOCH₃ | OMe | Methyl | 4-Chlorophenyl |
| 1a⁷⁹⁵ | H | H | SO₃H | SO₃H | H | H | | | | |
| 1a⁷⁹⁶ | Methyl | H | SO₃H | SO₃H | H | Methyl | | | | |
| 1a⁷⁹⁷ | OMe | H | SO₃H | SO₃H | H | OMe | | | | |
| 1a⁷⁹⁸ | F | H | SO₃H | SO₃H | H | F | | | | |
| 1a⁷⁹⁹ | H | SO₃H | H | H | SO₃H | H | NHCOCH₃ | OMe | Methyl | 2-Fluorophenyl |
| 1a⁸⁰⁰ | H | H | SO₃H | SO₃H | H | H | | | | |
| 1a⁸⁰¹ | Methyl | H | SO₃H | SO₃H | H | Methyl | | | | |
| 1a⁸⁰² | OMe | H | SO₃H | SO₃H | H | OMe | | | | |
| 1a⁸⁰³ | F | H | SO₃H | SO₃H | H | F | | | | |
| 1a⁸⁰⁴ | H | SO₃H | H | H | SO₃H | H | NHCOCH₃ | OMe | Methyl | 3-Fluorophenyl |
| 1a⁸⁰⁵ | H | H | SO₃H | SO₃H | H | H | | | | |
| 1a⁸⁰⁶ | Methyl | H | SO₃H | SO₃H | H | Methyl | | | | |
| 1a⁸⁰⁷ | OMe | H | SO₃H | SO₃H | H | OMe | | | | |
| 1a⁸⁰⁸ | F | H | SO₃H | SO₃H | H | F | | | | |
| 1a⁸⁰⁹ | H | SO₃H | H | H | SO₃H | H | NHCOCH₃ | OMe | Methyl | 4-Fluorophenyl |
| 1a⁸¹⁰ | H | H | SO₃H | SO₃H | H | H | | | | |
| 1a⁸¹¹ | Methyl | H | SO₃H | SO₃H | H | Methyl | | | | |
| 1a⁸¹² | OMe | H | SO₃H | SO₃H | H | OMe | | | | |
| 1a⁸¹³ | F | H | SO₃H | SO₃H | H | F | | | | |
| 1a⁸¹⁴ | H | SO₃H | H | H | SO₃H | H | NHCOCH₃ | OMe | Methyl | 3-Phenyl sulfonamide |
| 1a⁸¹⁵ | H | H | SO₃H | SO₃H | H | H | | | | |
| 1a⁸¹⁶ | Methyl | H | SO₃H | SO₃H | H | Methyl | | | | |
| 1a⁸¹⁷ | OMe | H | SO₃H | SO₃H | H | OMe | | | | |
| 1a⁸¹⁸ | F | H | SO₃H | SO₃H | H | F | | | | |
| 1a⁸¹⁹ | H | SO₃H | H | H | SO₃H | H | NHCOCH₃ | OMe | Methyl | 2-Aminophenyl |
| 1a⁸²⁰ | H | H | SO₃H | SO₃H | H | H | | | | |
| 1a⁸²¹ | Methyl | H | SO₃H | SO₃H | H | Methyl | | | | |
| 1a⁸²² | OMe | H | SO₃H | SO₃H | H | OMe | | | | |
| 1a⁸²³ | F | H | SO₃H | SO₃H | H | F | | | | |
| 1a⁸²⁴ | H | SO₃H | H | H | SO₃H | H | NHCOCH₃ | OMe | Methyl | 3-Aminophenyl |
| 1a⁸²⁵ | H | H | SO₃H | SO₃H | H | H | | | | |
| 1a⁸²⁶ | Methyl | H | SO₃H | SO₃H | H | Methyl | | | | |
| 1a⁸²⁷ | OMe | H | SO₃H | SO₃H | H | OMe | | | | |
| 1a⁸²⁸ | F | H | SO₃H | SO₃H | H | F | | | | |
| 1a⁸²⁹ | H | SO₃H | H | H | SO₃H | H | NHCOCH₃ | OMe | Methyl | 4-Aminophenyl |
| 1a⁸³⁰ | H | H | SO₃H | SO₃H | H | H | | | | |
| 1a⁸³¹ | Methyl | H | SO₃H | SO₃H | H | Methyl | | | | |
| 1a⁸³² | OMe | H | SO₃H | SO₃H | H | OMe | | | | |
| 1a⁸³³ | F | H | SO₃H | SO₃H | H | F | | | | |
| 1a⁸³⁴ | H | SO₃H | H | H | SO₃H | H | NHCOCH₃ | OMe | Methyl | 4-Sulfophenyl |
| 1a⁸³⁵ | H | H | SO₃H | SO₃H | H | H | | | | |
| 1a⁸³⁶ | Methyl | H | SO₃H | SO₃H | H | Methyl | | | | |
| 1a⁸³⁷ | OMe | H | SO₃H | SO₃H | H | OMe | | | | |
| 1a⁸³⁸ | F | H | SO₃H | SO₃H | H | F | | | | |
| 1a⁸³⁹ | H | SO₃H | H | H | SO₃H | H | Methyl | Methyl | Methyl | 4-Sulfophenyl |
| 1a⁸⁴⁰ | H | H | SO₃H | SO₃H | H | H | | | | |
| 1a⁸⁴¹ | Methyl | H | SO₃H | SO₃H | H | Methyl | | | | |
| 1a⁸⁴² | OMe | H | SO₃H | SO₃H | H | OMe | | | | |
| 1a⁸⁴³ | F | H | SO₃H | SO₃H | H | F | | | | |
| 1a⁸⁴⁴ | H | SO₃H | H | H | SO₃H | H | Methyl | F | Methyl | 4-Sulfophenyl |
| 1a⁸⁴⁵ | H | H | SO₃H | SO₃H | H | H | | | | |
| 1a⁸⁴⁶ | Methyl | H | SO₃H | SO₃H | H | Methyl | | | | |
| 1a⁸⁴⁷ | OMe | H | SO₃H | SO₃H | H | OMe | | | | |
| 1a⁸⁴⁸ | F | H | SO₃H | SO₃H | H | F | | | | |
| 1a⁸⁴⁹ | H | SO₃H | H | H | SO₃H | H | NHCOCH₃ | OMe | Methyl | 3-Sulfophenyl |
| 1a⁸⁵⁰ | H | H | SO₃H | SO₃H | H | H | | | | |
| 1a⁸⁵¹ | Methyl | H | SO₃H | SO₃H | H | Methyl | | | | |
| 1a⁸⁵² | OMe | H | SO₃H | SO₃H | H | OMe | | | | |
| 1a⁸⁵³ | F | H | SO₃H | SO₃H | H | F | | | | |
| 1a⁸⁵⁴ | H | SO₃H | H | H | SO₃H | H | Methyl | Methyl | Methyl | 3-Sulfophenyl |
| 1a⁸⁵⁵ | H | H | SO₃H | SO₃H | H | H | | | | |
| 1a⁸⁵⁶ | Methyl | H | SO₃H | SO₃H | H | Methyl | | | | |
| 1a⁸⁵⁷ | OMe | H | SO₃H | SO₃H | H | OMe | | | | |
| 1a⁸⁵⁸ | F | H | SO₃H | SO₃H | H | F | | | | |
| 1a⁸⁵⁹ | H | SO₃H | H | H | SO₃H | H | Methyl | F | Methyl | 3-Sulfophenyl |
| 1a⁸⁶⁰ | H | H | SO₃H | SO₃H | H | H | | | | |
| 1a⁸⁶¹ | Methyl | H | SO₃H | SO₃H | H | Methyl | | | | |
| 1a⁸⁶² | OMe | H | SO₃H | SO₃H | H | OMe | | | | |
| 1a⁸⁶³ | F | H | SO₃H | SO₃H | H | F | | | | |

Further preferred embodiments of the present invention are dyes of the formula (1 b) and mixtures and/or tautomers thereof 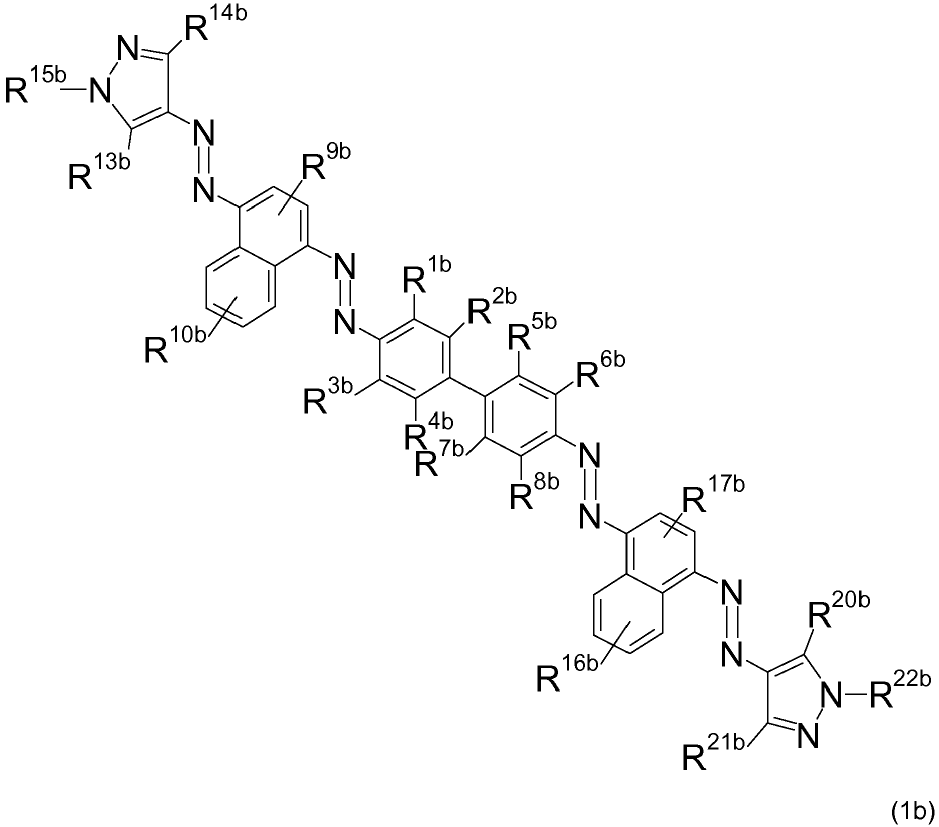 wherein
R^{1b}, R^{2b}, R^{3b}, R^{4b}, R^{5b}, R^{6b}, R^{7b} and R^{8b} independent of each other is hydrogen, alkyl, alkoxy, halogen, trifluoromethyl or SO₃M whereby at least two of them are SO₃M,
R^{9b}, R^{10b}, R^{16b} and R^{17b} independent of each other is hydrogen, alkyl, alkyl substituted, alkyl chain interrupted by one or two heteroatoms, alkoxy, alkoxy substituted, halogen ,trifluoromethyl, cycloalkyl, heterocycloalkyl, cyano, acyloxy, alkylcarbonyl, acylamino, alkylsulfonylamino, amino, monoalkyl-amino, monocycloalkyl-amino, dialkyl-amino, di(cyclo)alkyl-amino, alkylthio, alkylsulfonyl, alkoxycarbonyl, carbamoyl, sulfamoyl, ureido, SO₃M or alkylureido,
R^{13b} and R^{20b} is hydroxyl,
R^{14b} and R^{21b} independent of one each other is hydrogen, alkyl, cycloalkyl, trifluoromethyl, alkoxy, cyano, carbamoyl, alkoxycarbonyl, COOM, amino, hydroxyl, monocycloalkyl-amino, monoalkyl-amino, di(cyclo)alkyl-amino, dialkyl-amino, monoaryl-amino, diaryl-amino, monocycloalkylmonoarylamino, monoalkyl monoaryl amino, alkylthio, arylthio, alkylcarbonyl, alkylsulfonyl
or
is alkyl substituted by one or more substituents selected from the group consisting of hydroxy, cycloalkyl, heteroaryl, heterocycloalkyl, aryl, aryloxy, alkoxy, alkylthio, arylthio, halogen, cyano, COOM, alkoxycarbonyl, acyloxy, carbamoyl, nitro, amino, acylamino, arylcarbonylamino, alkylsulfonylamino, arylsulfonylamino, ureido, alkylureido and phenylureido,
R^{15b} and R^{22b} independent of each other is hydrogen, alkyl, hydroxyalkyl, alkoxy, alkenyl, cycloalkyl, aryl, heteroaryl, heterocycloalkyl, carbamoyl, alkylureido, phenylureido, hydroxyakylsulfonylalkyl, aminoalkyl, amino-hydroxy-alkyl, alkoxyalkyl-aminoalkyl, thioalkoxyalkyl-aminoalkyl, aminoalkyloxyalkyl, aminoalkylthioxyalkyl, cycloalkylalkyl, aryloxyalkyl, arylthioxyalkyl, heteroarylalkyl, heterocycloalkylalkyl,
or
alkyl interrupted by one or more heteroatoms selected from the Isit consisting of oxygen and sulfur
or
alkyl substituted by one or more substituents selected from the group consisting of hydroxy, aryl, cycloalkyl, alkoxy, thioalkoxy, amino, N-monoalkyl-amino, N,N-dialkyl-amino, N-monoaryl-amino, N,N-diaryl-amino, N-alkyl-N-aryl-amino, N-monocycloalkyl-amino, N,N-dicycloalkyl-amino, N-monoalkyl-monocycloalkyl-amino, N,N-monoaryl-monocycloalkyl-amino, N-acylamino, N-alkylsulfonyl-amino, ureido, alkylureido, phenyilureido, halogen, cyano, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy, aryloyloxy, carbamoyl, N-monocycloalkyl-carbamoyl, N-monoalkyl-carbamoyl, N,N-dicycloalkyl-carbamoyl, N,N-dialkyl-carbamoyl, N-monoaryl-carbamoyl, N, N-d iaryl-carbamoyl, N-monocycloalkyl-N-monoarylcarbamoyl, N-monoalkyl-N-monoaryl-carbamoyl, sulfamoyl, N-monocycloalkyl-sulfamoyl, N-monoalkyl-sulfamoyl, N,N-dicycloalkyl-sulfamoyl, N,N-dialkyl-sulfamoyl, N-monoaryl-sulfamoyl, N,N-diaryl-sulfamoyl, N-monocycloalkyl-N-monoarylsulfamoyl, N-monoalkyl-N-monoarylsulfamoyl and SO₃M
or
alkyl interrupted by one or more heteroatoms selected from the Isit consisting of oxygen and sulfur and substituted by one or more substituents selected from the group consisting of hydroxy, aryl, cycloalkyl, alkoxy, thioalkoxy, amino, N-monoalkyl-amino, N,N-dialkyl-amino, N-monoaryl-amino, N,N-diaryl-amino, N-alkyl-N-aryl-amino, N-monocycloalkyl-amino, N,N-dicycloalkyl-amino, N-monoalkyl-monocycloalkyl-amino, N,N-monoaryl-monocycloalkyl-amino, N-acylamino, N-alkylsulfonyl-amino, ureido, alkylureido, phenylureido, halogen, cyano, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy, aryloyloxy, carbamoyl, N-monocycloalkyl-carbamoyl, N-monoalkyl-carbamoyl, N,N-dicycloalkyl-carbamoyl, N,N-dialkyl-carbamoyl, N-monoaryl-carbamoyl, N,N-diaryl-carbamoyl, N-monocycloalkyl-N-monoarylcarbamoyl, N-monoalkyl-N-monoaryl-carbamoyl, sulfamoyl, N-monocycloalkyl-sulfamoyl, N-monoalkyl-sulfamoyl, N,N-dicycloalkyl-sulfamoyl, N,N-dialkyl-sulfamoyl, N-monoaryl-sulfamoyl, N,N-diaryl-sulfamoyl, N-monocycloalkyl-N-monoarylsulfamoyl, N-monoalkyl-N-monoarylsulfamoyl and SO₃M
or
aryl substituted by one or more substituents selected from the group consisting of hydroxy, aryl, cycloalkyl, alkoxy, thioalkoxy, amino, N-monoalkyl-amino, N,N-dialkyl-amino, N-monoaryl-amino, N,N-diaryl-amino, N-alkyl-N-aryl-amino, N-monocycloalkyl-amino, N,N-dicycloalkyl-amino, N-monoalkyl-monocycloalkyl-amino, N,N-monoaryl-monocycloalkyl-amino, N-acylamino, N-alkylsulfonyl-amino, ureido, alkylureido, phenylureido, halogen, cyano, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy, aryloyloxy, carbamoyl, N-monocycloalkyl-carbamoyl, N-monoalkyl-carbamoyl, N,N-dicycloalkyl-carbamoyl, N,N-dialkyl-carbamoyl, N-monoaryl-carbamoyl, N,N-diaryl-carbamoyl, N-monocycloalkyl-N-monoarylcarbamoyl, N-monoalkyl-N-monoaryl-carbamoyl, sulfamoyl, N-monocycloalkyl-sulfamoyl, N-monoalkyl-sulfamoyl, N,N-dicycloalkyl-sulfamoyl, N,N-dialkyl-sulfamoyl, N-monoaryl-sulfamoyl, N,N-diaryl-sulfamoyl, N-monocycloalkyl-N-monoarylsulfamoyl, N-monoalkyl-N-monoarylsulfamoyl and SO₃M
and
M is hydrogen, an alkali metal, ammonium, one equivalent of an alkali earth metal or a monovalent organic cation.

In particularly preferred dyes of formula (1 b)
R^{1b}, R^{3b}, R^{4b}, R^{5b}, R^{6b} and R^{8b} independent of each other is SO₃M, hydrogen, alkyl, alkoxy or halogen, whereby at least two of them are SO₃M,
R^{2b} and R^{7b} is hydrogen,
R^{9b}, R^{10b}, R^{16b} and R^{17b} independent of one each other is hydrogen, methyl, halogen, -SO₃M or acetylamino,
R^{13a} and R^{20a} is hydroxyl,
R^{14b} and R^{21b} independent of each other is alkyl, cycloalkyl, trifluoromethyl, cyano, carbamoyl, alkoxycarbonyl, COOM, alkylcarbonyl
or
is alkyl substituted by one or more substituents selected from the group consisting of hydroxy, alkoxy, halogen, cyano, COOM, alkoxycarbonyl, acyloxy and carbamoyl,
R^{15b} and R^{22b} independent of each other is methyl, ethyl, n-propyl, n-butyl, n-pentyl, n-hexyl, cyclobutyl, cyclopentyl, cyclohexyl, 2-methylcyclohexyl, 3-methylcyclohexyl, isopropyl, sec-butyl, 2-methylbutyl, 1-ethylproyl, 1,2-dimethylpropyl, tert-butyl, 3-methylbutyl, pentan-2-yl, 2-ethylhexyl, 2,2-dimethylpropyl, phenyl, benzyl, 2-hydroxyethyl, 2-methoxyethyl, 3-methoxypropyl, 2-fluoroethyl, 2-chloroethyl, 3-chloropropyl, 2-ethylhexyl, 6-hydroxy-1-[2-(2-hydroxyethylsulfanyl)-ethyl], 2-(ethylsulfonyl)ethanol, 2-hydroxyethoxypropyl, 2-hydroxyethoxyethyl, 3-(2-phenoxy-ethoxy)-propyl, 3-isopropoxy-propyl, 3-ethoxy-propyl, 3-ethoxybutyl, phenyl, 3-methylphenyl, 2-methylphenyl, 3-methylphenyl, 4-methylphenyl, 2-methoxyphenyl, 3-methoxyphenyl, 4-methoxyphenyl, 2-chlorophenyl, 3-chlorophenyl, 4-chlorophenyl, 2-fluorophenyl, 3-fluorophenyl, 4-fluorophenyl, 3-phenylsulfonamide, 3-sulfophenyl or 4-sulfophenyl
and
M is hydrogen, an alkali metal, ammonium, one equivalent of an alkali earth metal or a monovalent organic cation.

Examples of preferred dyes of the formula (1b) are the compounds of the formulae (1b¹ to 1b¹⁷⁰) and mixtures and/or tautomers thereof

| Structure | R^{1b} | R^{3b} | R^{4b} | R^{5b} | R^{6b} | R^{8b} | R^{9b}/R^{16b} | R^{10b}/R^{17b} | R^{14b}/R^{21b} | R^{15b} /R^{22b} |
|---|---|---|---|---|---|---|---|---|---|---|
| 1b¹ | H | SO₃H | H | H | SO₃H | H | 6-SO₃H | H | Methyl | Phenyl |
| 1b² | H | H | SO₃H | SO₃H | H | H | | | | |
| 1b³ | Methyl | H | SO₃H | SO₃H | H | Methyl | | | | |
| 1b⁴ | OMe | H | SO₃H | SO₃H | H | OMe | | | | |
| 1b⁵ | F | H | SO₃H | SO₃H | H | F | | | | |
| 1b⁶ | H | SO₃H | H | H | SO₃H | H | 6-SO₃H | H | Methyl | 3-Methyl phenyl |
| 1b⁷ | H | H | SO₃H | SO₃H | H | H | | | | |
| 1b⁸ | Methyl | H | SO₃H | SO₃H | H | Methyl | | | | |
| 1b⁹ | OMe | H | SO₃H | SO₃H | H | OMe | | | | |
| 1b¹⁰ | F | H | SO₃H | SO₃H | H | F | | | | |
| 1b¹¹ | H | SO₃H | H | H | SO₃H | H | 6-SO₃H | H | Methyl | 2-Methyl phenyl |
| 1b¹² | H | H | SO₃H | SO₃H | H | H | | | | |
| 1b¹³ | Methyl | H | SO₃H | SO₃H | H | Methyl | | | | |
| 1b¹⁴ | OMe | H | SO₃H | SO₃H | H | OMe | | | | |
| 1b¹⁵ | F | H | SO₃H | SO₃H | H | F | | | | |
| 1b¹⁶ | H | SO₃H | H | H | SO₃H | H | 6-SO₃H | H | Methyl | 4-Methyl phenyl |
| 1b¹⁷ | H | H | SO₃H | SO₃H | H | H | | | | |
| 1b¹⁸ | Methyl | H | SO₃H | SO₃H | H | Methyl | | | | |
| 1b¹⁹ | OMe | H | SO₃H | SO₃H | H | OMe | | | | |
| 1b²⁰ | F | H | SO₃H | SO₃H | H | F | | | | |
| 1b²¹ | H | SO₃H | H | H | SO₃H | H | 6-SO₃H | H | Methyl | 2-Methoxy phenyl |
| 1b²² | H | H | SO₃H | SO₃H | H | H | | | | |
| 1b²³ | Methyl | H | SO₃H | SO₃H | H | Methyl | | | | |
| 1b²⁴ | OMe | H | SO₃H | SO₃H | H | OMe | | | | |
| 1b²⁵ | F | H | SO₃H | SO₃H | H | F | | | | |
| 1b²⁶ | H | SO₃H | H | H | SO₃H | H | 6-SO₃H | H | Methyl | 3-Methoxy phenyl |
| 1b²⁷ | H | H | SO₃H | SO₃H | H | H | | | | |
| 1b²⁸ | Methyl | H | SO₃H | SO₃H | H | Methyl | | | | |
| 1b²⁹ | OMe | H | SO₃H | SO₃H | H | OMe | | | | |
| 1b³⁰ | F | H | SO₃H | SO₃H | H | F | | | | |
| 1b³¹ | H | SO₃H | H | H | SO₃H | H | 6-SO₃H | H | Methyl | 4-Methoxy phenyl |
| 1b³² | H | H | SO₃H | SO₃H | H | H | | | | |
| 1b³³ | Methyl | H | SO₃H | SO₃H | H | Methyl | | | | |
| 1b³⁴ | OMe | H | SO₃H | SO₃H | H | OMe | | | | |
| 1b³⁵ | F | H | SO₃H | SO₃H | H | F | | | | |
| 1b³⁶ | H | SO₃H | H | H | SO₃H | H | 6-SO₃H | H | Methyl | 2-Chlorophenyl |
| 1b³⁷ | H | H | SO₃H | SO₃H | H | H | | | | |
| 1b³⁸ | Methyl | H | SO₃H | SO₃H | H | Methyl | | | | |
| 1b³⁹ | OMe | H | SO₃H | SO₃H | H | OMe | | | | |
| 1b⁴⁰ | F | H | SO₃H | SO₃H | H | F | | | | |
| 1b⁴¹ | H | SO₃H | H | H | SO₃H | H | 6-SO₃H | H | Methyl | 3-Chlorophenyl |
| 1b⁴² | H | H | SO₃H | SO₃H | H | H | | | | |
| 1b⁴³ | Methyl | H | SO₃H | SO₃H | H | Methyl | | | | |
| 1b⁴⁴ | OMe | H | SO₃H | SO₃H | H | OMe | | | | |
| 1b⁴⁵ | F | H | SO₃H | SO₃H | H | F | | | | |
| 1b⁴⁶ | H | SO₃H | H | H | SO₃H | H | 6-SO₃H | H | Methyl | 4-Chlorophenyl |
| 1b⁴⁷ | H | H | SO₃H | SO₃H | H | H | | | | |
| 1b⁴⁸ | Methyl | H | SO₃H | SO₃H | H | Methyl | | | | |
| 1b⁴⁹ | OMe | H | SO₃H | SO₃H | H | OMe | | | | |
| 1b⁵⁰ | F | H | SO₃H | SO₃H | H | F | | | | |
| 1b⁵¹ | H | SO₃H | H | H | SO₃H | H | 6-SO₃H | H | Methyl | 2-Fluorophenyl |
| 1b⁵² | H | H | SO₃H | SO₃H | H | H | | | | |
| 1b⁵³ | Methyl | H | SO₃H | SO₃H | H | Methyl | | | | |
| 1b⁵⁴ | OMe | H | SO₃H | SO₃H | H | OMe | | | | |
| 1b⁵⁵ | F | H | SO₃H | SO₃H | H | F | | | | |
| 1b⁵⁶ | H | SO₃H | H | H | SO₃H | H | 6-SO₃H | H | Methyl | 3-Fluorophenyl |
| 1b⁵⁷ | H | H | SO₃H | SO₃H | H | H | | | | |
| 1b⁵⁸ | Methyl | H | SO₃H | SO₃H | H | Methyl | | | | |
| 1b⁵⁹ | OMe | H | SO₃H | SO₃H | H | OMe | | | | |
| 1b⁶⁰ | F | H | SO₃H | SO₃H | H | F | | | | |
| 1b⁶¹ | H | SO₃H | H | H | SO₃H | H | 6-SO₃H | H | Methyl | 4-Fluorophenyl |
| 1b⁶² | H | H | SO₃H | SO₃H | H | H | | | | |
| 1b⁶³ | Methyl | H | SO₃H | SO₃H | H | Methyl | | | | |
| 1b⁶⁴ | OMe | H | SO₃H | SO₃H | H | OMe | | | | |
| 1b⁶⁵ | F | H | SO₃H | SO₃H | H | F | | | | |
| 1b⁶⁶ | H | SO₃H | H | H | SO₃H | H | 6-SO₃H | H | Methyl | 3-Phenyl sulfonamide |
| 1b⁶⁷ | H | H | SO₃H | SO₃H | H | H | | | | |
| 1b⁶⁸ | Methyl | H | SO₃H | SO₃H | H | Methyl | | | | |
| 1b⁶⁹ | OMe | H | SO₃H | SO₃H | H | OMe | | | | |
| 1b⁷⁰ | F | H | SO₃H | SO₃H | H | F | | | | |
| 1b⁷¹ | H | SO₃H | H | H | SO₃H | H | 6-SO₃H | H | Methyl | 2-Aminophenyl |
| 1b⁷² | H | H | SO₃H | SO₃H | H | H | | | | |
| 1b⁷³ | Methyl | H | SO₃H | SO₃H | H | Methyl | | | | |
| 1b⁷⁴ | OMe | H | SO₃H | SO₃H | H | OMe | | | | |
| 1b⁷⁵ | F | H | SO₃H | SO₃H | H | F | | | | |
| 1b⁷⁶ | H | SO₃H | H | H | SO₃H | H | 6-SO₃H | H | Methyl | 3-Aminophenyl |
| 1b⁷⁷ | H | H | SO₃H | SO₃H | H | H | | | | |
| 1b⁷⁸ | Methyl | H | SO₃H | SO₃H | H | Methyl | | | | |
| 1b⁷⁹ | OMe | H | SO₃H | SO₃H | H | OMe | | | | |
| 1b⁸⁰ | F | H | SO₃H | SO₃H | H | F | | | | |
| 1b⁸¹ | H | SO₃H | H | H | SO₃H | H | 6-SO₃H | H | Methyl | 4-Aminophenyl |
| 1b⁸² | H | H | SO₃H | SO₃H | H | H | | | | |
| 1b⁸³ | Methyl | H | SO₃H | SO₃H | H | Methyl | | | | |
| 1b⁸⁴ | OMe | H | SO₃H | SO₃H | H | OMe | | | | |
| 1b⁸⁵ | F | H | SO₃H | SO₃H | H | F | | | | |
| 1b⁸⁶ | H | SO₃H | H | H | SO₃H | H | 7-SO₃H | H | Methyl | Phenyl |
| 1b⁸⁷ | H | H | SO₃H | SO₃H | H | H | | | | |
| 1b⁸⁸ | Methyl | H | SO₃H | SO₃H | H | Methyl | | | | |
| 1b⁸⁹ | OMe | H | SO₃H | SO₃H | H | OMe | | | | |
| 1b⁹⁰ | F | H | SO₃H | SO₃H | H | F | | | | |
| 1b⁹¹ | H | SO₃H | H | H | SO₃H | H | 7-SO₃H | H | Methyl | 3-Methyl phenyl |
| 1b⁹² | H | H | SO₃H | SO₃H | H | H | | | | |
| 1b⁹³ | Methyl | H | SO₃H | SO₃H | H | Methyl | | | | |
| 1b⁹⁴ | OMe | H | SO₃H | SO₃H | H | OMe | | | | |
| 1b⁹⁵ | F | H | SO₃H | SO₃H | H | F | | | | |
| 1b⁹⁶ | H | SO₃H | H | H | SO₃H | H | 7-SO₃H | H | Methyl | 2-Methyl phenyl |
| 1b⁹⁷ | H | H | SO₃H | SO₃H | H | H | | | | |
| 1b⁹⁸ | Methyl | H | SO₃H | SO₃H | H | Methyl | | | | |
| 1b⁹⁹ | OMe | H | SO₃H | SO₃H | H | OMe | | | | |
| 1b¹⁰⁰ | F | H | SO₃H | SO₃H | H | F | | | | |
| 1b¹⁰¹ | H | SO₃H | H | H | SO₃H | H | 7-SO₃H | H | Methyl | 4-Methyl phenyl |
| 1b¹² | H | H | SO₃H | SO₃H | H | H | | | | |
| 1b¹⁰³ | Methyl | H | SO₃H | SO₃H | H | Methyl | | | | |
| 1b¹⁰⁴ | OMe | H | SO₃H | SO₃H | H | OMe | | | | |
| 1b¹⁵ | F | H | SO₃H | SO₃H | H | F | | | | |
| 1b¹⁰⁶ | H | SO₃H | H | H | SO₃H | H | 7-SO₃H | H | Methyl | 2-Methoxy phenyl |
| 1b¹⁰⁷ | H | H | SO₃H | SO₃H | H | H | | | | |
| 1b¹⁰⁸ | Methyl | H | SO₃H | SO₃H | H | Methyl | | | | |
| 1b¹⁰⁹ | OMe | H | SO₃H | SO₃H | H | OMe | | | | |
| 1b¹¹⁰ | F | H | SO₃H | SO₃H | H | F | | | | |
| 1b¹¹¹ | H | SO₃H | H | H | SO₃H | H | 7-SO₃H | H | Methyl | 3-Methoxy phenyl |
| 1b¹¹² | H | H | SO₃H | SO₃H | H | H | | | | |
| 1b¹¹³ | Methyl | H | SO₃H | SO₃H | H | Methyl | | | | |
| 1b¹¹⁴ | OMe | H | SO₃H | SO₃H | H | OMe | | | | |
| 1b¹¹⁵ | F | H | SO₃H | SO₃H | H | F | | | | |
| 1b¹¹⁶ | H | SO₃H | H | H | SO₃H | H | 7-SO₃H | H | Methyl | 4-Methoxy phenyl |
| 1b¹¹⁷ | H | H | SO₃H | SO₃H | H | H | | | | |
| 1b¹¹⁸ | Methyl | H | SO₃H | SO₃H | H | Methyl | | | | |
| 1b¹¹⁹ | OMe | H | SO₃H | SO₃H | H | OMe | | | | |
| 1b¹²⁰ | F | H | SO₃H | SO₃H | H | F | | | | |
| 1b¹²¹ | H | SO₃H | H | H | SO₃H | H | 7-SO₃H | H | Methyl | 2-Chlorophenyl |
| 1b¹²² | H | H | SO₃H | SO₃H | H | H | | | | |
| 1b¹²³ | Methyl | H | SO₃H | SO₃H | H | Methyl | | | | |
| 1b¹²⁴ | OMe | H | SO₃H | SO₃H | H | OMe | | | | |
| 1b¹²⁵ | F | H | SO₃H | SO₃H | H | F | | | | |
| 1b¹²⁶ | H | SO₃H | H | H | SO₃H | H | 7-SO₃H | H | Methyl | 3-Chlorophenyl |
| 1b¹²⁷ | H | H | SO₃H | SO₃H | H | H | | | | |
| 1b¹²⁸ | Methyl | H | SO₃H | SO₃H | H | Methyl | | | | |
| 1b¹²⁹ | OMe | H | SO₃H | SO₃H | H | OMe | | | | |
| 1b¹³⁰ | F | H | SO₃H | SO₃H | H | F | | | | |
| 1b¹³¹ | H | SO₃H | H | H | SO₃H | H | 7-SO₃H | H | Methyl | 4-Chlorophenyl |
| 1b¹³² | H | H | SO₃H | SO₃H | H | H | | | | |
| 1b¹³³ | Methyl | H | SO₃H | SO₃H | H | Methyl | | | | |
| 1b¹³⁴ | OMe | H | SO₃H | SO₃H | H | OMe | | | | |
| 1b¹³⁵ | F | H | SO₃H | SO₃H | H | F | | | | |
| 1b¹³⁶ | H | SO₃H | H | H | SO₃H | H | 7-SO₃H | H | Methyl | 2-Fluorophenyl |
| 1b¹³⁷ | H | H | SO₃H | SO₃H | H | H | | | | |
| 1b¹³⁸ | Methyl | H | SO₃H | SO₃H | H | Methyl | | | | |
| 1b¹³⁹ | OMe | H | SO₃H | SO₃H | H | OMe | | | | |
| 1b¹⁴⁰ | F | H | SO₃H | SO₃H | H | F | | | | |
| 1b¹⁴¹ | H | SO₃H | H | H | SO₃H | H | 7-SO₃H | H | Methyl | 3-Fluorophenyl |
| 1b¹⁴² | H | H | SO₃H | SO₃H | H | H | | | | |
| 1b¹⁴³ | Methyl | H | SO₃H | SO₃H | H | Methyl | | | | |
| 1b¹⁴⁴ | OMe | H | SO₃H | SO₃H | H | OMe | | | | |
| 1b¹⁴⁵ | F | H | SO₃H | SO₃H | H | F | | | | |
| 1b¹⁴⁶ | H | SO₃H | H | H | SO₃H | H | 7-SO₃H | H | Methyl | 4-Fluorophenyl |
| 1b¹⁴⁷ | H | H | SO₃H | SO₃H | H | H | | | | |
| 1b¹⁴⁸ | Methyl | H | SO₃H | SO₃H | H | Methyl | | | | |
| 1b¹⁴⁹ | OMe | H | SO₃H | SO₃H | H | OMe | | | | |
| 1b¹⁵⁰ | F | H | SO₃H | SO₃H | H | F | | | | |
| 1b¹⁵¹ | H | SO₃H | H | H | SO₃H | H | 7-SO₃H | H | Methyl | 3-Phenyl sulfonamide |
| 1b¹⁵² | H | H | SO₃H | SO₃H | H | H | | | | |
| 1b¹⁵³ | Methyl | H | SO₃H | SO₃H | H | Methyl | | | | |
| 1b¹⁵⁴ | OMe | H | SO₃H | SO₃H | H | OMe | | | | |
| 1b¹⁵⁵ | F | H | SO₃H | SO₃H | H | F | | | | |
| 1b¹⁵⁶ | H | SO₃H | H | H | SO₃H | H | 7-SO₃H | H | Methyl | 2-Aminophenyl |
| 1b¹⁵⁷ | H | H | SO₃H | SO₃H | H | H | | | | |
| 1b¹⁵⁸ | Methyl | H | SO₃H | SO₃H | H | Methyl | | | | |
| 1b¹⁵⁹ | OMe | H | SO₃H | SO₃H | H | OMe | | | | |
| 1b¹⁶⁰ | F | H | SO₃H | SO₃H | H | F | | | | |
| 1b¹⁶¹ | H | SO₃H | H | H | SO₃H | H | 7-SO₃H | H | Methyl | 3-Aminophenyl |
| 1b¹⁶² | H | H | SO₃H | SO₃H | H | H | | | | |
| 1b¹⁶³ | Methyl | H | SO₃H | SO₃H | H | Methyl | | | | |
| 1b¹⁶⁴ | OMe | H | SO₃H | SO₃H | H | OMe | | | | |
| 1b¹⁶⁵ | F | H | SO₃H | SO₃H | H | F | | | | |
| 1b¹⁶⁶ | H | SO₃H | H | H | SO₃H | H | 7-SO₃H | H | Methyl | 4-Aminophenyl |
| 1b¹⁶⁷ | H | H | SO₃H | SO₃H | H | H | | | | |
| 1b¹⁶⁸ | Methyl | H | SO₃H | SO₃H | H | Methyl | | | | |
| 1b¹⁶⁹ | OMe | H | SO₃H | SO₃H | H | OMe | | | | |
| 1b¹⁷⁰ | F | H | SO₃H | SO₃H | H | F | | | | |

The present invention also provides a process for the production of dyes according to formula (1) and tautomers and/or mixtures thereof comprising
a) diazotization of a compound of the formula (2) 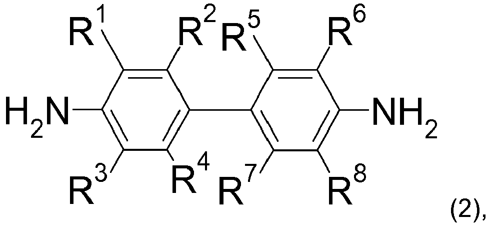 wherein R¹ to R⁸ are defined as given above,
b) reacting the corresponding diazonium salt obtained in step a) with compounds of formula (3) and (4) in stoichiometric amounts 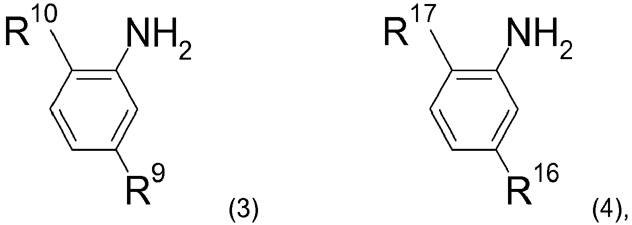 wherein R⁹ to R¹², R¹⁶ and R¹⁷ are defined as given above, to give an intermediate of formula (5) 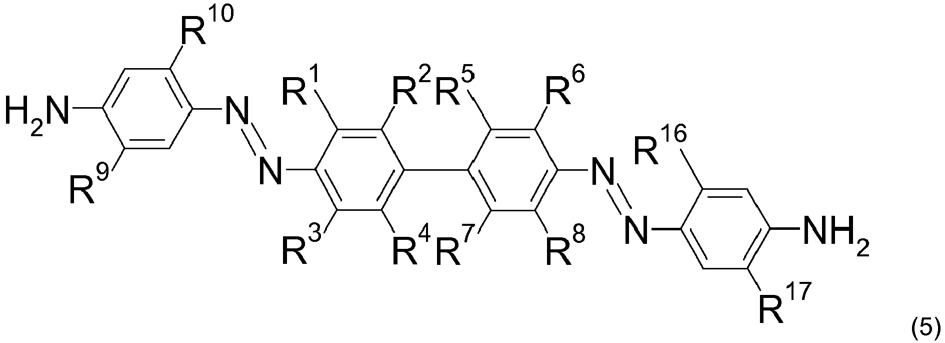
c) diazotization of the compound of the formula (5) and
d) reacting the corresponding diazonium salts obtained in step c) with the compounds of formula (6) and (7) or mixtures thereof in stoichiometric amounts 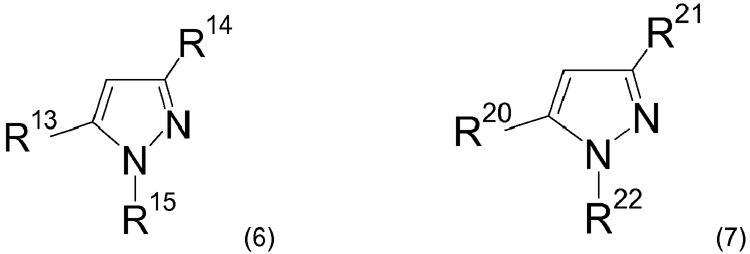
wherein R¹³ to R¹⁵ and R²⁰ to R²² are defined as given above.

The diazotization of the compound of the formula (2) and (5), respectively can be performed by means of diazotization methods that are known to a person skilled in the art, preferably by using sodium nitrite or nitrosylsulfuric acid in acidic medium using inorganic acids such as hydrochloric acid, sulfuric acid or phosphoric acid or mixtures thereof or organic acids such as acetic acid or propionic acid or mixtures thereof. Also mixtures of inorganic acid with organic acids can be used advantageously.

The coupling reaction of the diazonium salts obtained by diazotization of the compound of the formula (2) onto the compounds of formulae (3) and (4) as well as the coupling reaction of the diazonium salts obtained by diazotization of the compound of the formula (5) onto the compounds of formulae (6) and (7) can likewise be performed by known methods.

The compounds of the formula (2) are known and commercially available or can be synthesised by means of common chemical reactions known to a person skilled in the art such as the methods disclosed in US 5,728,874 or DE172106.

The pyrazoles of formula (6) and (7) in which R¹⁴ and R¹⁷ are methyl are commercially available or can be synthesized via methods disclosed in the literature such as US 6,338,741. Through analogy, all the pyrazolones that are used in this invention can be synthesized with the protocol.

The dyes of the present invention are suitable for dyeing and printing of natural, manufactured regenerated, modified or synthetic hydroxyl- amino-, and/or carboxamido-containing fiber materials and their blends by the application methods numerously described in the art for acid dyes. Therefore, the present invention also provides for a process for dyeing and printing of the above-mentioned fiber materials and their blends in which a dye or a dye mixture according to the present invention is used.

Examples of natural fibre materials as described above are vegetable fibres such as seed fibres i.e. cotton, kapok, coir from coconut husk, bast fibers i.e. cotton, flax, hemp, jute, kenaf, ramie, rattan, leaf fibres i.e. sisal, henequen, banana, stalk fibres i.e. bamboo, and fibres from animals such as wool, silk, cashmere wool, alpaca fiber, mohair, Angora fibre as well as fur and leather materials.

Examples of manufactured and manufactured regenerated fibres are cellulosic fibres such as paper and cellulosic regenerated fibres such as viscose rayon fibres, acetate and triacetate fibers and Lyocell fibers.

Examples of synthetic fiber materials as described above are nylon materials, like nylon-6 and nylon-6.6 and aramid fibres.

The above-mentioned substrates to be dyed can be present in various forms such as but not limited to yarn, woven fabric, loop-formingly knitted fabric or carpet.

The dyes of the present invention and their salts or mixtures can be used as a single dyeing colorant in dyeing or printing processes or it can be part of a di-/tri- or multi-component combination colorant in dyeing or in printing compositions. The di-/tri- or multi-component shade dyeings show similar fastness level as compared to dyeing performed with a single colorant component.

Dyes of this invention and their salts or mixtures are highly compatible with other known and/or commercially available acid dyes and they can be used together with such dyes of related chromophores and similar technical performance to obtain specific hues. Similar technical performance includes, comparable build-up, comparable fastness properties and comparable exhaustion rates during dyeings. The dyes of the present invention can also be used in digital printing processes, in particular in digital textile printing. Aqueous inks for digital printing which comprise a dye of the present invention likewise form part of the subject matter of the present invention.

The inks of the present invention comprise the dye of the present invention in amounts which preferably range from 0.1 % by weight to 50 % by weight, more preferably from 0.5 % by weight to 30 % by weight and most preferably from 1 % by weight to 15 % by weight, based on the total weight of the ink.

The inks, as well as the dye of the present invention, may if desired contain further dyes used in digital printing.

For the inks of the present invention to be used in the continuous flow process, a conductivity of 0.5 to 25 mS/m can be set by adding an electrolyte. Useful electrolytes include for example lithium nitrate and potassium nitrate. The inks of the present invention may include organic solvents at a total level of 1 to 50 % and preferably 5 to 30 % by weight. Suitable organic solvents are for example alcohols, for example methanol, ethanol, 1-propanol, isopropanol, 1-butanol, tert-butanol, pentyl alcohol, polyhydric alcohols for example: 1,2-ethanediol, 1,2,3-propanetriol, butanediol, 1,3-butanediol, 1,4-butanediol, 1,2-propanediol, 2,3-propanediol, pentanediol, 1,4-pentanediol, 1,5-pentanediol, hexanediol, D,L-1,2-hexanediol, 1,6-hexanediol, 1,2,6-hexanetriol, 1,2-octanediol, polyalkylene glycols, for example: polyethylene glycol, polypropylene glycol, alkylene glycols having 1 to 8 alkylene groups, for example: monoethylene glycol, diethylene glycol, triethylene glycol, tetraethylene glycol, thioglycol, thiodiglycol, butyltriglycol, hexylene glycol, propylene glycol, dipropylene glycol, tripropylene glycol, low alkyl ethers of polyhydric alcohols, for example: ethylene glycol monomethyl ether, ethylene glycol monoethyl ether, ethylene glycol monobutyl ether, diethylene glycol monomethyl ether, diethylene glycol monoethyl ether, diethylene glycol monobutyl ether, diethylene glycol monohexyl ether, triethylene glycol monomethyl ether, triethylene glycol monobutyl ether, tripropylene glycol monomethyl ether, tetraethylene glycol monomethyl ether, tetraethylene glycol monobutyl ether, tetraethylene glycol dimethyl ether, propylene glycol monomethyl ether, propylene glycol monoethyl ether, propylene glycol monobutyl ether, tripropylene glycol isopropyl ether, polyalkylene glycol ethers, such as for example: polyethylene glycol monomethyl ether, polypropylene glycol glycerol ether, polyethylene glycol tridecyl ether, polyethylene glycol nonylphenyl ether, amines, such as for example: methylamine, ethylamine, triethylamine, diethylamine, dimethylamine, trimethylamine, dibutylamine, diethanolamine, triethanolamine, N-acetylethanolamine, N-formylethanolamine, ethylenediamine, urea derivatives, such as for example: urea, thiourea, N-methylurea, N,N'-epsilon dimethylurea, ethyleneurea, 1,1,3,3-tetramethylurea, amides, such as for example: dimethylformamide, dimethylacetamide, acetamide, ketones or keto alcohols, such as for example: acetone, diacetone alcohol, cyclic ethers, such as for example: tetrahydrofuran, trimethylolethane, trimethylolpropane, 2-butoxyethanol, benzyl alcohol, 2-butoxyethanol, gamma butyrolactone, epsilon-caprolactam, further sulfolane, dimethylsulfolane, methylsulfolane, 2,4-dimethylsulfolane, dimethyl sulfone, butadiene sulfone, dimethyl sulfoxide, dibutyl sulfoxide, N-cyclohexylpyrrolidone, N-methyl-2-pyrrolidone, N-ethylpyrrolidone, 2-pyrrolidone, 1-(2-hydroxyethyl)-2-pyrrolidone, 1-(3-hydroxypropyl)-2-pyrrolidone, 1,3-dimethyl-2-imidazolidinone, 1,3-dimethyl-2-imidazolinone, 1,3-bismethoxymethylimidazolidine, 2-(2-methoxyethoxy)ethanol, 2-(2-ethoxyethoxy)ethanol, 2-(2-butoxyethoxy)ethanol, 2-(2-propoxyethoxy)ethanol, pyridine, piperidine, butyrolactone, trimethylpropane, 1,2-dimethoxypropane, dioxane ethyl acetate, ethylenediaminetetraacetate ethyl pentyl ether, 1,2-dimethoxypropane and trimethylpropane.

The inks of the invention may further include customary additives, for example viscosity moderators to set viscosities in the range from 1.5 to 40.0 mPas in a temperature range from 20 to 50 °C. Preferred inks have a viscosity of 1.5 to 20 mPas and particularly preferred inks have a viscosity of 1.5 to 15 mPas.

Useful viscosity moderators include rheological additives, for example: polyvinylcaprolactam, polyvinylpyrrolidone and their copolymers polyetherpolyol, associative thickeners, polyurea, polyurethane, sodium alginates, modified galactomannans, polyetherurea, polyurethane and nonionic cellulose ethers.

As further additives the inks of the invention may include surface-active substances to set surface tensions of 20 to 65 mN/m, which are adapted if necessary as a function of the process used (thermal or piezo technology). Useful surface-active substances include for example all surfactants, preferably nonionic surfactants, butyldiglycol and 1,2-hexanediol.

The inks of the present invention may further include customary additives, for example substances to inhibit fungal and bacterial growth in amounts from 0.01 to 1 % by weight based on the total weight of the ink.

The inks may be prepared in a conventional manner by mixing the components in water.

The inks of the present invention are particularly useful in inkjet printing processes for printing a wide variety of materials, in particular of wool and polyamide fibers.

The examples below serve to illustrate the invention. Parts and percentages are by weight unless noted otherwise. The relationship between parts by weight and parts by volume is that of the kilogram to the liter.

### Example 1

8.62 g of 4,4'-Diamino-biphenyl-2,2'-disulfonic acid were first dissolved in water at slightly acidic pH to give a complete solution. Ice was added to the solution and when the temperature reached 10 to 15 °C, 10.6 ml of 5N of sodium nitrite solution were added dropwise. The reaction mixture was further cooled down to 0 to 8 °C when the mixture was added dropwise into 12.38 g of concentrated HCl with 12 g of ice. Yellow suspension formed and reaction mixture was completed within an hour.

6.30 g of 2,5-Dimethyl-phenylamine were added directly into the diazo suspension and stirred. A violet precipitate was observed upon addition. The intermediate precipitate, 4,4'-Bis-(4-amino-2,5-dimethyl-phenylazo)-biphenyl-2,2'-disulfonic acid obtained was filtered off with suction and washed with organic solvent and dried.

15.22 g of the dried intermediate, 4,4'-Bis-(4-amino-2,5-dimethyl-phenylazo)-biphenyl-2,2'-disulfonic acid, were then dissolved in water at slightly acidic pH to give a complete reddish orange solution. Ice was added to the solution and when temperature reached 10 to 15 °C, 10.1ml of 5N of sodium nitrite solution were added dropwise. The reaction mixture was further cooled down to 0 to 8 °C when the mixture was added dropwise into concentrated HCl with ice. Violet suspension was formed and reaction mixture was completed in 90 mins.

The obtained reaction mixture was used in the next step as described below:
5-Methyl-2-phenyl-2H-pyrazol-3-ol was stirred in methanol and adjusted to slightly acidic. The reaction mixture was added dropwise into the methanol solution and
stirred. Brilliant orange precipitate was observed upon addition. Precipitate obtained was filtered off with suction and washed with brine giving product of the formula 1a⁴⁸³. The analytic data are consistent with the assigned structure for product 1a⁴⁸³.
The product dyes the targeted fibre materials in brilliant orange shades.

Through analogy, all the dyes of formulae (1a¹-1a⁸³³) can be synthesized according to the method described above.

### Dyeing example 1

1 part of the dye 1a⁴⁸³ of this invention was dissolved in 2000 parts of water and 1 part of levelling assistant (based on condensation product of a higher aliphatic amine and ethylene oxide) and 6 parts of sodium acetate were added. The pH was then adjusted to 5 using acetic acid (80 %). The dyebath was heated to 50 °C for 10 minutes and then entered with 100 parts of a woven polyamide-6 fabric. The temperature was raised to 98 °C over the course of 50 minutes and then dyeing was carried out at this temperature for 60 minutes. This was followed by cooling to 60 °C and removal of the dyed material. The polyamide-6 fabric was washed with hot and cold water, soaped and then spun and dried. The orange dyeings obtained have very good light and wet fastness and also good levelness in the fibre.

### Dyeing example 2

1 part of the dye 1 a⁴⁸³ of this invention was dissolved in 2000 parts of water and 1 part of levelling assistant (based on condensation product of a higher aliphatic amine and ethylene oxide) and 6 parts of sodium acetate are added. The pH was then adjusted to 5.5 using acetic acid (80 %). The dyebath was heated to 50 °C for 10 minutes and then entered with 100 parts of a woven polyamide-6,6 fabric. The temperature was raised to 120 °C over the course of 50 minutes and then dyeing is carried out at this temperature for 60 minutes. This was followed by cooling to 60 °C and removal of the dyed material. The polyamide-6,6 fabric was washed with hot and cold water, soaped and then spun and dried.

The orange dyeings obtained have very good light and wet fastness and also good levelness in the fibre.

### Dyeing example 3

100 parts of polyamide-6 material were padded with a 1000 parts 50 °C liquor solution that consisted of 40 parts of the dye 1a⁴⁸³, 100 parts of urea, 20 parts of a non ionic solubilizer based on butyldiglycol, 20 parts of acetic acid to adjust the pH to 4.0, 10 parts of levelling assistant (based on ethoxylated aminopropyl fatty acid amide) and 810 parts of water. The material was rolled up and placed into a steaming chamber at 85 °C to 98 °C for 3 to 6 hours. After fixation, the fabric was washed with hot and cold water, soaped and then spun and dried.

The orange dyeings obtained have very good light and wet fastness and also good levelness in the fibre.

### Dyeing example 4

1 part of the dye 1a⁴⁸³ of this invention was dissolved in 2000 parts of water and 5 parts of sodium sulphate, and 1 part of levelling assistant (based on condensation product of a higher aliphatic amine and ethylene oxide) and 5 parts of sodium acetate were added. The pH is then adjusted to 4.5 using acetic acid (80 %). The dyebath was heated to 50 °C for 10 minutes and then entered with 100 parts of a woven wool fabric. The temperature was raised to 100 °C over the course of 50 minutes and then dyeing was carried out at this temperature for 60 minutes. This was followed by cooling to 90 °C and removal of the dyed material. The wool fabric was washed with hot and cold water, soaped and then spun and dried. The orange dyeings obtained have very good light and wet fastness and also good levelness in the fibre.

### Dyeing example 5

1 part of the dye 1 a⁴⁸³ of this invention was dissolved in 1000 parts of soft water and 7.5 parts of sodium sulphate, and 1 parts of a wetting agent (anionic) were added. 100 part of bleached cotton knitted fabric were added to this solution. The dye bath was then heated up to 98 °C with a gradient of 2 °C/min then dyeing was carried out at this temperature for 60 minutes. This was followed by cooling down to 80 °C. At 80 °C the dyeing was continued for another 20 minutes. The dyed material was then removed and was washed with hot and cold water, soaped and then spun and dried. The orange dyeings obtained have very good light and wet fastness and also good levelness in the fibre.

### Example 6 - Preparation of Ink

3 parts of the dye 1 a⁴⁸³ of this invention dissolved in 82 parts of deionized water were added into the dyebath with 15 parts of diethylene glycol at 60 °C. On cooling, a yellow printing ink was obtained. The orange printing ink can be used for ink jet printing on paper, polyamide or wool textiles.

### Dyeing example 7 - Paper

4 parts of chemically bleached (pine wood) sulphite pulp was mixed up with 100 parts of 55 °C water. 1 part of the dye 1 a⁴⁸³ of this invention was dissolved in 100 parts of hot water. 80 parts of this solution were given to the mixed-up pulp and mixed for 2 minutes. After that the mixture was sized with resin size in a conventional manner and mixed for another 2 minutes. 55 parts of this solution were then diluted with 2000 parts of cold water and the paper was produced out of this solution. The orange paper produced from the mixture has good wet fastnesses.

## Claims

1. Dyes of formula (1) 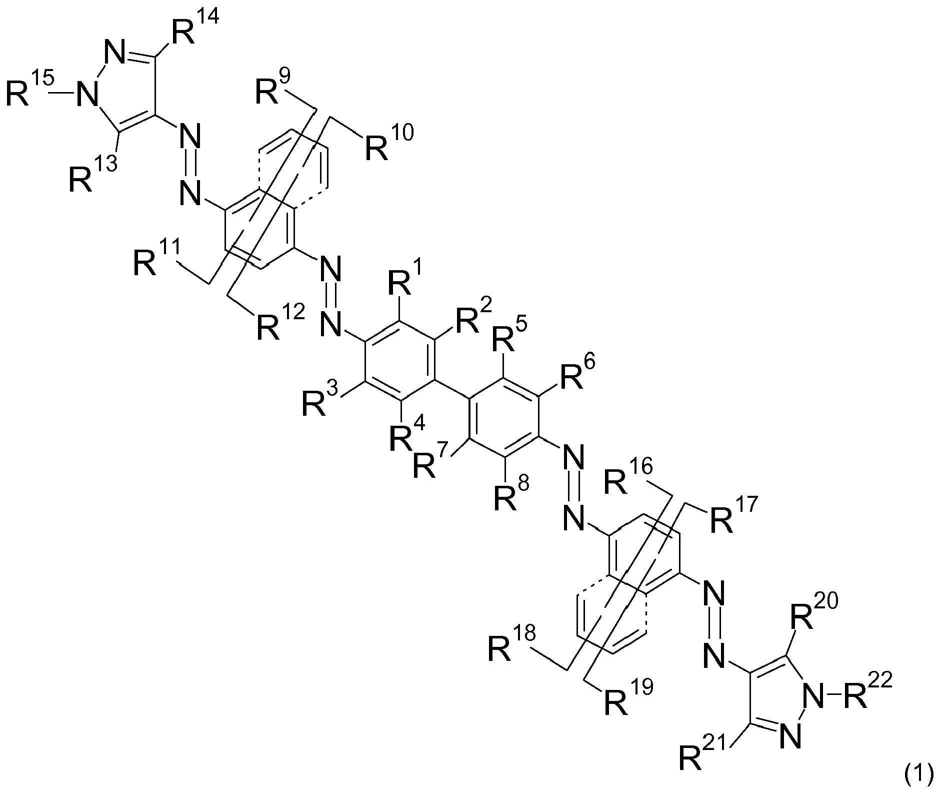 wherein
R¹, R², R³, R⁴, R⁵, R⁶, R⁷ and R⁸ independent of each other is hydrogen, alkyl, alkoxy, halogen, trifluoromethyl or SO₃M - wherby at least two of them are SO₃M,
R⁹, R¹⁰, R¹¹, R¹², R¹⁶, R¹⁷, R¹⁸ and R¹⁹ independent of each other is hydrogen, alkyl, alkyl substituted, alkyl chain interrupted by one or two heteroatoms, alkoxy, alkoxy substituted, halogen, trifluoromethyl, cycloalkyl, heterocycloalkyl, cyano, acyloxy, alkylcarbonyl, acylamino, alkylsulfonylamino, amino, monoalkyl-amino, monocycloalkyl-amino, dialkyl-amino, di(cyclo)alkyl-amino, alkylthio, alkylsulfonyl, alkoxycarbonyl, carbamoyl, sulfamoyl, ureido, SO₃M or alkylureido,
R¹³ and R²⁰ independent of each other is hydroxyl,
R¹⁴ and R²¹ independent of each other is hydrogen, alkyl, cycloalkyl, trifluoromethyl, alkoxy, cyano, carbamoyl, alkoxycarbonyl, COOM, amino, hydroxyl, monocycloalkyl-amino, monoalkyl-amino, di(cyclo)alkyl-amino, dialkyl-amino, monoaryl-amino, diaryl-amino, monocycloalkylmonoarylamino, monoalkyl monoaryl amino, alkylthio, arylthio, alkylcarbonyl, alkylsulfonyl
or
alkyl substituted by one or more substituents selected from the group consisting of hydroxy, cycloalkyl, heteroaryl, heterocycloalkyl, aryl, aryloxy, alkoxy, alkylthio, arylthio, halogen, cyano, COOM, alkoxycarbonyl, acyloxy, carbamoyl, nitro, amino, acylamino, arylcarbonylamino, alkylsulfonylamino, arylsulfonylamino, ureido, alkylureido and phenylureido,
R¹⁵ and R²² independent of each other is hydrogen, alkyl, hydroxyalkyl, alkoxy, alkenyl, cycloalkyl, aryl, heteroaryl, heterocycloalkyl, carbamoyl, alkylureido, phenylureido, hydroxyakylsulfonylalkyl, aminoalkyl, amino-hydroxy-alkyl, alkoxyalkylaminoalkyl, thioalkoxyalkyl-aminoalkyl, aminoalkyloxyalkyl, aminoalkylthioxyalkyl, cycloalkylalkyl, aryloxyalkyl, arylthioxyalkyl, heteroarylalkyl, heterocycloalkylalkyl
or
alkyl interrupted by one or more heteroatoms selected from the group consisting of oxygen and sulfur
or
alkyl substituted by one or more substituents selected from the group consisting of hydroxy, aryl, cycloalkyl, alkoxy, thioalkoxy, amino, N-monoalkyl-amino, N,N-dialkyl-amino, N-monoaryl-amino, N,N-diaryl-amino, N-alkyl-N-aryl-amino, N-monocycloalkyl-amino, N,N-dicycloalkyl-amino, N-monoalkyl-monocycloalkyl-amino, N,N-monoaryl-monocycloalkyl-amino, N-acylamino, N-alkylsulfonyl-amino, ureido, alkylureido, phenyilureido, halogen, cyano, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy, aryloyloxy, carbamoyl, N-monocycloalkyl-carbamoyl, N-monoalkyl-carbamoyl, N,N-dicycloalkyl-carbamoyl, N,N-dialkyl-carbamoyl, N-monoaryl-carbamoyl, N,N-diaryl-carbamoyl, N-monocycloalkyl-N-monoarylcarbamoyl, N-monoalkyl-N-monoaryl-carbamoyl, sulfamoyl, N-monocycloalkyl-sulfamoyl, N-monoalkyl-sulfamoyl, N,N-dicycloalkyl-sulfamoyl, N,N-dialkyl-sulfamoyl, N-monoaryl-sulfamoyl, N,N-diaryl-sulfamoyl, N-monocycloalkyl-N-monoarylsulfamoyl, N-monoalkyl-N-monoarylsulfamoyl and SO₃M
or
alkyl interrupted by one or more heteroatoms selected from the group consisting of oxygen and sulphur and substituted by one or more substituents selected from the group consisting of hydroxy, aryl, cycloalkyl, alkoxy, thioalkoxy, amino, N-monoalkyl-amino, N,N-dialkyl-amino, N-monoaryl-amino, N,N-diaryl-amino, N-alkyl-N-aryl-amino, N-monocycloalkyl-amino, N,N-dicycloalkyl-amino, N-monoalkyl-monocycloalkyl-amino, N,N-monoaryl-monocycloalkyl-amino, N-acylamino, N-alkylsulfonyl-amino, ureido, alkylureido, phenylureido, halogen, cyano, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy, aryloyloxy, carbamoyl, N-monocycloalkyl-carbamoyl, N-monoalkyl-carbamoyl, N,N-dicycloalkyl-carbamoyl, N,N-dialkyl-carbamoyl, N-monoaryl-carbamoyl, N,N-diaryl-carbamoyl, N-monocycloalkyl-N-monoarylcarbamoyl, N-monoalkyl-N-monoaryl-carbamoyl, sulfamoyl, N-monocycloalkyl-sulfamoyl, N-monoalkyl-sulfamoyl, N,N-dicycloalkyl-sulfamoyl, N,N-dialkyl-sulfamoyl, N-monoaryl-sulfamoyl, N,N-diaryl-sulfamoyl, N-monocycloalkyl-N-monoarylsulfamoyl, N-monoalkyl-N-monoarylsulfamoyl and SO₃M
or
aryl substituted by one or more substituents selected from the group consisting of hydroxy, aryl, cycloalkyl, alkoxy, thioalkoxy, amino, N-monoalkyl-amino, N,N-dialkyl-amino, N-monoaryl-amino, N,N-diaryl-amino, N-alkyl-N-aryl-amino, N-monocycloalkyl-amino, N,N-dicycloalkyl-amino, N-monoalkyl-monocyclo-alkyl-amino, N,N-monoaryl-monocycloalkyl-amino, N-acylamino, N-alkylsulfonyl-amino, ureido, alkylureido, phenylureido, halogen, cyano, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy, aryloyloxy, carbamoyl, N-monocycloalkyl-carbamoyl, N-monoalkyl-carbamoyl, N,N-dicycloalkyl-carbamoyl, N,N-dialkyl-carbamoyl, N-monoaryl-carbamoyl, N,N-diaryl-carbamoyl, N-monocycloalkyl-N-monoarylcarbamoyl, N-monoalkyl-N-monoaryl-carbamoyl, sulfamoyl, N-monocycloalkyl-sulfamoyl, N-monoalkyl-sulfamoyl, N,N-dicycloalkyl-sulfamoyl, N,N-dialkyl-sulfamoyl, N-monoaryl-sulfamoyl, N,N-diaryl-sulfamoyl, N-monocycloalkyl-N-monoarylsulfamoyl, N-monoalkyl-N-monoarylsulfamoyl and SO₃M,
M is hydrogen, an alkali metal, ammonium, one equivalent of an alkali earth metal or a monovalent organic cation,
and
the dyes of formula (1) have two to six sulfonic acid groups.

2. Dyes according to claim 1 having formula (1 a): 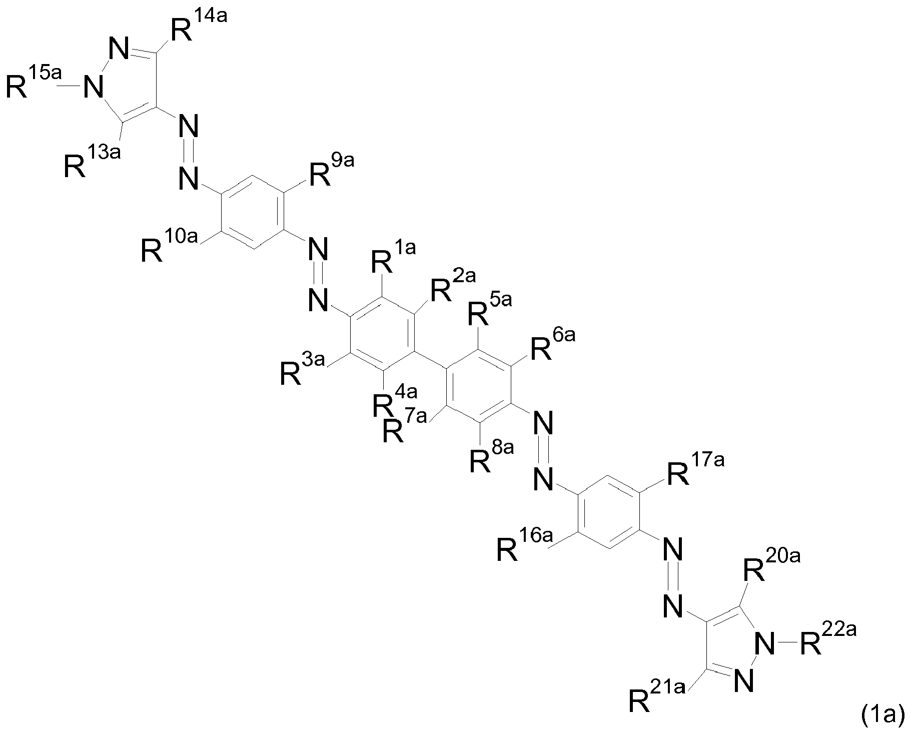 wherein
R^{1a}, R^{2a}, R^{3a}, R^{4a}, R^{5a} , R^{6a} , R^{7a} and R^{8a} independent of each other is hydrogen, alkyl, alkoxy, halogen, trifluoromethyl or SO₃M - whereby at least two of them are SO₃M,
R^{9a} , R^{10a}, R^{16a} and R^{17a} independent of each other is hydrogen, alkyl, substituted alkyl, alkyl chain interrupted by one or two heteroatoms, alkoxy, alkoxy substituted, halogen ,trifluoromethyl, cycloalkyl, heterocycloalkyl, cyano, acyloxy, alkylcarbonyl, acylamino, alkylsulfonylamino, amino, monoalkyl-amino, monocycloalkyl-amino, dialkyl-amino, di(cyclo)alkyl-amino, alkylthio, alkylsulfonyl, alkoxycarbonyl, carbamoyl, sulfamoyl, ureido, SO₃M or alkylureido,
R^{13a} and R^{20a} is hydroxyl,
R^{14a} and R^{21a} independent of each other is hydrogen, alkyl, cycloalkyl, trifluoromethyl, alkoxy, cyano, carbamoyl, alkoxycarbonyl, COOM, amino,
hydroxyl, monocycloalkyl-amino, monoalkyl-amino, di(cyclo)alkyl-amino, dialkyl-amino, monoaryl-amino, diaryl-amino, monocycloalkylmonoarylamino, monoalkyl monoaryl amino, alkylthio, arylthio, alkylcarbonyl, alkylsulfonyl
or
is alkyl substituted by one or more substituents selected from the group consisting of hydroxy, cycloalkyl, heteroaryl, heterocycloalkyl, aryl, aryloxy, alkoxy, alkylthio, arylthio, halogen, cyano, COOM, alkoxycarbonyl, acyloxy, carbamoyl, nitro, amino, acylamino, arylcarbonylamino, alkylsulfonylamino, arylsulfonylamino, ureido, alkylureido and phenylureido,
R^{15a} and R^{22a} independent of one another is hydrogen, alkyl, hydroxyalkyl, alkoxy, alkenyl, cycloalkyl, aryl, heteroaryl, heterocycloalkyl, carbamoyl, alkylureido, phenylureido, hydroxyakylsulfonylalkyl, aminoalkyl, amino-hydroxy-alkyl, alkoxyalkylaminoalkyl, thioalkoxyalkyl-aminoalkyl, aminoalkyloxyalkyl, aminoalkylthioxyalkyl, cycloalkylalkyl, aryloxyalkyl, arylthioxyalkyl, heteroarylalkyl, heterocycloalkylalkyl,
or
alkyl interrupted by one or more heteroatoms selected from the group consisting of oxygen and sulfur
or
alkyl substituted by one or more substituents selected from the group consisting of hydroxy, aryl, cycloalkyl, alkoxy, thioalkoxy, amino, N-monoalkyl-amino, N,N-dialkyl-amino, N-monoaryl-amino, N,N-diaryl-amino, N-alkyl-N-aryl-amino, N-monocycloalkyl-amino, N,N-dicycloalkyl-amino, N-monoalkyl-monocycloalkyl-amino, N,N-monoaryl-monocycloalkyl-amino, N-acylamino, N-alkylsulfonyl-amino, ureido, alkylureido, phenyilureido, halogen, cyano, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy, aryloyloxy, carbamoyl, N-monocycloalkyl-carbamoyl, N-monoalkyl-carbamoyl, N,N-dicycloalkyl-carbamoyl, N,N-dialkyl-carbamoyl, N-monoaryl-carbamoyl, N,N-diaryl-carbamoyl, N-monocycloalkyl-N-monoarylcarbamoyl, N-monoalkyl-N-monoaryl-carbamoyl, sulfamoyl, N-monocycloalkyl-sulfamoyl, N-monoalkyl-sulfamoyl, N,N-dicycloalkyl-sulfamoyl, N,N-dialkyl-sulfamoyl, N-monoaryl-sulfamoyl, N,N-diaryl-sulfamoyl, N-monocycloalkyl-N-monoarylsulfamoyl, N-monoalkyl-N-monoarylsulfamoyl and SO₃M
or
alkyl interrupted by one or more heteroatoms selected from the group consisting of oxygen and sulfur and substituted by one or more substituents selected from the group consisting of hydroxy, aryl, cycloalkyl, alkoxy, thioalkoxy, amino, N-monoalkyl-amino, N,N-dialkyl-amino, N-monoaryl-amino, N,N-diaryl-amino, N-alkyl-N-aryl-amino, N-monocycloalkyl-amino, N,N-dicycloalkyl-amino, N-monoalkyl-monocycloalkyl-amino, N,N-monoaryl-monocycloalkyl-amino, N-acylamino, N-alkylsulfonyl-amino, ureido, alkylureido, phenylureido, halogen, cyano, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy, aryloyloxy, carbamoyl, N-monocycloalkyl-carbamoyl, N-monoalkyl-carbamoyl, N,N-dicycloalkyl-carbamoyl, N,N-dialkyl-carbamoyl, N-monoaryl-carbamoyl, N,N-diaryl-carbamoyl, N-monocycloalkyl-N-monoarylcarbamoyl, N-monoalkyl-N-monoaryl-carbamoyl, sulfamoyl, N-monocycloalkyl-sulfamoyl, N-monoalkyl-sulfamoyl, N,N-dicycloalkyl-sulfamoyl, N,N-dialkyl-sulfamoyl, N-monoaryl-sulfamoyl, N,N-diaryl-sulfamoyl, N-monocycloalkyl-N-monoarylsulfamoyl, N-monoalkyl-N-monoarylsulfamoyl and SO₃M
or
aryl substituted by one or more substituents selected from the group consisting of hydroxy, aryl, cycloalkyl, alkoxy, thioalkoxy, amino, N-monoalkyl-amino, N,N-dialkyl-amino, N-monoaryl-amino, N,N-diaryl-amino, N-alkyl-N-aryl-amino, N-monocycloalkyl-amino, N,N-dicycloalkyl-amino, N-monoalkyl-monocycloalkyl-amino, N,N-monoaryl-monocycloalkyl-amino, N-acylamino, N-alkylsulfonyl-amino, ureido, alkylureido, phenylureido, halogen, cyano, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy, aryloyloxy, carbamoyl, N-monocycloalkyl-carbamoyl, N-monoalkyl-carbamoyl, N,N-dicycloalkyl-carbamoyl, N,N-dialkyl-carbamoyl, N-monoaryl-carbamoyl, N,N-diaryl-carbamoyl, N-monocycloalkyl-N-monoarylcarbamoyl, N-monoalkyl-N-monoaryl-carbamoyl, sulfamoyl, N-monocycloalkyl-sulfamoyl, N-monoalkyl-sulfamoyl, N,N-dicycloalkyl-sulfamoyl, N,N-dialkyl-sulfamoyl, N-monoaryl-sulfamoyl, N,N-diaryl-sulfamoyl, N-monocycloalkyl-N-monoarylsulfamoyl, N-monoalkyl-N-monoarylsulfamoyl and SO₃M
and
M is hydrogen, an alkali metal, ammonium, one equivalent of an alkali earth metal or a monovalent organic cation.

3. Dyes according to claim 1 or 2 having formula (1 a):
R^{1a}, R^{3a}, R^{4a}, R^{5a} , R^{6a} and R^{8a} independent of each other is SO₃M, hydrogen, alkyl, alkoxy or halogen, whereby at least two of them are SO₃M,
R^{2a} and R^{7a} is hydrogen,
R^{9a}, R^{10a}, R^{16a} and R^{17a} independent of each other is hydrogen, methyl, halogen, -SO₃M or acetylamino,
R^{13a} and R^{20a} is hydroxyl,
R^{14a} and R^{21a} independent of each other is alkyl, cycloalkyl, trifluoromethyl, cyano, carbamoyl, alkoxycarbonyl, COOM, alkylcarbonyl
or
is alkyl substituted by one or more substituents selected from the group consisting of hydroxy, alkoxy, halogen, cyano, COOM, alkoxycarbonyl, acyloxy and carbamoyl,
R^{15a} and R^{22a} independent of each other is methyl, ethyl, n-propyl, n-butyl, n-pentyl, n-hexyl, cyclobutyl, cyclopentyl, cyclohexyl, 2-methylcyclohexyl, 3-methylcyclohexyl, isopropyl, sec-butyl, 2-methylbutyl, 1-ethylproyl, 1,2-dimethylpropyl, tert-butyl, 3-methylbutyl, pentan-2-yl, 2-ethylhexyl, 2,2-dimethylpropyl, phenyl, benzyl, 2-hydroxyethyl, 2-methoxyethyl, 3-methoxypropyl, 2-fluoroethyl, 2-chloroethyl, 3-chloropropyl, 2-ethylhexyl, 6-hydroxy-1-[2-(2-hydroxyethylsulfanyl)-ethyl], 2-(ethylsulfonyl)ethanol, 2-hydroxyethoxypropyl, 2-hydroxyethoxyethyl, 3-(2-phenoxy-ethoxy)-propyl, 3-isopropoxy-propyl, 3-ethoxy-propyl, 3-ethoxybutyl, phenyl, 3-methylphenyl, 2-methylphenyl, 3-methylphenyl, 4-methylphenyl, 2-methoxyphenyl, 3-methoxyphenyl, 4-methoxyphenyl, 2-chlorophenyl, 3-chlorophenyl, 4-chlorophenyl, 2-fluorophenyl, 3-fluorophenyl, 4-fluorophenyl or 3-phenylsulfonamide
and
M is hydrogen, an alkali metal, ammonium, one equivalent of an alkali earth metal or a monovalent organic cation.

4. Dyes according to claim 1 having formula (1 b) 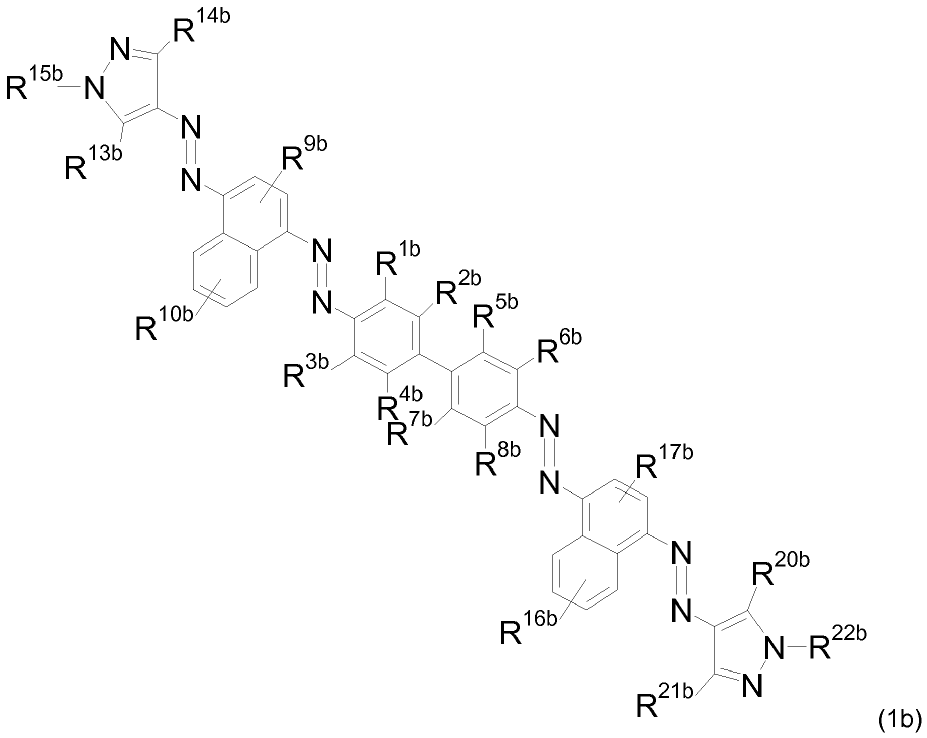 wherein
R^{1b}, R^{2b}, R^{3b}, R^{4b}, R^{5b}, R^{6b}, R^{7b} and R^{8b} independent of each other is hydrogen, alkyl, alkoxy, halogen, trifluoromethyl or SO₃M - whereby at least two of them are SO₃M,
R^{9b} , R^{10b}, R^{16b} and R^{17b} independent of each other is hydrogen, alkyl, alkyl substituted, alkyl chain interrupted by one or two heteroatoms, alkoxy, alkoxy substituted, halogen, trifluoromethyl, cycloalkyl, heterocycloalkyl, cyano, acyloxy, alkylcarbonyl, acylamino, alkylsulfonylamino, amino, monoalkyl-amino, monocycloalkyl-amino, dialkyl-amino, di(cyclo)alkyl-amino, alkylthio, alkylsulfonyl, alkoxycarbonyl, carbamoyl, sulfamoyl, ureido, SO₃M or alkylureido,
R^{13b} and R^{20b} is hydroxyl,
R^{14b} and R^{21b} independent of one each other is hydrogen, alkyl, cycloalkyl, trifluoromethyl, alkoxy, cyano, carbamoyl, alkoxycarbonyl, COOM, amino, hydroxyl, monocycloalkyl-amino, monoalkyl-amino, di(cyclo)alkyl-amino, dialkyl-amino, monoaryl-amino, diaryl-amino, monocycloalkylmonoarylamino, monoalkyl monoaryl amino, alkylthio, arylthio, alkylcarbonyl, alkylsulfonyl
or
is alkyl substituted by one or more substituents selected from the group consisting of hydroxy, cycloalkyl, heteroaryl, heterocycloalkyl, aryl, aryloxy, alkoxy, alkylthio, arylthio, halogen, cyano, COOM, alkoxycarbonyl, acyloxy, carbamoyl, nitro, amino, acylamino, arylcarbonylamino, alkylsulfonylamino, arylsulfonylamino, ureido, alkylureido and phenylureido,
R^{15b} and R^{22b} independent of each other is hydrogen, alkyl, hydroxyalkyl, alkoxy, alkenyl, cycloalkyl, aryl, heteroaryl, heterocycloalkyl, carbamoyl, alkylureido, phenylureido, hydroxyakylsulfonylalkyl, aminoalkyl, amino-hydroxy-alkyl, alkoxyalkylaminoalkyl, thioalkoxyalkyl-aminoalkyl, aminoalkyloxyalkyl, aminoalkylthioxyalkyl, cycloalkylalkyl, aryloxyalkyl, arylthioxyalkyl, heteroarylalkyl, or heterocycloalkylalkyl
or
alkyl interrupted by one or more heteroatoms selected from the Isit consisting of oxygen and sulfur
or
alkyl substituted by one or more substituents selected from the group consisting of hydroxy, aryl, cycloalkyl, alkoxy, thioalkoxy, amino, N-monoalkyl-amino, N,N-dialkyl-amino, N-monoaryl-amino, N,N-diaryl-amino, N-alkyl-N-aryl-amino, N-monocycloalkyl-amino, N,N-dicycloalkyl-amino, N-monoalkyl-monocycloalkyl-amino, N,N-monoaryl-monocycloalkyl-amino, N-acylamino, N-alkylsulfonyl-amino, ureido, alkylureido, phenyilureido, halogen, cyano, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy, aryloyloxy, carbamoyl, N-monocycloalkyl-carbamoyl, N-monoalkyl-carbamoyl, N,N-dicycloalkyl-carbamoyl, N,N-dialkyl-carbamoyl, N-monoaryl-carbamoyl, N,N-diaryl-carbamoyl, N-monocycloalkyl-N-monoarylcarbamoyl, N-monoalkyl-N-monoaryl-carbamoyl, sulfamoyl, N-monocycloalkyl-sulfamoyl, N-monoalkyl-sulfamoyl, N,N-dicycloalkyl-sulfamoyl, N,N-dialkyl-sulfamoyl, N-monoaryl-sulfamoyl, N,N-diaryl-sulfamoyl, N-monocycloalkyl-N-monoarylsulfamoyl, N-monoalkyl-N-monoarylsulfamoyl and SO₃M,
or
alkyl interrupted by one or more heteroatoms selected from the Isit consisting of oxygen and sulfur and substituted by one or more substituents selected from the group consisting of hydroxy, aryl, cycloalkyl, alkoxy, thioalkoxy, amino, N-monoalkyl-amino, N,N-dialkyl-amino, N-monoaryl-amino, N,N-diaryl-amino, N-alkyl-N-aryl-amino, N-monocycloalkyl-amino, N,N-dicycloalkyl-amino, N-monoalkyl-monocycloalkyl-amino, N,N-monoaryl-monocycloalkyl-amino, N-acylamino, N-alkylsulfonyl-amino, ureido, alkylureido, phenylureido, halogen, cyano, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy, aryloyloxy, carbamoyl, N-monocycloalkyl-carbamoyl, N-monoalkyl-carbamoyl, N,N-dicycloalkyl-carbamoyl, N,N-dialkyl-carbamoyl, N-monoaryl-carbamoyl, N,N-diaryl-carbamoyl, N-monocycloalkyl-N-monoarylcarbamoyl, N-monoalkyl-N-monoaryl-carbamoyl, sulfamoyl, N-monocycloalkyl-sulfamoyl, N-monoalkyl-sulfamoyl, N,N-dicycloalkyl-sulfamoyl, N,N-dialkyl-sulfamoyl, N-monoaryl-sulfamoyl, N,N-diaryl-sulfamoyl, N-monocycloalkyl-N-monoarylsulfamoyl, N-monoalkyl-N-monoarylsulfamoyl and SO₃M
or
aryl substituted by one or more substituents selected from the group consisting of hydroxy, aryl, cycloalkyl, alkoxy, thioalkoxy, amino, N-monoalkyl-amino, N,N-dialkyl-amino, N-monoaryl-amino, N,N-diaryl-amino, N-alkyl-N-aryl-amino, N-monocycloalkyl-amino, N,N-dicycloalkyl-amino, N-monoalkyl-monocycloalkyl-amino, N,N-monoaryl-monocycloalkyl-amino, N-acylamino, N-alkylsulfonyl-amino, ureido, alkylureido, phenylureido, halogen, cyano, COOM,
nitro, acyl, thioacyl, alkylsulfonyl, aryloyl, trifluoromethyl, heteroaryl, heterocycloalkyl, alkoxycarbonyl, alkoxythiocarbonyl, acyloxy, aryloyloxy, carbamoyl, N-monocycloalkyl-carbamoyl, N-monoalkyl-carbamoyl, N,N-dicycloalkyl-carbamoyl, N,N-dialkyl-carbamoyl, N-monoaryl-carbamoyl, N,N-diaryl-carbamoyl, N-monocycloalkyl-N-monoarylcarbamoyl, N-monoalkyl-N-monoaryl-carbamoyl, sulfamoyl, N-monocycloalkyl-sulfamoyl, N-monoalkyl-sulfamoyl, N,N-dicycloalkyl-sulfamoyl, N,N-dialkyl-sulfamoyl, N-monoaryl-sulfamoyl, N,N-diaryl-sulfamoyl, N-monocycloalkyl-N-monoarylsulfamoyl, N-monoalkyl-N-monoarylsulfamoyl and SO₃M
and
M is hydrogen, an alkali metal, ammonium, one equivalent of an alkali earth metal or a monovalent organic cation.

5. Dyes according to claims 1 or 4 having formula (1 b), wherein
R^{1b}, R^{3b}, R^{4b}, R^{5b}, R^{6b} and R^{8b} independent of each other is SO₃M, hydrogen, alkyl, alkoxy or halogen, whereby at least two of them are SO₃M,
R^{2b} and R^{7b} is hydrogen,
R^{9b}, R^{10b}, R^{16b} and R^{17b} independent of one each other is hydrogen, methyl, halogen, -SO₃M or acetylamino,
R^{13a} and R^{20a} is hydroxyl,
R^{14b} and R^{21b} independent of each other is alkyl, cycloalkyl, trifluoromethyl, cyano, carbamoyl, alkoxycarbonyl, COOM, alkylcarbonyl
or
is alkyl substituted by one or more substituents selected from the group consisting of hydroxy, alkoxy, halogen, cyano, COOM, alkoxycarbonyl, acyloxy and carbamoyl,
R^{15b} and R^{22b} independent of each other is methyl, ethyl, n-propyl, n-butyl, n-pentyl, n-hexyl, cyclobutyl, cyclopentyl, cyclohexyl, 2-methylcyclohexyl, 3-methylcyclohexyl, isopropyl, sec-butyl, 2-methylbutyl, 1-ethylproyl, 1,2-dimethylpropyl, tert-butyl, 3-methylbutyl, pentan-2-yl, 2-ethylhexyl, 2,2-dimethylpropyl, phenyl, benzyl, 2-hydroxyethyl, 2-methoxyethyl, 3-methoxypropyl, 2-fluoroethyl, 2-chloroethyl, 3-chloropropyl, 2-ethylhexyl, 6-hydroxy-1-[2-(2-hydroxyethylsulfanyl)-ethyl], 2-(ethylsulfonyl)ethanol, 2-hydroxyethoxypropyl, 2-hydroxyethoxyethyl, 3-(2-phenoxy-ethoxy)-propyl, 3-isopropoxy-propyl, 3-ethoxy-propyl, 3-ethoxybutyl, phenyl, 3-methylphenyl, 2-methylphenyl, 3-methylphenyl, 4-methylphenyl, 2-methoxyphenyl, 3-methoxyphenyl, 4-methoxyphenyl, 2-chlorophenyl, 3-chlorophenyl, 4-chlorophenyl, 2-fluorophenyl, 3-fluorophenyl, 4-fluorophenyl, 3-phenylsulfonamide, 3-sulfophenyl or 4-sulfophenyl
and
M is hydrogen, an alkali metal, ammonium, one equivalent of an alkali earth metal or a monovalent organic cation.

6. Process for the production of dyes according to formula (1) claim 1 comprising
a) diazotization of a compound of the formula (2) 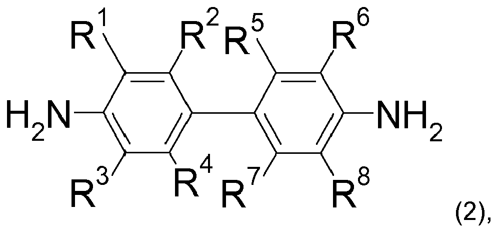 wherein R¹ to R⁸ are defined as given above,
b) reacting the corresponding diazonium salt obtained in step a) with compounds of formula (3) and (4) in stoichiometric amounts 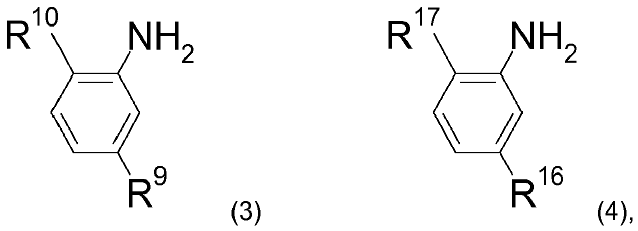 wherein R⁹ to R¹², R¹⁶ and R¹⁷ are defined as given above, to give an intermediate of formula (5) 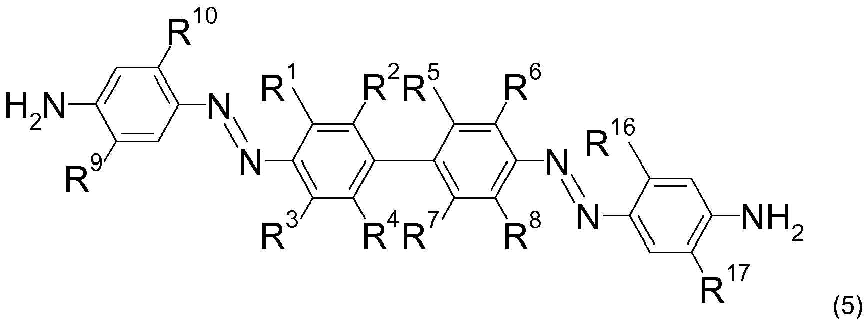
c) diazotization of the compound of the formula (5) and
d) reacting the corresponding diazonium salts obtained in step c) with the compounds of formula (6) and (7) or mixtures thereof in stoichiometric amounts 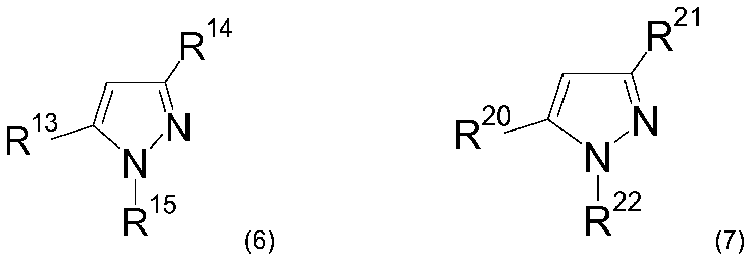 wherein R¹³ to R¹⁵ and R²⁰ to R²² are defined as given above.

7. Process for dyeing and printing of natural, manufactured regenerated, modified or synthetic hydroxyl- amino-, and/or carboxamido-containing fiber materials and their blends with dyes according to any of claims 1 to 5.

8. Aqueous inks for digital printing, comprising a dye according to any of claims 1 to 5.
